# EUROPEAN PATENT SPECIFICATION

(11) **EP 0 431 635 B1**
(45) Date of publication and mention of the grant of the patent: **19.06.1996**
(21) Application number: 90123553.1
(22) Date of filing: 07.12.1990
(51) Int. Cl.: H04L 12/42

(54) **Ring type LAN having fault processing system**
Ringförmiges LAN mit Fehlerverarbeitungssystem
Réseau local en forme d'anneau avec système de traitement des fautes

(30) Priority: 07.12.1989 JP 316395/89; 08.01.1990 JP 713/90
(43) Date of publication of application: 12.06.1991
(73) Proprietor: FUJITSU LIMITED, Kawasaki-shi, Kanagawa 211 (JP)
(72) Inventor: Ohba, Toshimitsu, Kawasaki-shi, Kanagawa 211 (JP)
(74) Representative: Lehn, Werner, Dipl.-Ing.

(56) References cited:
- EP-A- 0 244 775
- US-A- 4 390 984
- COMPUTER NETWORKS AND ISDN SYSTEMS vol. 11, no. 2, February 1986, AMSTERDAM (NL), pages 121 - 131 M.J. JOHNSON 'Reliability mechanisms of the FDDI High Bandwidth Token Ring protocol'
- IEEE GLOBAL TELECOMMUNICATIONS CONFERENCE & EXIBITION, vol. 1, November 1989, New York,(US), pages 319-326; V. Catania et al.: "PERFORMANCE-RELIABILITY IMPROVEMENT IN A DISTRIBUTED SYSTEM.

## Description

### BACKGROUND OF THE INVENTION

### 1. Field of the Invention

The present invention relates to a fault processing system provided in a ring type local area network (LAN).

In recent years, data processing systems have been changing in terms of the form of the data processing from centralized processing by a host computer to distributed processing by work stations. Due to this, there has been a spread in LANs suited for such distributed processing.

As such LANs, there are known carrier sense multiple access/collision detection (CSMA/CD), token bus, token ring, fiber distributed data interface (FDDI), and other systems. Among these, the FDDI system, which has a transmission speed of 125 Mbps for high speed data transfer, is effective.

The FDDI system is a ring type LAN and performs the transfer of sending rights among stations by rotation of a control frame known as a "token" on a ring.

When a fault occurs in the transmission function or reception function of a station, the fault of that station ends up having an effect on the entire ring, causing all the stations to become unable to operate normally. Therefore, it is necessary to remove the faulty station from the ring type LAN. Note that the FDDI system is being standardized by the American National Standard Institute (ANSI).

The present invention provides a system, suitable for application to an FDDI system token ring type LAN, for detecting a faulty station and automatically removing it from the ring type transmission line and also automatically reconstructing the ring type LAN by the remaining normal stations.

### 2. Description of the Related Art

A conventional fault processing system for automatically reconstructing a ring type LAN is disclosed, for example, in Japan Unexamined Patent Publication (Kokai) No. 63-013450 ("Loop Connection Apparatus"). This conventional fault processing system detects any physical disconnection in a double loop ring type transmission line and automatically forms a loopback at the two ends.

The above-mentioned system detects a fault in the so-called physical layer (hereinafter referred to as PHY). It is possible, however, for the physical layer (PHY) to be normal, but for a fault to occur in the logical layer. In this case, the conventional system could not, of course, eliminate the fault and could not even detect it. Further, there is the problem that the detection and removal of a logical fault is much more difficult than the detection and removal of a fault in a physical layer. This problem will be explained in further detail later with reference to the figures.

"Computer Networks and ISDN systems" Vol. 11, No. 2, February 1986, p. 121 to 131 shows a system for physical reconfiguration of a token ring local area network in the case of a physical fault. Beacon frames are transmitted on detection of a fault. Loop-back is carried out in the case of failure in a link. If a physical fault in a station occurs, the station is by-passed. Ring recovery software corrects protocol-related errors.

### SUMMARY OF THE INVENTION

Therefore, the present invention, in view of the above-mentioned problems, has as its object the provision of a ring type LAN which has a data processing system which has a fault repair function wherein, when a logical fault occurs in any station, that faulty station is detected from all of the stations, only that faulty station is extracted and removed therefrom, and the ring type LAN is reconstructed.

To achieve the above object, the present invention provides a fault processing system in a ring type LAN, as set out in claim 1.

A similar operatidn is then performed successively at the station further downstream.

The station or stations removed from the ring type LAN enter into a test mode wherein they inspect whether everything is normal in themselves. If normal, the loopbacks are successively released. However, special flags are prepared at the stations and until the flag at the station adjoining at the downstream side the station at which it is deduced the fault has occurred, is set, the loopback at the upstream side of the adjoining station is not released.

When this successively performed operation reaches the faulty station, the faulty station is prevented from being reentered once again into the ring type LAN by another special flag provided at each station. As a result of this, the ring type LAN is reconstructed by the normal stations with the faulty station removed.

### BRIEF DESCRIPTION OF THE DRAWINGS

The above object and features of the present invention will be more apparent from the following description of the preferred embodiments with reference to the accompanying drawings, wherein:
Fig. 1 is a view showing the known structure of a ring type LAN;
Figs. 2A, 2B, 2C, 2D, and 2E are general flow charts showing the operation of a data processing system based on a first embodiment of the present invention;
Fig. 3 is a view showing a first state of a third station;
Fig. 4 is a view showing a second state of the third station and a first state of a second station;
Fig. 5 is a view showing a third state of the third station and a first state of a fourth station;
Fig. 6 is a view showing a second state of the fourth station and a first state of a first station;
Fig. 7 is a view showing a second state of the first station and a second state of the second station;
Fig. 8 is a view showing a fourth state of the third station and a third state of the fourth station;
Fig. 9 is a view showing the state with the second station removed from the ring;
Figs. 10A, 10B, 10C, and 10D are flow charts showing the specific operation of a fault processing system based on a first embodiment of the present invention;
Fig. 11 is a view showing an example of an a MAC layer;
Fig. 12 is a view showing another known structure of a ring type LAN;
Figs. 13A and 13B are general flow charts showing the fault detection operation of a data processing system based on a second embodiment of the present invention;
Figs. 13C and 13D are general flow charts showing the fault repair operation of the data processing system based on the second embodiment of the present invention;
Fig. 14 is a view showing the first state of the second station;
Fig. 15 is a view showing the second state of the second station;
Fig. 16 is a view showing the third state of the second station and the first state of a wire concentrator;
Fig. 17 is a view showing the second state of the wire concentrator and the first state of the third station;
Fig. 18 is a view showing the third state of the wire concentrator;
Fig. 19 is a view showing the fourth state of the wire concentrator;
Fig. 20 is a view showing the fifth state of the wire concentrator;
Fig. 21 is a view showing the fifth state of the wire concentrator and the fourth state of the second station;
Fig. 22 is a view showing the sixth state of the wire concentrator and the second state of the third station;
Fig. 23 is a view showing a specific example of a wire concentrator and the stations attached to the same;
Fig. 24 is a view showing the first state of the wire concentrator;
Fig. 25 is a view showing the second state of the wire concentrator;
Fig. 26 is a view showing the third state of the wire concentrator;
Fig. 27 is a view showing the fourth state of the wire concentrator;
Fig. 28 is a view showing the fifth state of the wire concentrator;
Fig. 29 is a view showing the sixth state of the wire concentrator;
Fig. 30 is a view showing the seventh state of the wire concentrator;
Fig. 31 is a view showing the eighth state of the wire concentrator;
Fig. 32 is a view showing the ninth state of the wire concentrator;
Fig. 33 is a view showing the final state of the first station and third station;
Fig. 34 is a view showing the first state of the wire concentrator;
Fig. 35 is a view showing the second state of the wire concentrator;
Fig. 36 is a view showing the third state of the wire concentrator;
Fig. 37 is a view showing the fourth state of the wire concentrator;
Fig. 38 is a view showing the fifth state of the wire concentrator;
Fig. 39 is a view showing the sixth state of the wire concentrator;
Fig. 40 is a view showing the seventh state of the wire concentrator;
Fig. 41 is a view showing the eighth state of the wire concentrator; and
Fig. 42 is a view showing the ninth state of the wire concentrator.

### DESCRIPTION OF THE PREFERRED EMBODIMENTS

Before describing the embodiments of the present invention, the related art and the disadvantages therein will be described with reference to the related figures.

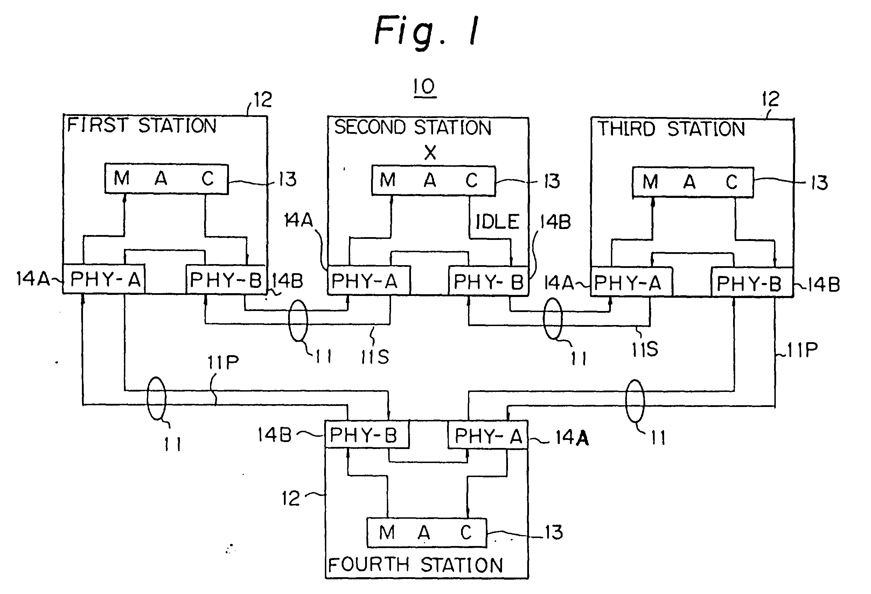

Figure 1 is a view showing the known structure of a ring type LAN, in particular the case of a ring type LAN of the FDDI system. This ring type LAN 10 includes a double loop ring type transmission line 11 and a plurality of stations 12 inserted in the ring type transmission line. In the figure, four stations, the first station to fourth station, are illustrated as the stations 12. It should be noted that the arrangement of the stations 12 is not fixed but varies dynamically along an elapse of time.

The stations 12 are all of the same construction. In particular, as the portion related to the present invention, a media access controller (MAC) layer 13 and an upstream side physical layer (PHY-A) 14A and downstream side physical layer (PHY-B) 14B are shown. The upstream side and the downstream side refer to the upstream side and downstream side with respect to the direction of flow of the frames (data frames and control frames) transmitted on the transmission line (primary transmission line) 11P formed at the outside in the figure of the ring type transmission line 11. Note that in the figure of the ring type transmission line 11, the transmission line formed at the inside (secondary transmission line) 11S is in general normally not used and is usually used for forming a loopback when a fault occurs. Therefore, the frames usually pass through the route of the upstream side MAC layer 13 → the physical layer 14B of the station → the transmission line 11P → the physical layer 14A of the upstream side → the MAC layer 13 of a station 12 of the physical layer 14A → the physical layer 14B of the station → the transmission line 11P.

If the illustrated ring type LAN were set up in an intelligent building, the stations 12 would be nodes established corresponding to the different floors. The stations 12 would be connected to a plurality of terminals or computers (not shown) installed on the individual floors. The transfer of the data with the terminals or computer would be performed through the MAC layer 13.

Assume now that data of the fourth station is transmitted to the third station. The fourth station waits until the arrival of a token flowing on the transmission line 11 (11P). When the token is caught by the fourth station, the fourth station passes the data to be transmitted to the transmission line 11P directly after the token is erased. In this case, the token has a predetermined, specific bit pattern. The operation of erasing the token is performed by overwriting the token with an idle symbol. The idle symbol normally, expressed in code, is all "1" ("111...1").

After the fourth station finishes sending to the third station the data to be sent through the MAC layers of the first and second stations, it adds a token just after the end of the transmission. Therefore, the next station requesting data transmission becomes able to catch the token without waste of time. This is one feature of an FDDI system and is effective for high speed transmission.

Now, however, assume that a fault (X) occurs at the second station in the plurality of stations 12 illustrated. Further, assume the fault is not a fault at the physical layers (PHY-A, PHY-B), but is a fault of the logical layer of the MAC layer 13. Further, assume that this theoretical fault is the worst fault where the MAC layer 13 continuously sends the idle symbol "111...1".

When such a fault occurs, there is no error in the idle symbol itself, so at the physical layer level, it is impossible to detect the theoretical fault. Further, finally, the ring type transmission line 11 becomes completely filled with this idle symbol and even the token naturally ends up lost.

Here, according to the MAC layer protocol of the FDDI system, any station detecting the loss of the token will start the claim token processing. Claim token processing is processing for reissuing the token and has the station 12 detecting the loss of the token (not limited to one) prepare a claim token on its own and send it on the transmission line 11. At part of the claim frame, there is a data region indicating the station identification number. It is agreed that the station catching the claim frame can replace it with its own station identification number only when a station identification number smaller than its own station identification number is written in the data region. In the end, finally, the station 12 with the largest station identification number reissues the token. Normally, the ring type LAN 10 is reinitialized here.

Now, however, the second node is the faulty station and further the idle symbol is continuously passed, so even the claim frame ends up lost.

Further, according to the MAC layer protocol of the FDDI system, if the claim frame is not caught no matter how much time passes, any station 12 detecting this starts to send a fault notifying frame (also known as a beacon frame).

Now, however, the second station is the faulty station and, further, the idle symbol is continuously passed, so even the beacon frame is lost. As a result, the ring type LAN 10 not only does not remove the faulty station, but cannot even detect it, resulting in the system going down. This is the problem mentioned earlier.

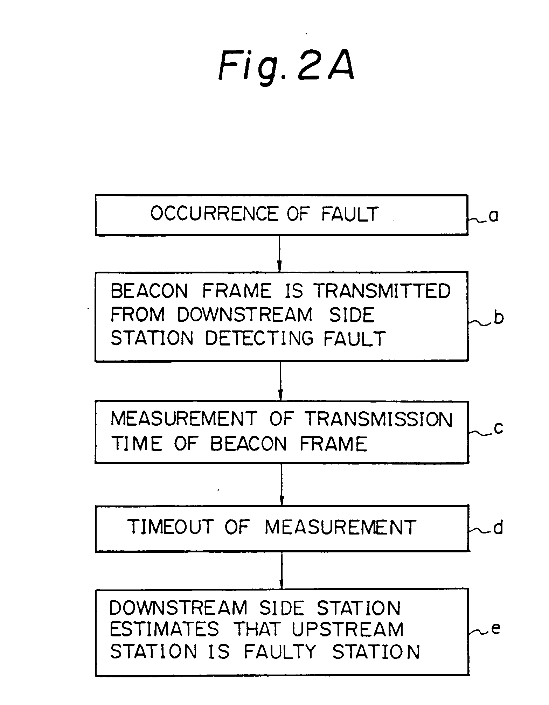

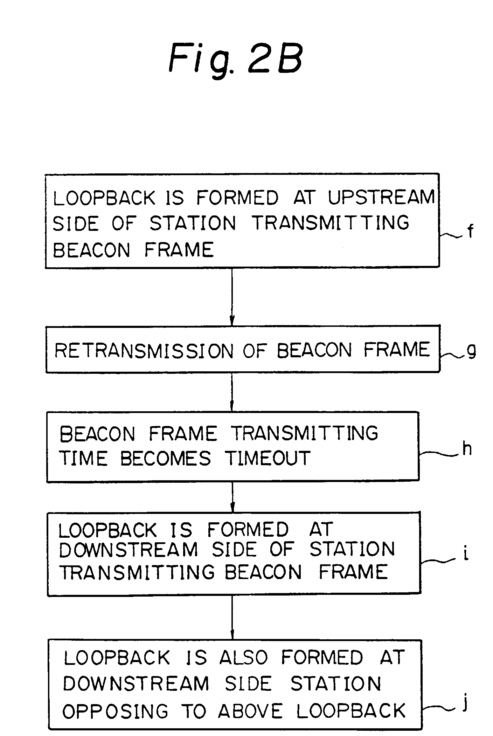

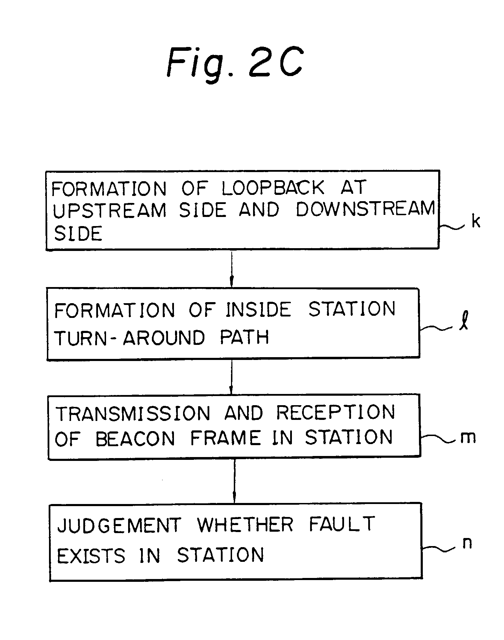

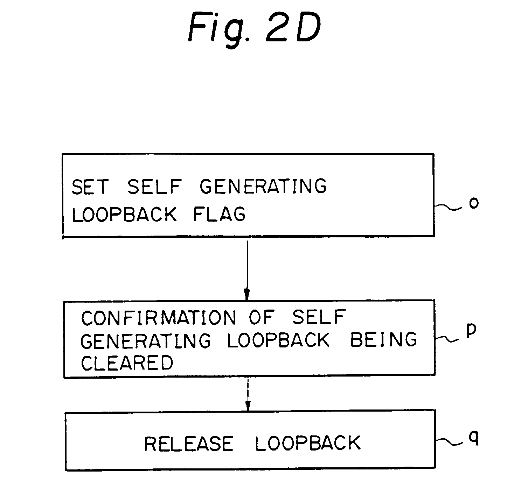

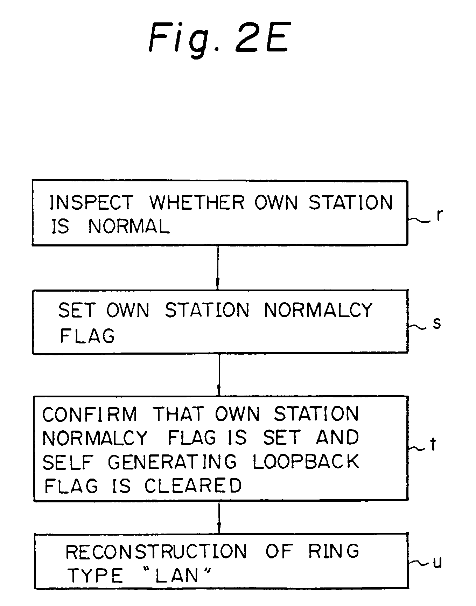

Figures 2A, 2B, 2C, 2D, and 2E are general flow charts showing the fault processing system based on a first embodiment of the present invention.

In Fig. 2A, when a fault is detected by one of the stations 12 (step a), the downstream side station which detected the abnormality relating to the fault begins beacon processing and sends a fault notifying frame, for example, a beacon frame (step b). The time of transmission of the beacon frame is measured by a time measuring means (step c). During this measurement, when the transmission time exceeds a certain predetermined time and the time runs out (step d), the downstream side station estimates that the adjoining station at the upstream side is the faulty station (step e).

In Fig. 2B, the upstream side of the station sending the beacon frame forms a loopback (step f), and the station again sends the beacon frame (step g). However, this beacon frame disappears due to the currently occurring fault during rotation of the ring, and the transmission time of the beacon runs out (step h). Then, the station sending the beacon frame forms a loopback at its downstream side too (step i).

In Fig. 2C, a station with loopbacks formed at both the upstream side and downstream side (step k) has an inside station turnaround path formed inside it (step l). Further, the station sends and receives the beacon frame through this inside station turnaround path (step m) to investigate if the token has been restored and judge if there is a fault in the station (step n).

At step f of Fig. 2B, the station which detects a fault and sends a beacon frame on its own forms a loopback at the upstream side. At step o of Fig. 2D, a self generating loopback flag is set by the formation of the loopback. This is performed by the first status indicating means. At the stations, when a loopback is formed in the stations, it is checked if the self generating loopback flag is cleared (step p), then this is released (step q).

In Fig. 2E, after the upstream side and downstream side loopbacks are formed at step k of Fig. 2C, the station inspects itself to see if it is normal (step r). This is performed by the test status (Fig. 2C). If the station judges that it is normal, it sets the own station normalcy flag (step s). This flag sets the second status indicating means. Further, it checks that the own station normalcy flag is set (own station is normal) and the self generating loopback flag is cleared (inside station loopback is formed passively due to reasons by the upstream side) (step t) and releases the upstream side loopback. This is successively performed from the station just under the faulty station and, finally, just the faulty station is removed and the ring type LAN is reconstructed (step u).

In the initial stage of the occurrence of a fault, which station has actually suffered from the fault cannot be specified, but finally, the faulty station performs a self check on its own and specify same. Therefore, at the steps in Fig. 2A, for the time being the station adjoining at the upstream side the station which first detected the fault is provisionally specified as the fault generating station and this is removed to trace the true source of the fault. This is the first stage of the fault detection.

The steps in Fig. 2B are the second stage of the fault detection. First, preparations are made for the stations to check that the fault has not occurred in themselves.

The steps in Fig. 2C are the third stage of fault detection. In them, the stations perform tests on the existence of faults in themselves.

The steps of Fig. 2D are the first stage of fault repair. The loopbacks formed for the previous fault detection are released when the stations are found to be normal.

The steps of Fig. 2E are the second stage of fault repair. Only the faulty station is removed and the ring type LAN is reconstructed among the remaining normal stations.

Below, an explanation will be made of the first embodiment of the present invention.

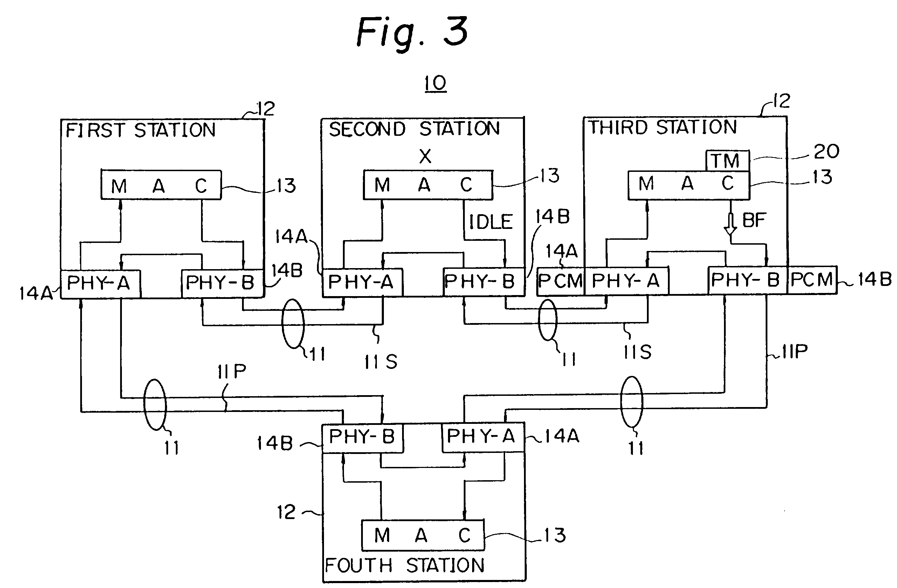

### Step 1 (Fig. 3)

In Fig. 1, a fault occurred in the second station and, for example, an idle signal (1111...) was continuously transmitted. Usually, the stations 12 have various timers in the MAC layers 13, for example, timers called a valid transmission timer (TVX) and token rotation timer (TRT). The TVX timer is an effective transmission supervisory timer for restoration from a temporary ring error state. When a normal frame or token is received, this is reset. If the TVX timer runs out, claim token processing is performed for reissuing the token. Further, the TRT timer is a token rotation timer for detection and restoration of a serious ring abnormality. When a token is received, when there is a reset demand from a MAC layer, when a higher claim is received than one's own station, when a beacon frame of another station is received, and when there is a request for claim token processing, the timer is reset. If the TRT timer runs out of time twice continuously, claim token processing is performed to reissue the token. If the TRT timer runs out of time during the claim token processing, beacon processing is performed.

Here, since the idle symbol continues to be transmitted, of the above timers, the timer in the third station adjoining the second station at the downstream side first runs out of time and enters the previously mentioned claim token processing. Even in the claim token processing by the third station, the idle symbol continues to be transmitted and the timer TRT runs out of time. Here, the third station learns that the claim token processing has failed and then enters the beacon processing. Note that the above series of processing is processing as prescribed by regulations. The operation of the fault processing system of the present invention starts from this beacon processing as the first step.

Figure 3 is a view showing a first state of a third station and shows the state where the above beacon frame BF is transmitted from the third station.

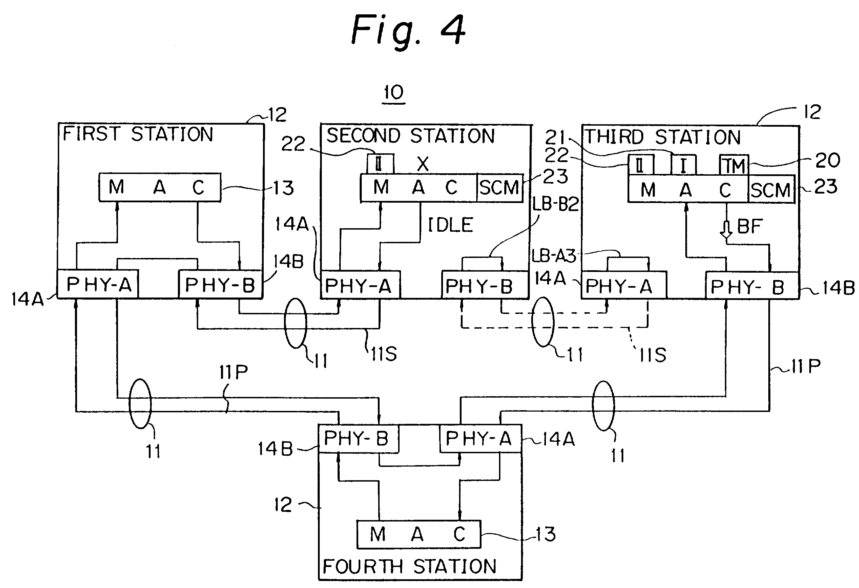

### Step 2 (Fig. 4)

In the present invention, a time measuring means (TM: timer) is newly introduced. All of the stations 12 are equipped with one. The only time measuring means shown in Fig. 3 is that for the third station, for simplification, and is given reference numeral 20. Note that to simplify the illustration, the time measuring means is drawn in a view corresponding to the active state of the time measuring means. The same applies to the later mentioned constituent elements.

Here, defining the time measuring means (TM) 20, the time measuring means is provided for all of the stations 12. Each starts measuring time simultaneously with the start of transmission of the beacon frame BF. Therefore, the time measuring means 20 measures the transmission time of the beacon frame BF.

Since, however, a fault occurs at the adjoining second station at the upstream side and an idle symbol is transmitted from this, the third station cannot receive the beacon frame BF which has issued by itself. Finally, the time measuring means 20 runs out of time. Then, the third station estimates that the fault has occurred at the adjoining upstream side second station. This type of estimation is one of the key points of the present invention.

The third station then, along with estimating that the fault lies with the upstream side station (second station), refers first to the station configuration management (SCM) unit 23. The SCM unit 23 is provided for each station and already exists. It has a program for controlling the configuration inside the stations. Referring to the SCM unit 23, the third station detects that the current state (state just before entering step 2, that is, the state of Fig. 3) has become the THRU-A state. The THRU-A state is the state in which the first station or fourth station is placed, for example. That is, it means the state where the primary transmission line 11P connects to the physical layer 14A, MAC layer 13, and physical layer 14B, while the secondary transmission line 11S connects to the physical layer 14A and the physical layer 14B.

Therefore, the third station, on the condition that it itself has entered the THRU-A state, forms the loopback LB-A3 autonomously at the upstream side physical layer 14A. The self generating formation of this loopback is another key point of the present invention.

The third station records the fact that the self generating loopback LB-A3 has been formed. This is performed by the setting of a self generating loopback flag at the first status indicating means (I) 21 introduced by the present invention. Therefore, the self generating loopback flag now becomes the logic "1". Note that means the same as the first status indicating means are provided at all the other stations 12 as well. Here, the self generating loopback flag in the first status indicating means 21 is defined as follows. The flag is a flag which is set (made "1") when a station estimates that a fault has occurred at the upstream side station. It is set when a station is in the THRU-A state and the measuring means in the station runs out of time and the above self generating loopback is formed. So long as the flag is set, the loopback (LB-A3) at the upstream side physical layer 14A will not be released. However, this flag is cleared (made "0") when various conditions are met, for example, when the physical connection management (PCM) unit given to the physical layer is in a reject state or when a loopback release demand frame is received.

The third station cuts the physical connection with the upstream side second station along with the formation of the self generating loopback LB-A3 and shifts to the WRAP-B state. This is also a key point of the present invention. The cutting of the physical connection does not mean the physical disconnection of the transmission line 11, but usually means the blocking of optical signals flowing between physical layers of adjoining stations. Further, the shift to the WRAP-B state means the connection of the MAC layer 13 to only the physical layer (PHY-B) 14B as shown in the third station of Fig. 4.

The third station, as explained above, shifts from the THRU-A state to the WRAP-B state, so the third station again enters beacon processing. Note that the step of having the beacon processing performed each time a transition in state occurs is something which is been required in the regulations.

Since the third station enters the beacon processing, the beacon frame BF is continued to be transmitted in the same way as in Fig. 3. At this time, the time measuring means 20 of the present invention is started so as to measure the transmission time of the beacon frame BF.

On the other hand, looking at the second station, the physical layer 14B in the second station detects that the physical connection of the third station side transmission line 11 has been cut (optical signal has been blocked). According to the regulations, when the cutting of the physical connection has been detected, the physical layer (physical layer (PHY-B) 14B of second station) is automatically given a loopback. That is, the passive loopback LB-B2 is formed. The term "passive loopback" corresponds to the previously mentioned self generating loopback made in the third station.

As mentioned above, the cutting of the physical connection with the adjoining station (second station), from the viewpoint of the third station, enables estimation that one's own station may be abnormal. Therefore, the own station normalcy flag is cleared (made "0") at the second status indicating means (II) 22 introduced in the present invention. The second status indicating means 22 is also provided for all of the stations 12.

The own station normalcy flag will be defined here. The own station normalcy flag is a flag which is set (made "1") when showing that one's own station is operating normally. Therefore, when the ring type LAN 10 is started up, the own station normalcy flag is cleared (made "0"), but when checking the normalcy of one's own station as a result of an inside station turnaround test or when the token is restored by the MAC layer 13, the flag is set (made "1"). On the other hand, when the cutting of the physical connection is detected or when one's own station shifts to the test state by the SCM unit 23, the flag is cleared (made "0").

At the second station of Fig. 4, when the own station normalcy flag in the second status indicating means 22 is cleared (the cutting of the physical connection from the downstream side third station is detected), the SCM unit 23 of the second station connects the own station physical layer 14A and the MAC layer 13 and forms the WRAP-A state. When a transition in state from the THRU-A state to the WRAP-A state occurs, according to the regulations, the second station tries to execute the instruction for sending the beacon frame. However, the beacon frame BF from the third station is already being continuously transmitted, and the second station receives the beacon frame BF from the third station through the fourth station and the first station. According to the regulations, since the second station receives the beacon frame BF from the other station (third station), it suspends execution of the above beacon frame sending instruction. The second station, however, continues to send the idle symbol due to the fault, and the beacon frame BF sent from the third station is overwritten by the idle symbol and disappears.

It should be understood that the third station 12 can determine that a fault has occurred on the upstream side thereof, but that the third station 12 cannot specify which is the faulty station, i.e., the second, the first or the fourth station. This is because the arrangement of the stations 12 varies, as mentioned previously. In addition, the third station can distinguish respective addresses per se of the upstream side stations but not the relative locations thereof.

Figure 4 is a view showing the second state of the third station and the first state of the second station and shows the states after the processing of step 2 mentioned above.

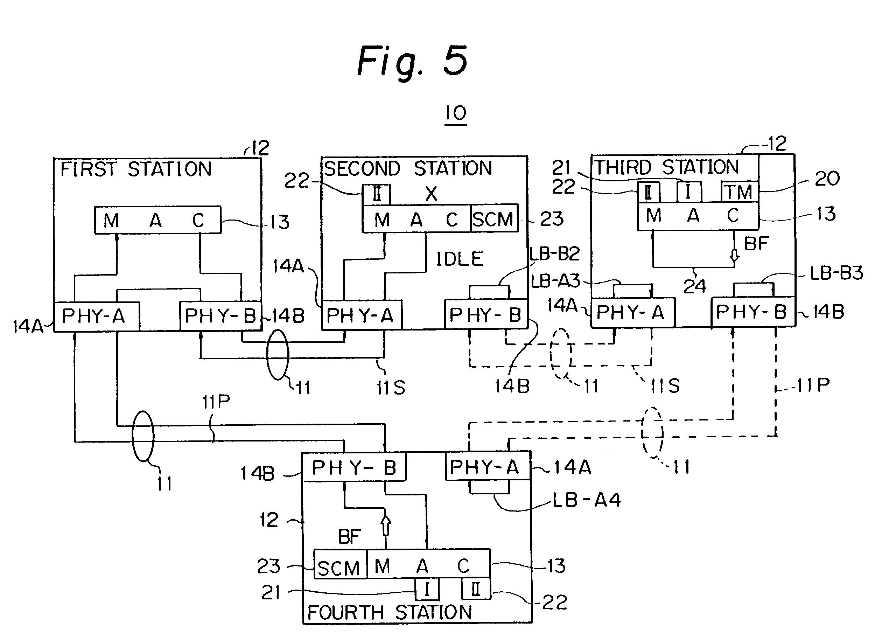

### Step 3 (Fig. 5)

The third station continues to send the beacon frame BF at the step 2 just before. This is due to the occurrence of a transition in state from THRU-A state to WRAP-B in the third station (mentioned earlier). According to the regulations, this BF is sent. The transmission time of the BF is measured by the time measuring means (TM) 20 in the third station.

As mentioned at the end of the explanation of step 2, however, the beacon frame BF from the third station disappears at the second station and does not return to the third station. Therefore, the time measuring means 20 of the third station runs out of time.

At this time, the fact that the third station is in the WRAP-B state (Fig. 4) is recognized by reference to the SCM unit 23. The third station releases the downstream side WRAP-B state and forms self generatingly the loopback LB-B3 at the physical layer 14B. Along with this, the third station cuts the physical connection of the transmission line 11 connecting to the physical layer 14B. The third station then shifts to the test state. In shifting to the test state, the own station normalcy flag is cleared (made "0") by the second status indicating means (II) 22 in the third station. Here, the third station is once cut off from the ring type transmission line 11. Note that the above series of processing is based on the present invention and does not appear in the steps based on the regulations.

On the other hand, looking at the fourth station at the downstream side of the third station, the fourth station detects that the physical connection with the fourth station has been cut and forms the loopback LB-A4 at the physical layer 14A of the upstream side in accordance with the regulations. At this time, the self generating loopback flag (first status indicating means) introduced under the present invention is left cleared (made "0"). The reason why is that the loopback LB-A4 formed by the fourth station is not formed self generatingly, but is a result of the physical connection being unilaterally cut by the third station and the loopback being passively formed.

Along with the formation of the loopback LB-A4 at the fourth station, the SCM unit 23 in the fourth station shifts to the WRAP-B state in accordance with the regulations. That is, the MAC layer 13 in the fourth station connects only with the downstream side physical layer 14B. Here, in the fourth station, there is a transition in state from the THRU-A to the WRAP-B, so the beacon processing is entered according to the regulations and the instruction for sending the beacon frame BF is executed. This beacon frame BF, however, is rewritten and erased by the idle symbol by the second station.

Figure 5 is a view showing the third state of the third station and the first state of the fourth station which shows the states after the series of processing of step 3.

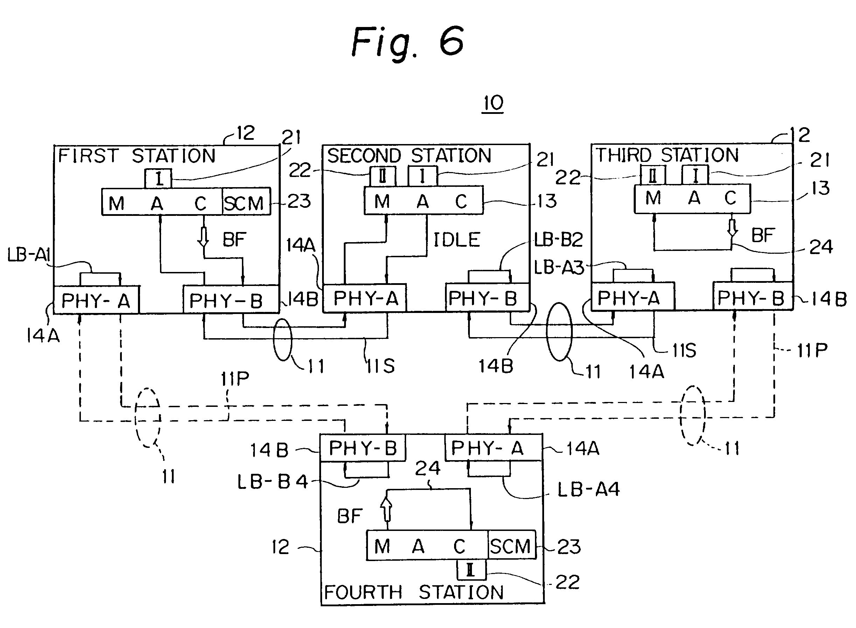

### Step 4 (Fig. 6)

First, looking at the second station and third station, the physical connection of the transmission line 11 between the two is reestablished. This is performed, in accordance with the regulations, by the instruction given from the PCM units in the two stations, mentioned earlier. Therefore, the transmission line 11 between the second station and the third station changes from the dotted line of Fig. 5 to the solid line of Fig. 6.

At this time, at the second station, the downstream side loopback LB-B2 is a passive loopback formed due to the cutting of the physical connection by the third station, so the self generating loopback flag in the first status indicating means (I) 21 remains cleared ("0") (1). Further, the own station normalcy flag at the second status indicating means (II) 22 in the second station remains cleared ("0") as mentioned at step 2 (2). Therefore, the second station estimates that a fault might exist in itself from the conditions of the above (1) and (2) and does not release the passive loopback LB-B2. This is also a key point of the present invention. Further, in the third station, the first status indicating means (I) is set ("1"), so the physical connection may be left cut (optical signal is blocked).

On the other hand, looking at the third station, the test state is entered at step 3 (Fig. 5). Under this test state, an inside station turnaround loop 24 is formed and the beacon frame BF is continuously sent. This is also a key point of the present invention. During the transmission of this beacon frame BF, if the token is restored, the third station can recognize by itself that it is normal. Then, based on the present invention, the own station normalcy flag is set ("1") in the second status indicating means (II) of the third station. Therefore, the third station shifts to the isolated state. The isolated state means that one's own station is recognized to be normal and the third station is placed in a state (standby) where it can shift at any time to the WRAP-A or WRAP-B state.

On the other hand, looking at the fourth station, as mentioned at the end of the explanation of step 3 (Fig. 5), the independently issued beacon frame BF does not return. Therefore, the time measuring means (TM) 20 in the fourth station, provided according to the present invention, runs out of time.

Then, the fourth station refers to its own SCM unit 23. As a result of this reference, the fourth station learns that it is now in the WRAP-B state (state of step 3 in Fig. 5). Therefore, a loopback is automatically formed at the physical layer 14B which is in the WRAP-B state and a passive loopback LB-B4 is formed. Along with the formation of the LB-B4, the physical connection of the transmission line 11 between the fourth station and the first station is cut. Here, the fourth station forms an inside station turnaround loop 24 away from the ring type transmission line 11 and then enters the test state to confirm if it, the fourth station, is normal or not. In this test state, for the first time the own station normalcy flag in the second status indicating means (II) 22 is cleared (made "0"). The processing after the formation of the above-mentioned passive loopback LB-B4 is also based on the present invention and is not provided for in the regulations.

On the other hand, looking at the first station, in exactly the same way as explained with reference to the fourth station in step 3 (Fig. 5), the first station at the downstream side of the fourth station detects from the fourth station that the physical connection with the first station has been cut and then forms a loopback LB-A1 at the upstream side physical layer 14A in accordance with the regulations. At this time, the self generating loopback flag (first status indicating means (I) 21) introduced in the present invention remains cleared ("0"). The reason why is that it is not self generatingly formed, but is a result of the unilateral physical disconnection by the fourth station and thus the passive loopback is formed.

Along with the formation of the loopback LB-A1 at the first station, the SCM unit 23 in the first station shifts to the WRAP-B state in accordance with the regulations. Here, in the first station, a transition in state occurs from the THRU-A (step 3 in Fig. 5) to the WRAP-B, so the beacon processing is entered in accordance with the regulations and then the instruction for sending the beacon frame is executed. The beacon frame BF, however, is overwritten and erased by the idle symbol when reaching the second station.

Figure 6 is a view showing the second state of the fourth station and the first state of the first station which shows the states after the series of processing of the above step 4 is ended.

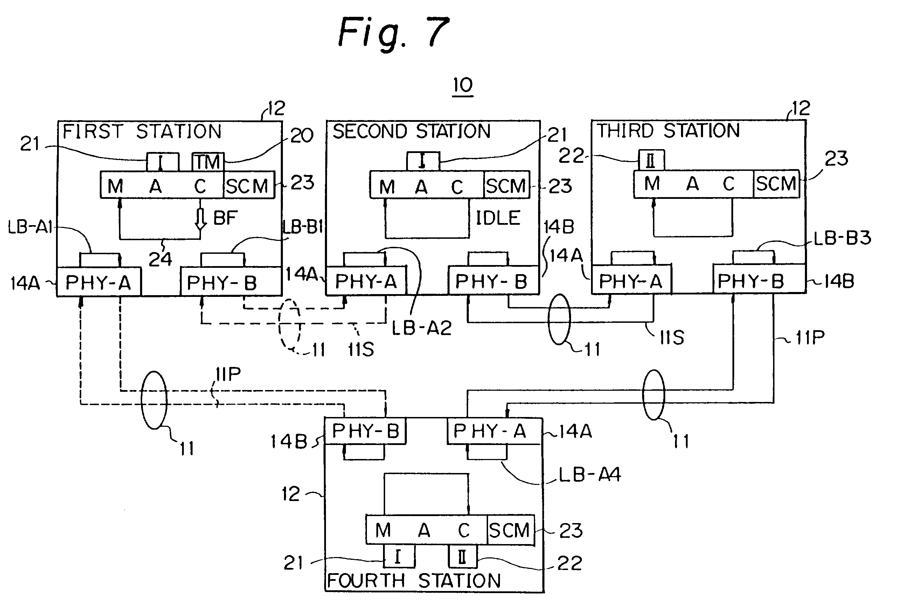

### Step 5 (Fig. 7)

The processing explained up until now and the processing explained from here are both executed under distributed processing in the ring type LAN 10. Therefore, for example, at the same time as various processing is performed in the first station, processing for another station is also performed in parallel at that other station. Therefore, first, a look will be taken at the third station and the fourth station.

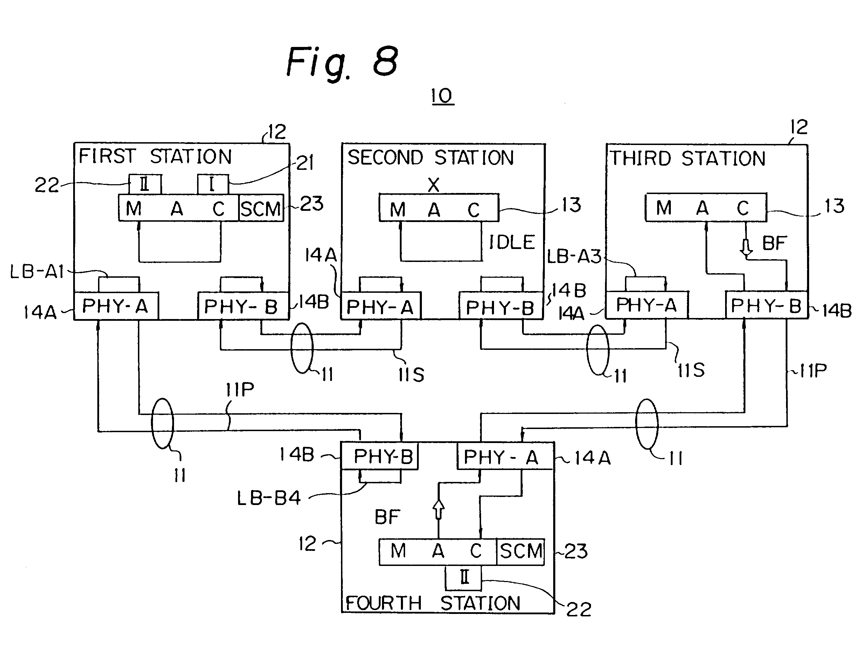

The physical connection of the transmission line 11 between the third station and the fourth station, which has been temporarily cut at step 4 (Fig. 6), is rebuilt by the PCM units of the two stations in accordance with the regulations (change from the transmission line of the dotted line of Fig. 6 to the transmission line of the solid line of Fig. 7). The PCM attached to the physical layer 14B side of the third station in accordance with the regulations notifies the SCM 23 in the third station that the physical connection has been rebuilt. At this time, since the own station normalcy flag in the second status indicating means (II) 22 of the present invention has already been set ("1") at step 4, it is possible to release the loopback LB-B3 at the physical layer 14B in the third station (see Fig. 8).

On the other hand, under the test state in step 4, in the same way as explained with reference to the third station in step 4, the inside station turnaround loop 24 is formed and the beacon frame BF is continuously sent. If the token is restored during the transmission of the beacon frame BF, the fourth station can confirm by itself that it is normal. Therefore, the own station normalcy flag is set (made "1") in the second status indicating means (II) in the fourth station. Thus, the fourth station shifts to the isolated state. Here, in accordance with the regulations, the physical connection between the third station and the fourth station is rebuilt by the PCM and that effect is notified from the PCM attached to the physical layer 14A in the fourth station to the SCM unit 23.

At this time, since the upstream side loopback LB-A4 of the fourth station is a passive loopback, the first status indicating means (I) 21 in the fourth station is cleared (made "0"). Therefore, the fourth station can release the loopback LB-A4 of the upstream side physical layer 14A (Fig. 8).

On the other hand, looking at the first station, under the beacon processing performed at step 4 (Fig. 6), the self generating beacon frame BF is erased at the second station, so the time measuring means (TM) 20 runs out of time. Detecting that time has run out, the first station looks at its own SCM unit 23. The SCM unit 23 shows that the first station is now in the WRAP-B state (Fig. 6), so the downstream side physical layer 14B forms a loopback based on the regulations and a loopback LB-B1 is formed. The first station cuts the physical connection with the second station after the formation of the loopback. Then, the inside station turnaround loop 24 is formed and the test state is entered. Here, the first station is removed from the ring type transmission line 11.

On the other hand, the second station detects that the physical connection is cut by the first station, the self generating loopback flag of the first status indicating means (I) 21 remains cleared ("0"), and, in accordance with the regulations, the upstream side is automatically looped back and the loopback LB-A2 is formed. At this time, looking at the SCM unit 23 in the second station, it is understood that up until now the second station was in the WRAP-A state (step 4 in Fig. 6), so this is looped back, and thus the second station enters the test state and removed from the ring type transmission line 11.

Figure 7 is a view showing a second state of the first station and a second state of the second station which shows the state after the series of processing of the step 5 has been completed.

### Step 6 (Fig. 8)

As explained at step 5, the third station can release the loopback LB-B3 and shifts to the WRAP-B state as shown in Fig. 8. Along with this transition in state, in accordance with the regulations, the third station enters the beacon processing and sends the beacon frame BF.

Further, as explained in step 5, the fourth station can also release the loopback LB-A4 and shifts to the WRAP-A4 state as shown in Fig. 8. Along with this transition in state, in accordance with the regulations, the fourth station enters the beacon processing and sends the beacon frame BF.

The fourth station rebuilds the physical connection with the first station, which was once cut at step 5 (Fig. 7), by the PCM in the fourth station.

On the other hand, the first station enters the test state at step 5 (Fig. 7) and uses the inside station turnaround loop 24 to continuously send the beacon frame BF. If the token is restored during the transmission of the BF, the first station can confirm by itself that it is normal. Therefore, the own station normalcy flag is set at the second status indicating means (II) 22 in the first station. Then, the first station shifts to the isolated state.

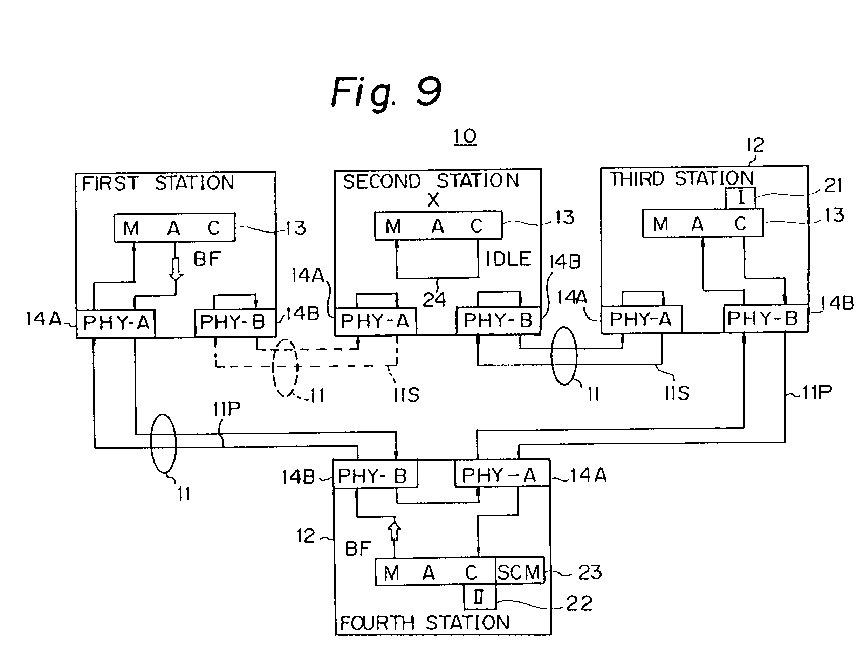

As mentioned above, the physical connection between the first station and the fourth station is rebuilt. This rebuilding is notified from the PCM attached to the physical layer (PHY-A) 14A in the first station to the SCM unit 23 in the first station. Then, the self generating loopback flag in the first status indicating means (I) 21 of the first station is looked. The loopback LB-A1 at the physical layer 14A in the first station is formed due to the cutting of the physical connection with the fourth station side and therefore is a passive loopback. Therefore, the self generating loopback flag remains cleared ("0"). The first station can thus release the passive loopback LB-A1 (Fig. 9).

Figure 8 is a view showing the fourth state of the third station and the third state of the fourth station which shows the state after the series of processing of step 6 is completed.

### Step 7 (Fig. 9)

The physical connection between the fourth station and the first station is rebuilt at step 6. This rebuilding is performed by the PCM attached to the physical layer 14B in the fourth station, so the PCM notifies the fact of the rebuilding to the SCM unit 23 in the fourth station. Then, if the fourth station confirms that the own station normalcy flag in the second status indicating means (II) 22 in itself is set and that it itself is normal, then it releases the loopback LB-B4 (Fig. 8) at the physical layer 14B. Thus, the fourth station shifts to the THRU-A state. Along with this transition in state, the fourth station enters the beacon processing state in accordance with the regulations and then sends the beacon frame BF.

On the other hand, looking at the first station, the first station releases the loopback LB-A1 (Fig. 8) at the physical layer 14A in the first station in step 6 and shifts to the WRAP-A state of Fig. 9. The first station, in accordance with the regulations, enters the beacon processing state after the transition in state then and sends the beacon frame BF.

Here, the second station is removed from both the adjoining first station and third station and enters the test state based on the present invention. Therefore, an inside station turnaround loop 24 is formed at the second station. The second station uses the loop 24 to try to transfer the beacon frame BF in itself. There is a fault in the MAC layer 14 in the second station, however, so the above-mentioned idle symbol continues to be transmitted. Therefore, the second station detects an error and confirms that it has an abnormality inside.

Recognizing the abnormality in itself, the second station rejects the physical connection with the adjoining first station and third station. This is also a key point of the present invention. The rejection itself is based on the regulations. A optical signal comprised of a specific pattern is send to the adjoining stations (first station and third station) to notify them of the reject state.

Receiving the above rejection, the PCMs in the first station and third station shift the corresponding physical layer 14B and physical layer 14A in the first station and third station to the reject state.

The third station, at step 2, clears the self generating loopback flag, which has been set ("1") in the first status indicating means (I) 21 in the station, when looking the above reject state. This is also a key point of the present invention. By clearing the self generating flag in this state for the first time, the outflow of the idle symbol from the second station to the downstream side, in the series of processing up until then, can be stopped. If the idle symbols start to flow again, the series of processing up until then returns once again to step 1 and the ring reconstruction can not be completed.

Conversely, unless the self generating loopback flag of the third station is cleared using the above rejection, if the second station were to be repaired and return to normal, it could not be incorporated into the ring type transmission line 11. This is because reconnection of the second station and third station would not be possible.

Here, the second station is removed from the ring type transmission line 11 and the ring type LAN 10 is reconstructed in a state without the second station. The transmission and reception of the data frames are restarted among the remaining first station, third station, and fourth station. When the second station returns to normal, the original ring type LAN is restored.

Note that the case may also be envisioned where before the second station rejects the physical connection with the first station, the physical connection with the first station is rebuilt. The reason is that, as mentioned before, all the stations perform distributed processing. In such a case, the first station shifts once to the THRU-A state (for example, the state of the first station in Fig. 5), but ends up placing the physical connection with the first station in a rejection state from the second station, so at that point of time the first station returns to the WRAP-A state once again.

Figure 9 is a view showing the state with the second station removed from the ring which shows the state after the series of processing of step 7 has been completed.

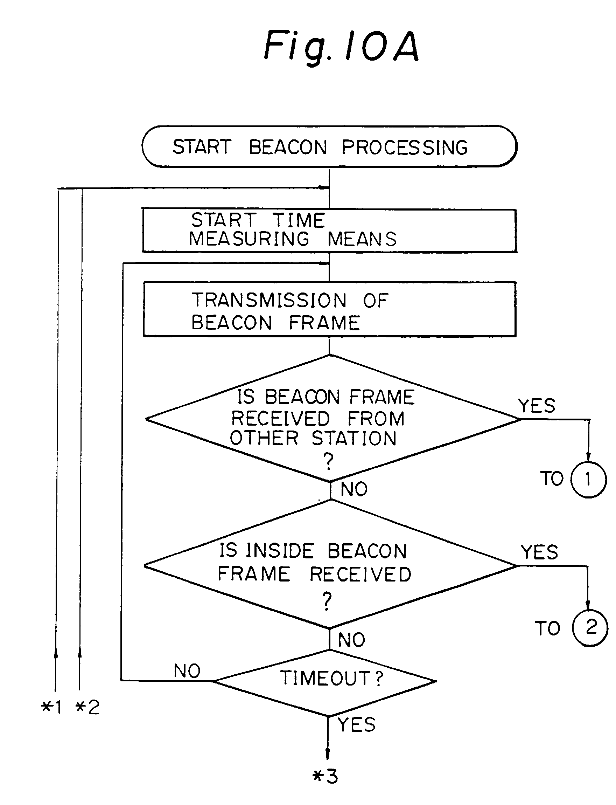

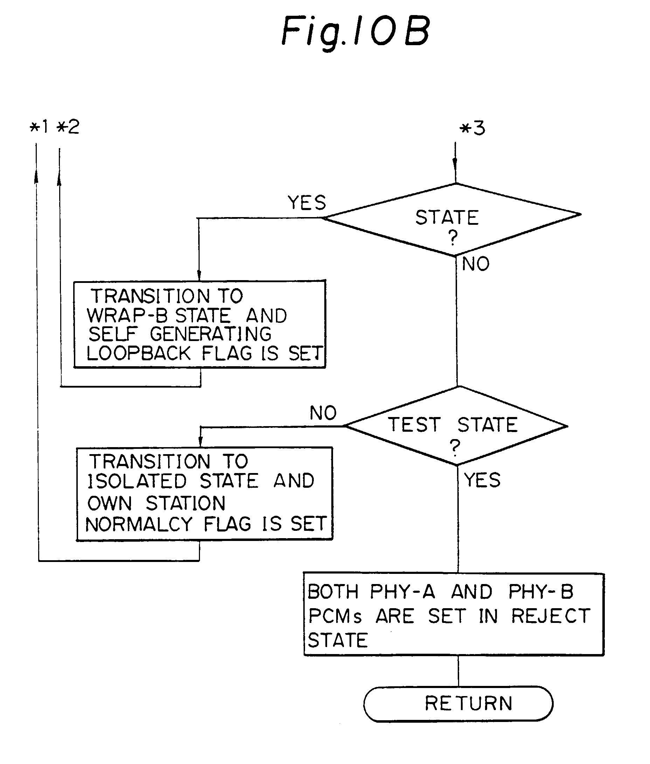

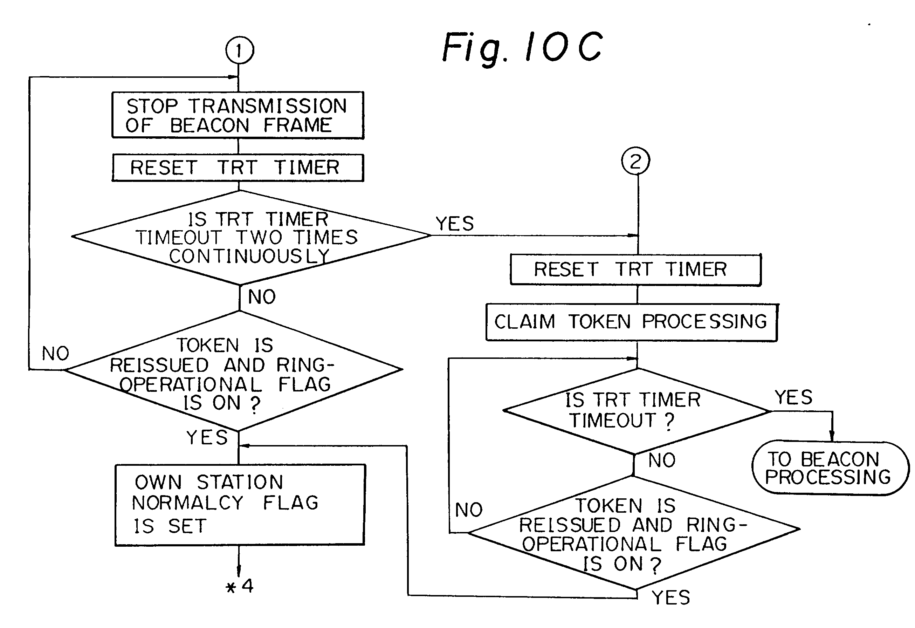

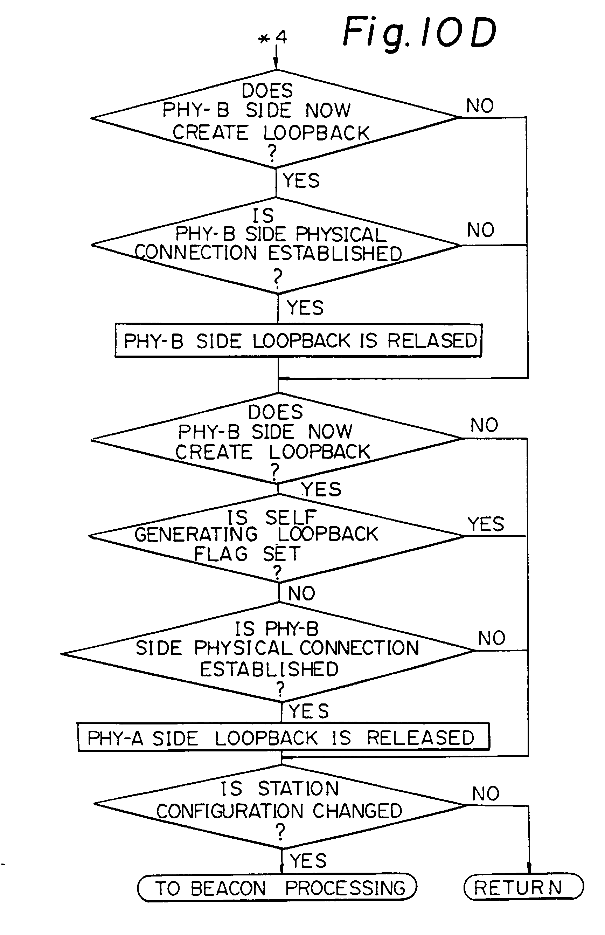

Figures 10A, 10B, 10C, and 10D are flow charts showing the specific operation of a fault processing system based on a first embodiment of the present invention. Therefore, almost all of the content of the flow charts match the contents explained up to now. In Fig. 10A, the "start time measuring means (20)" and the "start beacon frame (BF) transmission" occur almost simultaneously. The "is beacon frame received from other station?" is for checking if the beacon frame transmitted from the upstream side station is received. The NO case corresponds to the third station speaking in terms of the above embodiment. On the other hand, the YES case corresponds to the first station and the fourth station and shifts to ① in Fig. 10C. The "is inside beacon frame received" in Fig. 10A corresponds to the above test state. If one's own station is normal (YES), there is a shift to ② in Fig. 10C. If one's own station is not normal (NO), the control shifts to "timeout?" of the time measuring means. Here, unless the time runs out (NO), the beacon frame is once again sent. If the time has run out (YES), the control shifts to Fig. 10B.

If the "THRU-A state?" of Fig. 10B is YES, the upstream side of the station (for example, the third station) is removed and is shifted to the WRAP-B state. At this time, the self generating loopback flag is set in the first status indicating means (21). Then, the transmission of the beacon frame is once again returned to (Fig 10A), but when the "THRU-A state?" of Fig. 10B is once again returned to, the judgement becomes NO, i.e., the WRAP-B state. Further, at "test state?", if the test state is not entered ("NO"), the isolated state is shifted to and the own station normalcy flag is set in the second status indicating means (II) 22 and the original state is returned to.,

If the test state continues, both the physical layer (PHY-A) 14A and the physical layer (PHY-B) 14B are placed in the rejection state and the state of the second station of Fig. 9 is entered.

① in Fig. 10C is a jump from ① of Fig. 10A. The first station and the fourth station in the first embodiment receive the beacon frame BF from the upstream side, so according to the regulations the beacon frames sent by the first station and the fourth station themselves are stopped. At the same time, the TRT timer is also reset. Here, if the TRT timer does not run out of time two times consecutively (NO), the token is reissued (refer to explanation of TRT timer given before). Further, if the ring operational flag is ON, the own station normalcy flag is set. Here, the ring operational is kind of flag and is set (ON) when the token is restored.

When the "is inside beam frame received?" of Fig. 10A is YES, it is assumed that one's own station is provisionally normal and the control jumps to ② in Fig. 10C. From this ②, along with the steps illustrated, the own station normalcy flag is set other than at times when the TRT timer runs out of time. Then, the control enters the steps of Fig. 10D.

The series of steps in Fig. 10D correspond to the operation of the above-mentioned first embodiment shown in the from of flow charts and has also been explained.

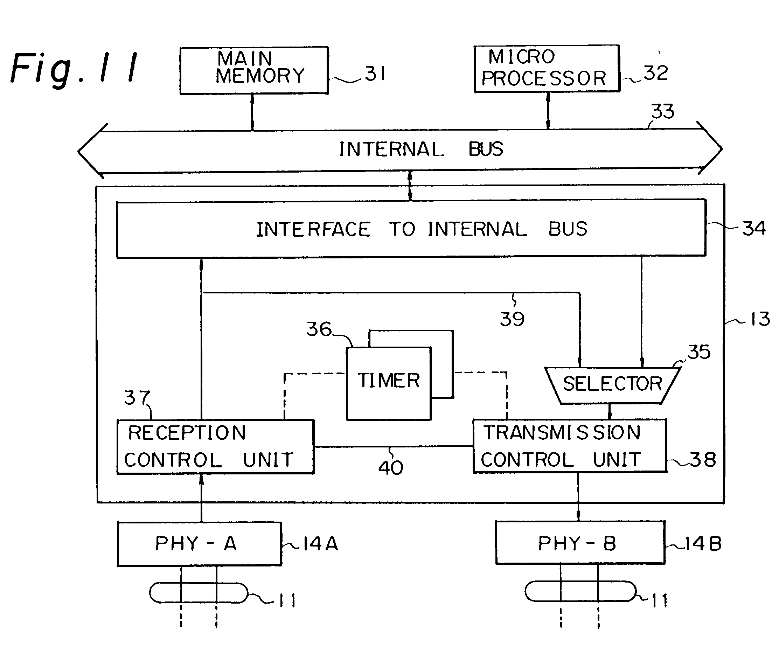

Figure 11 is a view showing a example of an MAC layer. The MAC layer 13, however, is in itself known. The MAC layer 13 has connected to, on the one hand, the above-mentioned physical layer (PHY-A) 14A and physical layer (PHY-B) 14B and, on the other hand, is connected to a main memory 31 and a microprocessor 32 via an internal bus 33.

Inside the MAC layer 13, comprised of an LSI chip, there are a selector 35, a reception control unit 37, and a transmission control unit 38 between an internal bus interface 34 connected to the above internal bus 33 and the physical layers 14A and 14B. Note that the timer 36 indicates the already mentioned TVX timer or TRT timer. The reception control unit 37 receives the data frames from the transmission line 11 and sends them to the microprocessor 32 etc. If the data frames received are addressed to other stations, they are returned to the transmission control unit 38 through the selector 35 and again sent out on the transmission line 11. The transmission control unit 38 also sends data frames given from the station microprocessor 32 of its own station etc. to the transmission line 11. The loopback is formed inside the physical layer, but the THRU-A state is formed via the line 39 in the MAC layer 13. Further, the beacon frame is prepared inside the transmission control unit 38 and sent out. The same is true for the token. Conversely, whether the token has arrived or not is detected by the reception control unit 37. This is notified to the transmission control unit 38 via the line 40.

Next, an explanation will be made of a second embodiment of the present invention. The previously mentioned first station, second station, third station, and fourth station are all dual attachment stations. A dual attachment having four connection ports with a double loop ring type transmission line 11, for example, a host computer. The units connected to the ring type LAN are not limited to such dual attachment stations, and single attachment stations may also be connected. A single attachment station is a station having two connection ports with the ring type transmission line, for example, a personal computer (PC), work station (WS), or other terminal. Usually, these single attachment stations are assembled in the ring type LAN 10 through a wire concentrator. The wire concentrator is a dual attachment station.

In the second embodiment of the present invention, the stations 12 are formed as dual attachment stations. At least one of the dual attachment stations is formed as a wire concentrator, and the wire concentrator refers to a fault processing system which cooperates with the ring type LAN 10 which has a plurality of single attachment stations inserted in series in the ring type transmission line attached to the same. The basic concept of the fault processing system, however, is completely the same as the basic concept in the first embodiment explained earlier.

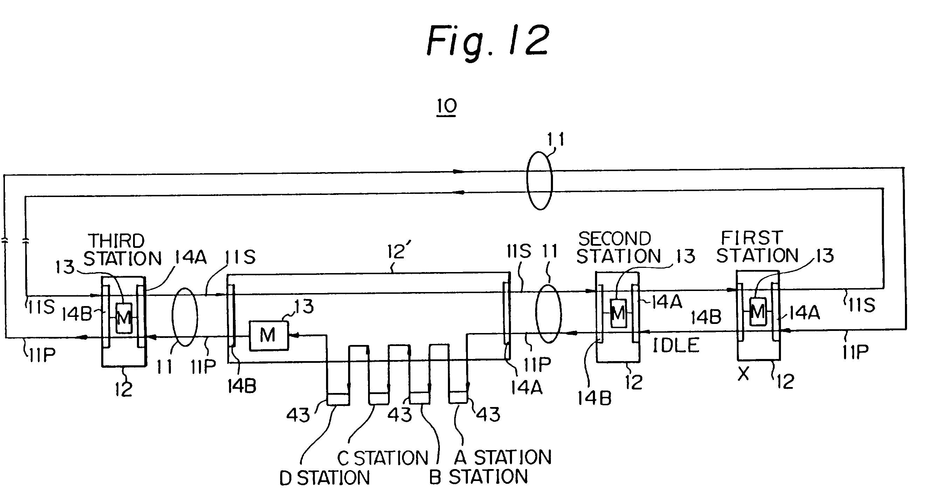

Figure 12 is a view showing another known structure of a ring type LAN. It shows the example of a ring type LAN of the FDDI system in the same way as Fig. 1. The ring type LAN 10 includes a double loop ring type transmission line 11, a plurality of dual attachment stations 12 inserted in the ring type transmission line 11, a wire concentrator 12', and a plurality of single attachment stations 43 connected under the wire concentrator 12' and also inserted in series in the ring type transmission line 11. In the figure, as the usual dual attachment stations 12, there are illustrated a first station, second station, and third station. As the single attachment stations 43, there are illustrated a station A, station B, station C, and station D. It should be noted that the arrangement of the stations 43 is not fixed but varies dynamically along an elapse of time.

The dual attachment stations 12 all have the same structure and have as centers a MAC layer 13 (given letter M). A MAC layer 13 exists in the wire concentrator 12' too. These MAC layers 13 cooperate with the upstream side physical layer 14A and the downstream side physical layer 14B to control the connection with the ring type transmission line 11. Note that these upstream side physical layers and downstream side physical layers are provided for each of the single attachment stations 43, but illustration of them all is omitted for simplification (but explained later). Note that like in Fig. 1, the frames usually pass through the route of the upstream side MAC layer 13 → the downstream side physical layer 14B of the station → the ring type transmission line 11 → the physical layer 14A of the upstream side → the MAC layer 13 of a dual attachment station 12 of the upstream side physical layer 14A → the downstream side physical layer 14B of the station → the ring type transmission line 11 → the physical layer of the single attachment station 43.

Assume now that the station A sends certain data to the second station. The station A waits until the arrival of a token flowing on the primary transmission line 11P. When the token is caught by the station A, the station A passes the data to be transmitted to the primary transmission line 11P directly after the token is erased. In this case, as already mentioned, the token has a predetermined, specific bit pattern. The operation of erasing the token is performed by overwriting the token with an idle symbol. The idle symbol normally, expressed in code, is all "1" ("111...1").

After the station A finishes sending to the second station the data to be sent through the MAC layer of the wire concentrator, the MAC layer of the third station, and the MAC layer of the first station, it adds a token just after the end of the transmission. Therefore, the next station requesting data transmission becomes able to catch the token without waste of time. As mentioned before, this is one feature of an FDDI system and is effective for high speed transmission.

Now, however, assume that a fault (shown by X) occurs at the first station in the wire concentrator 12, and the plurality of stations 12 illustrated. Further, assume the fault is not a fault at the physical layers 14A and 14B, but is a fault of the logical layer of the MAC layers 13. Further, assume that this logical fault is the worst fault where the MAC layer 13 continuously sends the idle symbol "111...1".

When such a fault occurs, as mentioned earlier, there is no error in the idle symbol itself, so at the level of the physical layers, it is impossible to detect the logical fault. Further, finally, the ring type transmission line 11 becomes completely filled with this idle symbol and even the token naturally ends up lost.

Here, according to the MAC layer protocol of the FDDI system, any station (first station to third station, station A to station D) detecting the loss of the token will start the claim token processing.

After this, as explained in reference to Fig. 1, the beacon processing is started, but now the first station is the faulty station and further the idle symbol is continuously passed, so even the beacon frame ends up lost. As a result, the ring type LAN 10 not only does not remove the faulty station, but cannot even detect it, resulting in the system going down. This is the problem mentioned earlier.

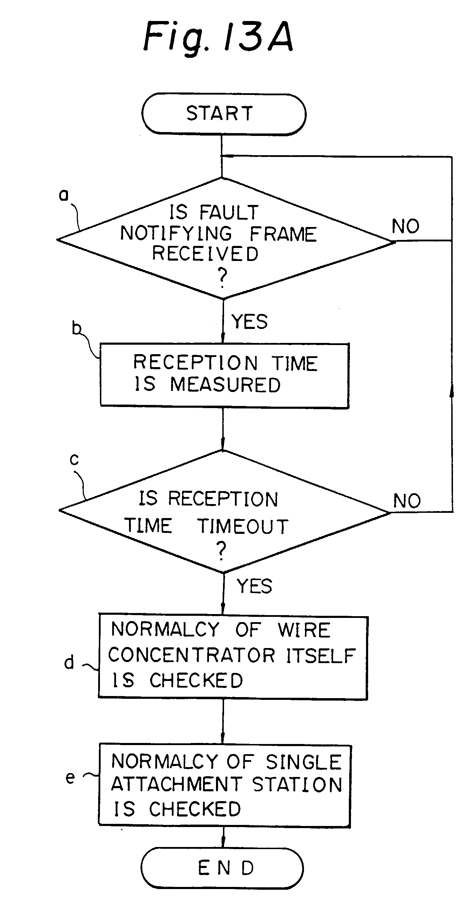

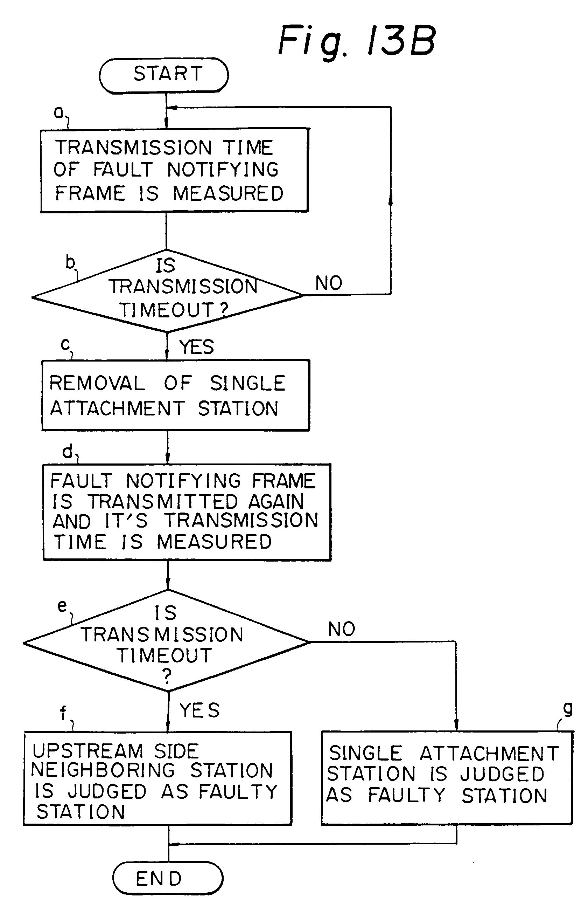

Figures 13A and 13B are general flow charts showing the fault detection operation of a data processing system based on a second embodiment of the present invention.

First, in Fig. 13A, the wire concentrator 12' detects if a fault notifying frame (BF) sent from a station (43, 12) other than the wire concentrator itself has been received (step a). When a fault notifying frame BF is received, the reception time during which this is received is measured (step b). When the reception time exceeds a certain predetermined time and the time runs out (step c), the normalcy of the wire concentrator 12 itself and also the single attachment stations 43 under it is inspected and then the faulty station is detected (step d and step e) to detect the actual fault.

Next, in Fig. 13B, the wire concentrator 12' measures the transmission time during which the fault notifying frame BF is transmitted by itself (step a). It then detects if the transmission time has exceeded the certain predetermined time and the time has run out (step b). If the transmission time has run out, all the single attachment stations 43 under the wire concentrator 12' are removed from it (bypassed) (step c).

After the removal, the fault notifying frame BF is once again transmitted from the wire concentrator 12' and the transmission time is once again measured (step d).

Depending on whether or not the measured transmission time has run out (step e), it is judged if the dual attachment station 12 or the single attachment station 43 adjoining at the upstream side is the faulty station (step f and step g) so as to detect the actual fault.

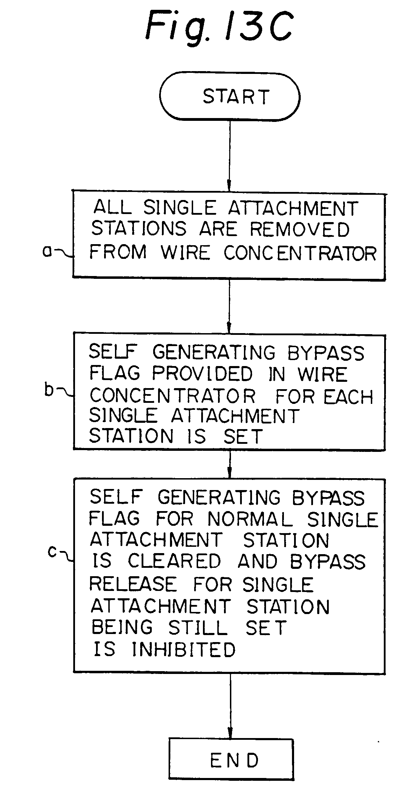

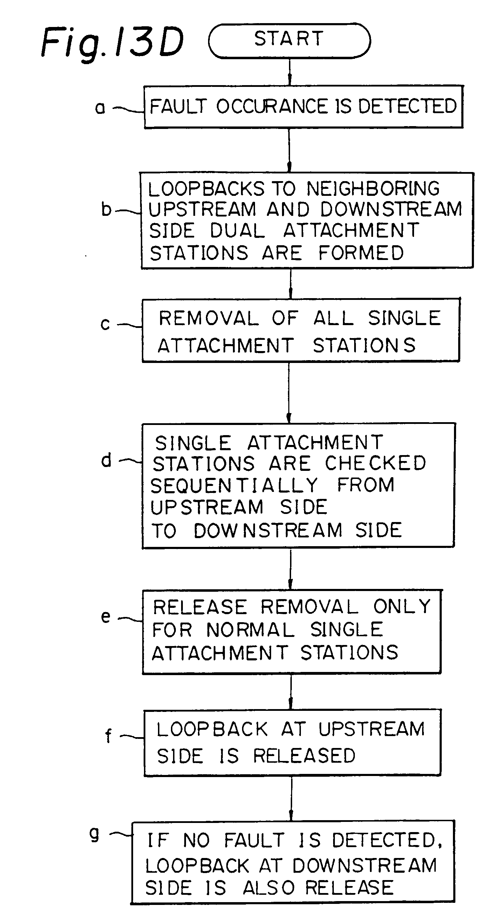

Figures 13C and 13D are general flow charts showing the fault repair operation of the data processing system based on the second embodiment of the present invention.

First, in Fig. 13C, to enable the wire concentrator 12' to inspect the normalcy of the single attachment stations 43 under it, all of the single attachment stations 43 are removed once from the wire concentrator 12' (bypassed) (step a). To show that this removal has been performed, self generating loopback flags of the wire concentrator, provided corresponding to each of the single attachment stations 43, are set (step b). The self generating loopback flags corresponding only to those single attachment stations 43 for which normalcy has been confirmed are cleared, then the release of the loopback for the single attachment stations 43 for which the self generating loopback flags have remained set is inhibited (step c) and the fault repair performed.

Next, referring to Fig. 13D, when the occurrence of a fault has been detected in the wire concentrator 12' (step a), loopbacks are formed for the dual attachment stations 12 adjoining at the upstream side and downstream side (step b). All of the single attachment stations 43 under the wire concentrator 12' are removed from the wire concentrator 12' (bypassed) (step c). The normalcy is inspected successively from the upstream side single attachment station 43 to the downstream side single attachment station 43 and the removal (bypass) from the wire concentrator 12' once again is released only for the normal ones (step d and step e). After the inspection of normalcy is completed, the loopback of the upstream side adjoining double attachment station 12 is released (step f). Further, when the wire concentrator 12' does not detect the occurrence of a fault, the loopback at the downstream side adjoining dual attachment station 12 is released (step g) and the fault repaired.

Regarding Fig. 13A, the wire concentrator 12' continuously receiving the fault notifying frame (beacon frame) judges that some type of fault has occurred and investigates the normalcy of it itself and the stations 43 under it (in particular see mode IV mentioned later).

Regarding Fig. 13B, the wire concentrator 12', after continuously transmitting the fault notifying frame (beacon frame) itself, removes the stations 43 under it to investigate if there is a fault at a station 12 outside of the wire concentrator 12' and, if there is not, incorporates the stations 43 under it into the loop to further investigate if there is a fault (in particular see mode II mentioned later).

Regarding Fig. 13C, the wire concentrator 12' has flags corresponding to each of the single attachment stations 43 and when these flags are forcibly bypassed, makes the flags "1" and inhibits clearing the flags in so far as normalcy is not confirmed, so that when a station 43 under it is the faulty station, it can be prevented the station 43 from being unilaterally incorporated in the ring, and thus the fault is prevented from once again affecting the LAN 10 (see modes I to V, mentioned later).

Regarding Fig. 13D, the wire concentrator 12' removes all the stations connected thereto and then incorporates the stations 43 under it one at a time into the loop to test for the normalcy. According to the test r result only the normal stations are incorporated into the loop. Further, the adjoining stations 12 are incorporated into the loop in the order of the upstream side to the downstream side and if a fault is detected midway, the incorporation into the loop is inhibited (in particular see mode III mentioned later).

Below, the second embodiment of the present invention will be explained divided into various modes.
(I) Mode in which faulty station is at station further upstream than even the upstream side adjoining station 12 of the wire concentrator 12'
(II) Mode in which the upstream side adjoining station 12 of the wire concentrator 12' is the faulty station, and a time measuring means 20 is provided in the single attachment station 43
(III) Mode in which one of the single attachment stations 43 is the faulty station, and each of the single attachment stations 43 is provided with a time measuring means 20
(IV) Mode in which one of the single attachment stations 43 is the faulty station, and each of the single attachment stations 43 is not provided with a time measuring means 20
(V) Mode in which upstream side adjoining station 12 of wire concentrator 12' is faulty station, and each of the single attachment stations 43 is not provided with a time measuring means 20

The above (I) and (V) form a pair and the above (III) and (IV) form a pair.

First, an explanation will be given of the above mode (I).

### (I) Mode in which faulty station is at station further upstream than even the upstream side adjoining station 12 of the wire concentrator 12'

In Fig. 12, the fault occurs at the first station and, for example, an idle symbol ("111...1") is continuously transmitted. Usually, the stations 43 and the stations 12 have various timers in the MAC layers 13, for example, timers called a valid transmission timer (TVX) and token rotation timer (TRT). Here, since the idle symbol continues to be transmitted, of the above timers, the timer in the second station adjoining the faulty first station at the downstream side first runs out of time and the previously mentioned claim token processing is entered. Even in the claim token processing by the second station, the idle symbol continues to be transmitted and the timer TRT runs out of time. Here, the second station learns that the claim token processing has failed and then enters the beacon processing. Note that the above series of processing is processing as prescribed by regulations of the FDDI system. In the same way as in the first embodiment, the method of the present invention starts from the beacon processing as the first step.

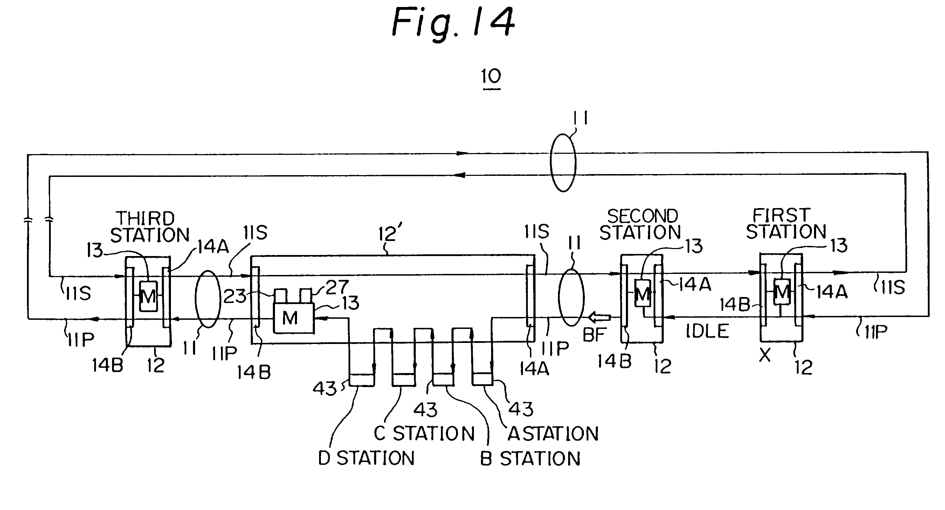

Figure 14 is a view showing a first state of a second station and shows the state where the above beacon frame BF is transmitted by the second station.

The beacon frame BF is relayed by the station A, the station B, ... the station D each forming the single attachment stations 43 and the third station and the second station forming the wire concentrator 12' and the dual attachment station 12 and tries to return to the second station, but is overwritten by the idle symbol IDLE in the faulty station, i.e., the first station, so the BF is lost. Note that in this case, the wire concentrator 12' only relays the beacon frame BF through the station A to station D under it and, during which the content of the SCM unit 23 in the concentrator is not changed. This SCM unit 23, as mentioned earlier, is a program for controlling the configuration of the own station 12 and the own concentrator 12'. In the figure, however, for simplification, the SCM unit 23 is drawn only for the portion used for the explanation. This same applies for other constitutional elements mentioned from now.

Further, if the wire concentrator 12' receives the above beacon frame BF given from an upstream station, the time measuring means 27 for faults of other stations in the wire concentrator 12' starts measurement to measure the reception time of the fault notifying frame from the upstream station (beacon frame in this embodiment). Here, the other fault time measuring means 27 is a timer of the wire concentrator 12' and measures the reception time of the beacon frame BF given from another station. Its role will be explained later.

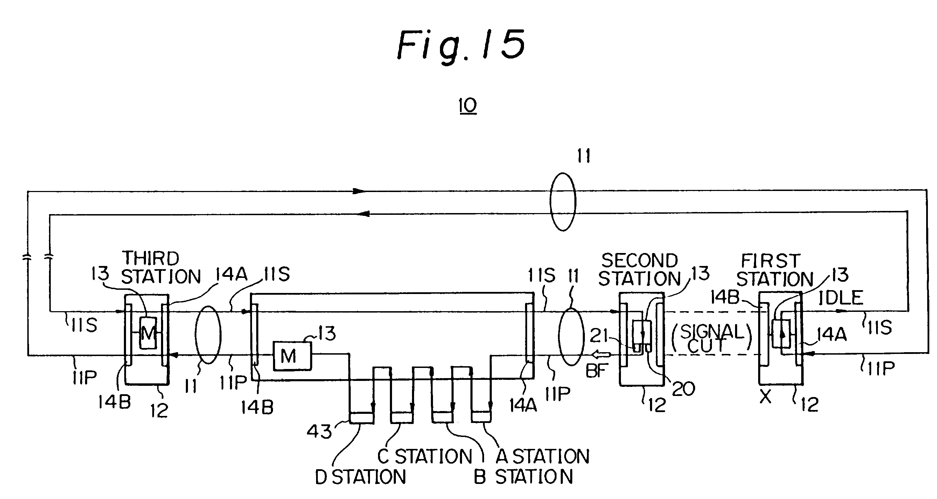

### Step 2 (Fig. 15)

In the present embodiment, too, a time measuring means (timer) is introduced. The wire concentrator 12' and all of the dual attachment stations 12 are equipped with one. The only time measuring means shown in Fig. 15 is that for the second station, for simplification, and is given reference numeral 20.

Here, defining the time measuring means 20, in the same way as the case of the first embodiment, the time measuring means is provided for the wire concentrator 12' and all of the stations 12. Each starts measuring time simultaneously with the start of transmission of the beacon frame BF. Therefore, the time measuring means 20 measures the transmission time of the beacon frame BF. Note that whether or not to be equipped with the time measuring means 20 for each of the single attachment stations 43 is a matter of choice by the user.

Since a fault occurs at the first station and an idle symbol IDLE remains transmitted from this, the second station cannot receive the beacon frame BF it has issued itself. Finally, the time measuring means 20 runs out of time. Then, the second station estimates that the fault has occurred at the adjoining upstream side first station.

The second station shifts from the THRU-A state to the WRAP-B state due to its own time measuring means 20 running out of time. The THRU-A state, as was previously mentioned, is the state in which in each of the dual attachment stations 12, the primary transmission line 11P in the clockwise direction is connected by the route of the upstream side physical layer 14A → MAC layer 13 → downstream side physical layer 14B, while the secondary transmission line 11S in the counterclockwise direction is connected by the route of the downstream side physical layer 14B → the upstream side physical layer 14A. This is the state during normal data transmission. Further, as already mentioned, the WRAP-B state is the state where the upstream side primary transmission line 11P and secondary transmission line 11S are turned back at the upstream side physical layer 14A to form a loopback and the downstream side secondary transmission line 11S returns to the downstream side primary transmission line 11P passing through the MAC layer 13. Note that there is a WRAP-A state as opposed to the WRAP-B state, as mentioned earlier. This WRAP-A state is the state where the downstream side primary transmission line 11P and secondary transmission line 11S are turned back at the downstream side physical layer 14B to form a loopback, and the upstream side primary transmission line 11P returns to the upstream side secondary transmission line 11S passing through the MAC layer 13. The WRAP-A state and the WRAP-B state both do not occur during usual data transmission and are temporarily occurring states for the purpose of monitoring etc. or for system initialization.

Since the second station shifts from the THRU-A state to the WRAP-B state, the station again starts sending the beacon frame BF. Note that the step of having the beacon frame BF sent each time a transition in state occurs is something which is required in the regulations.

When the second station begins to send the beacon frame BF, the time measuring means 20 is reset and the beacon frame transmission time is once again begun to be measured.

Figure 15 is a view showing the second state of the second station and shows the state in the middle of the step 2 mentioned above.

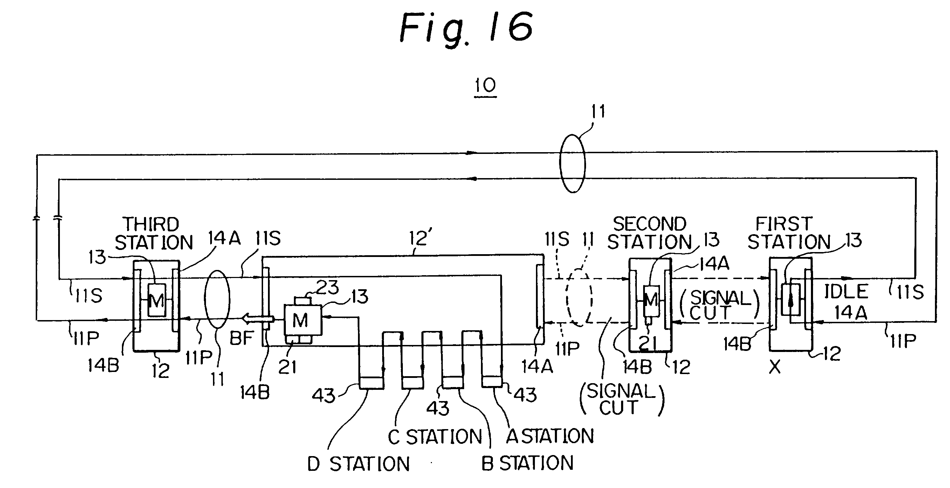

### Step 3 (Fig. 16)

In step 2, the second station sends the beacon frame BF once again, but this is overwritten by the idle symbol IDLE at the first station and the beacon frame BF does not return to the second station. Therefore, the time measuring means 20 in the second station runs out of time.

With the running out of the time, the second station enters the test state. The test state means the state where the wire concentrator 12' and dual attachment stations 12 connect the primary transmission line 11P and secondary transmission line 11S at the respective upstream side physical layers 14A and downstream side physical layers 14B, that is, form loopbacks at the upstream side physical layers 14A and the downstream side physical layers 14B, then turn around the path from the MAC layers 13 to the downstream side physical layer 14B and the path from the MAC layer 13 to the downstream side physical layer 14B, form inside station turnaround path connecting the output side and input side of the MAC layer 13, with the MAC layers 13 themselves transferring and receiving beacon frames and investigating if they themselves are normal.

Since the second station enters the above test state, loopbacks are formed at the upstream side physical layer 14A and the downstream side physical layer 14B. Of these loopbacks, along with the formation of the loopback at the downstream side physical layer 14B, the downstream side wire concentrator 12' detects that the physical connection with the second station has been disconnected. As mentioned before, the cutting of the physical connection does not mean the physical cutting of the transmission line 11, but normally means the blocking of the optical signal flowing between adjoining station physical layers. In the figure, this is shown by the dotted line.

The wire concentrator 12', when detecting that the physical connection has been cut, leaves the self generating loopback flag in the cleared ("0") condition and automatically forms a loopback at the upstream side physical layer 14A. This is not a loopback due to inherent causes, so is a so-called passive loopback. This operation is originally determined in the regulations.

The above self generating loopback flag is set in the first status indicating means (I) 21 of the wire concentrator 12'. Like in the first embodiment, this first status indicating means 21 is provided for all of the dual attachment stations 12. Here, the self generating loopback flag in the first status indicating means 21, as mentioned already, is set ("1") when the time measuring means 20 runs out of time and a loopback is formed at the upstream side. That is, it is set when the wire concentrator 12' is in the THRU-A state and the time measuring means 20 in the station runs out of time, in which the self generating loopback is formed. Note that so long as this flag is set, the loopback at the upstream side physical layer 14A is prevented from being released. As already mentioned, the self generating loopback flag is cleared ("0") under various conditions. For example, when the PCMs attached to the physical layers are in the reject state, or when the loopback release switch is pressed from the outside etc. Note that in this example, the first status indicating means 21 in the second station is set.

The wire concentrator 12' shifts to the WRAP-B state and therefore, in the content of the SCM unit 23, a loopback is formed at the upstream side physical layer 14A. By the transition in state, the wire concentrator 12' starts the transmission of the beacon frame BF in accordance with the regulations. Therefore, at this time, the time measuring means 20 is reset and starts measuring the BF transmission time.

This beacon frame BF, however, is overwritten by the idle symbol IDLE when arriving at the first station and disappears, so the idle symbol returns to the wire concentrator 12'.

Figure 16 is a view showing the third state in the second station and the first state in the wire concentrator which shows the state after the above step 3.

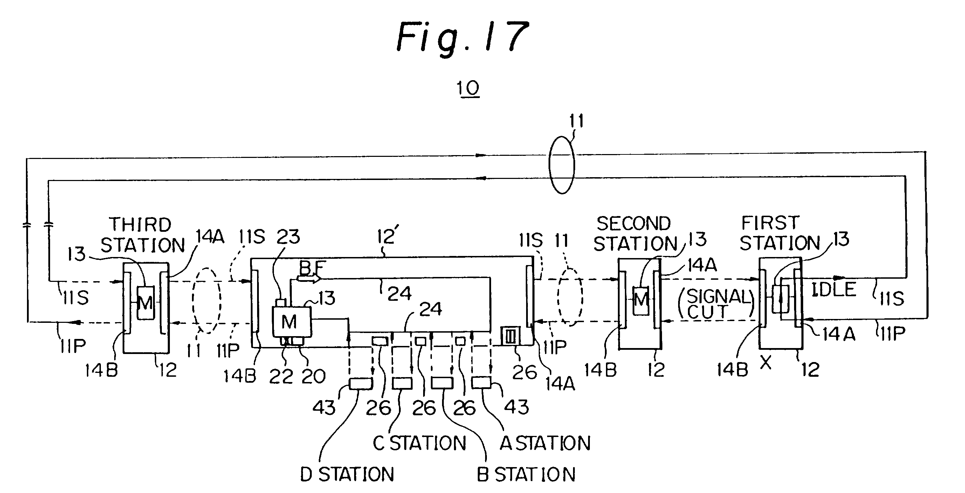

### Step 4 (Fig. 17)

The wire concentrator 12' cannot receive the beacon frame BF at step 3 even if the predetermined time is exceeded. Therefore, the time measuring means 20 in the wire concentrator 12' runs out of time.

The wire concentrator 12' then refers to the SCM unit 23 in it and then learns that it is in the WRAP-B state (see state of wire concentrator 12' in Fig. 16). Then, the wire concentrator 12' forms a loopback at the downstream side physical layer 14B in it.

Therefore, the physical connection with the third station is cut.

Further, the wire concentrator 12' disconnects the physical connection with all of the single attachment stations 43 (station A to station D) under it to bypass them and forms the previously mentioned inside station turnaround path 24. At this time, the wire concentrator 12' sets all the self generating loopback flags in respective third status indicating means 26 prepared for each single attachment stations 43.

Since the inside station turnaround path 24 is formed in the wire concentrator 12', the previously mentioned test state is entered. In this test state, first, the own station normalcy flag in the second status indicating means 22 is cleared ("0"), then the beacon frame BF is sent to the inside station turnaround path 24 from the MAC layer 13 in the wire concentrator 12'. Further, simultaneous with the start of the beacon frame BF, the time measuring means 20 in the wire concentrator 12' is cleared and the BF transmission time is started to be counted.

Like in the first embodiment, the above own station normalcy flag is the flag showing that the wire concentrator 12' is operating normally. It is cleared at the startup of the wire concentrator 12' and, in the previously mentioned test state, is set when the results of the inside station turnaround test are normal. In addition, it is set when the token is restored at the MAC layer 13, when the ring operational flag is on, or when the loopback release switch is depressed from the outside. On the other hand, the own station normalcy flag is cleared, as mentioned above, when the wire concentrator 12' is started up or when the content of the SCM unit 23 shifts to the test state.

Like in the first embodiment, the self generating loopback flag is provided in the wire concentrator 12' and shows that the single attachment stations, i.e., station A to station D, are voluntarily bypassed by the wire concentrator 12'. Therefore, the bypass cannot be released from the station A to the station D on their own free will. The self generating loopback flag is set at the third status indicating means 26 when the time measuring means 20 of the wire concentrator 12' runs out of time or when the content of the SCM unit 23 shifts to the test state. By the time running out, the wire concentrator 12' must determine if the fault is at the upstream side station or at one of the station A to station D under it. For this, the self generating loopback flag is set in the third status indicating means 26, the station A to station D are removed, and the abnormality in the MAC layer of the wire concentrator is first of all detected.

Figure 17 is a view showing the second state of the wire concentrator and the first state of the third station which shows the state after the above step 4.

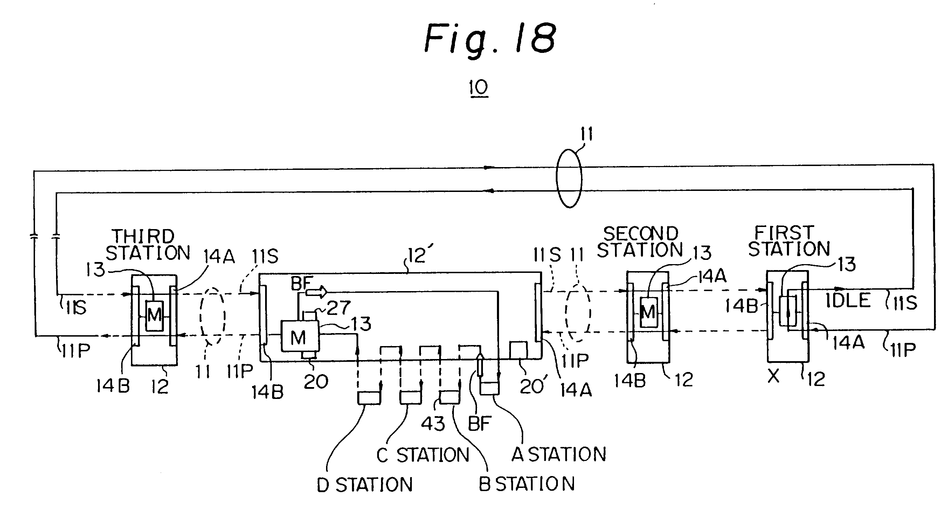

### Step 5 (Fig. 18)

The wire concentrator 12' normally receives the beacon frame BF it sends itself, so stops the transmission of the beacon frame BF. At this time, it simultaneously stops the measurement of the time measuring means 20 as well.

Then, in accordance with regulations, it transmits the claim frame, and when receiving its own claim frame, stops the previously mentioned other station fault time measuring means 27 (note that the inherent role of the other station fault time measuring means is discussed later). In this case, the token is restored and the ring operational flag in the MAC layer 13 is made on. Here, it is recognized that the wire concentrator 12' is normal inside, then the station A to station D under it are shifted to the test state. The order of the station A to the station D to be tested is arbitrary, but here the explanation will be made taking as an example the method of successive testing from the upstream side.

First, the station A situated at the most upstream position among the station A to station D is incorporated into the loop passing through the MAC layer 13 of the wire concentrator 12'. At this time, the self generating loopback flag in the third status indicating means 26 belonging to the station A is cleared from "1" to "0". That is, the loopback of the station A is released.

Here, since there is a transition in state in the wire concentrator 12' and the station A (Fig. 17 → Fig. 18), the MAC layer 13 in the wire concentrator 12' and the MAC layer in the station A begin sending the beacon frame BF according to the regulations. At this time, the MAC layer 13 is cleared and the measurement of the transmission time of the beacon frame BF begins.

Figure 18 is a view showing the third state of the wire concentrator, which shows the state at the end of step 5.

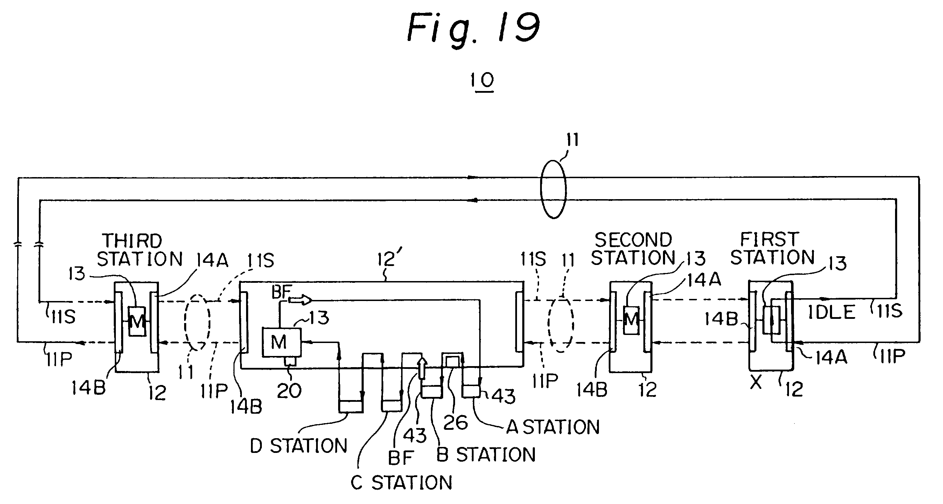

### Step 6 (Fig. 19)

The beacon frame BF sent from the MAC layer 13 in the wire concentrator 12' at the previous step 5 passes through the station A and returns to the MAC layer 13 before the time measuring means 20 in the wire concentrator 12' runs out of time. Therefore, it is determined that the wire concentrator 12' is normal. Then, the wire concentrator 12' incorporates the station B, i.e., the single attachment station adjoining the station A on the downstream side, in the loop passing through the station A and the MAC layer 13. This incorporation of the station B is performed by clearing the self generating loopback flag in the third status indicating means 26 belonging to the station B from "1" to "0" and releasing the bypass.

Since a transition in state occurs in the wire concentrator 12', the MAC layer 13 of the wire concentrator 12' begins transmitting the beacon frame BF. The same is true for the station B. Therefore, the time measuring means 20 attached to the MAC layer 13 starts measuring after the reset of the means 20 by the BF from the MAC layer 13.

Figure 19 is a view showing the fourth state of the wire concentrator, which shows the state at the end of step 6.

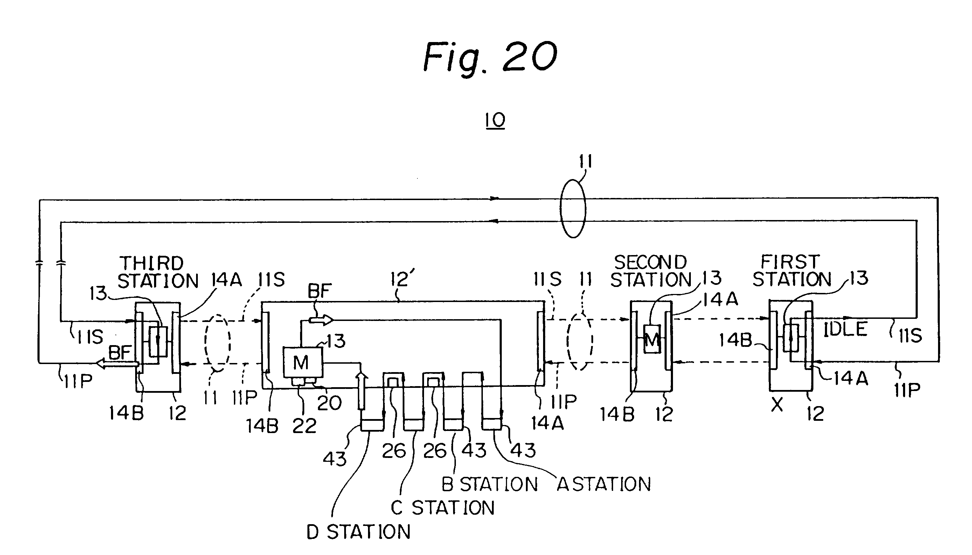

### Step 7 (Fig. 20)

In the wire concentrator 12', the beacon frame BF sent at the previous step 6 passes through the station A and station B and returns to the MAC layer 13 before the time measuring means 20 runs out of time. Therefore, the wire concentrator 12' determines that the station B is also normal.

Similarly, the wire concentrator 12' incorporates the station C and the station D, i.e., the further downstream side single attachment stations, successively into the loop including the MAC layer 13. At this time, the self generating flags in the third status indicating means 26 belonging to the station C and the station D are cleared from "1" to "0" and the loopbacks are successively released.

Therefore, the test regarding each normalcy of all of the single attachment stations 43 under the wire concentrator 12' is completed. Then, the wire concentrator 12' sets the own station normalcy flag in the second status indicating means 22, which had been cleared to "0", at step 4, to "1", then shifts to the isolated state.

Figure 20 is a view showing the fifth state of the wire concentrator, which shows the state at the end of step 7.

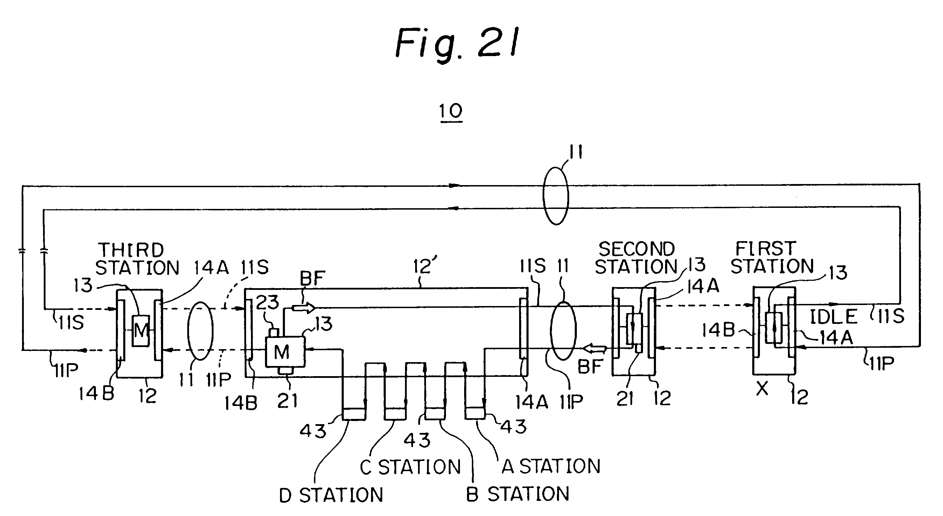

### Step 8 (Fig. 21)

If the wire concentrator 12' enters the isolated state at the previous step 7, the physical connection between the wire concentrator 12' and the upstream side adjoining dual attachment station, i.e., the second station, is rebuilt and that fact is notified to the SCM unit 23 by the previously mentioned PCM attached to the upstream side physical layer 14A of the wire concentrator 12' (in accordance with regulations).

Here, the wire concentrator 12' releases the loopback at the upstream side physical layer 14A. The reason is that the loopback at the upstream side physical layer 14A is an automatically formed (passively formed) loopback arising due to the cutting of the physical connection effected by the upstream side second station, so the self generating loopback flag in the first status indicating means 21 based on the present invention remains cleared ("0"). Conversely, when the self generating loopback flag is set ("1"), the upstream side self generating loopback flag must not be released, as mentioned before. The state of the second station is an example of this.

Figure 21 is a view showing the fifth state of the wire concentrator and the fourth state of the second station, which shows the state at the end of step 8.

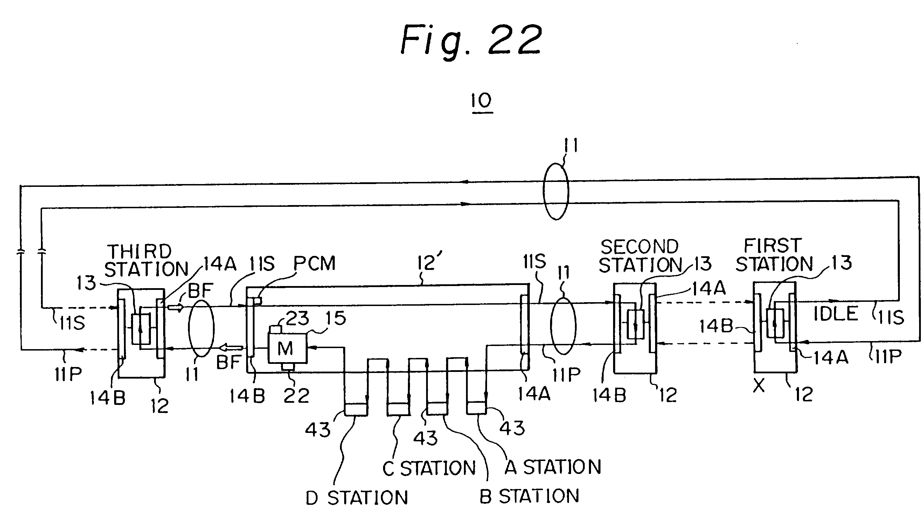

### Step 9 (Fig. 22)

The wire concentrator 12' rebuilds the physical connection with the downstream side adjoining dual attachment station, i.e., the third station, and notifies that fact to the SCM unit 23 by the PCM attached to the physical layer 14B.

At this time, in the wire concentrator 12', the own station normalcy flag in the second status indicating means 22 is set ("1"), so the loopback of the downstream side physical layer 14B is released. In accordance with this, a loopback is formed at the upstream side physical layer 14A.

Figure 22 is a view showing the sixth state of the wire concentrator and the second state of the third station. Here, the fault is repaired among the normal second station, third station, and wire concentrator 12' and thus the ring type LAN 10 is automatically rebuilt among just the same. After this, if the fault at the faulty station, i.e., the first station, is repaired, a complete ring type LAN 10 is returned to.

The second embodiment refers to the detection and repair of a fault, in a ring type LAN 10, primarily in the wire concentrator 12' and the single attachment stations 43 under it. Therefore, the internal structures of the same will be shown in more detail.

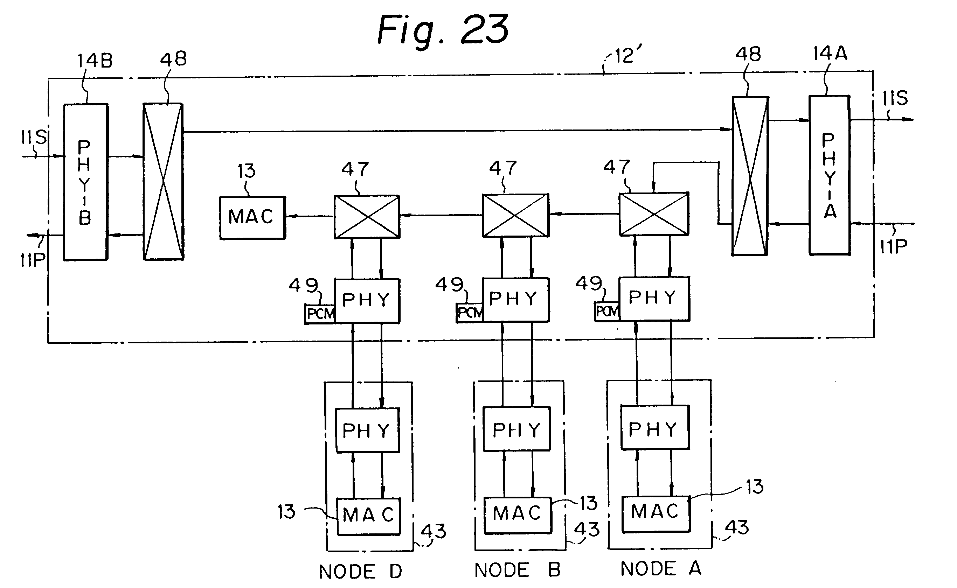

Figure 23 is a view showing a specific example of a wire concentrator and the single attachment stations attached to the same. For simplification, only the station A, station B, and station D are shown. As shown in the figure, the single attachment stations 43 and the wire concentrator 12' are connected through physical layers (PHY). Using the two physical layers (PHY), the establishment or the cutting of the physical connection between the wire concentrator 12' and the single attachment stations 43 are controlled. The previously mentioned PCMs 49 are attached to the physical layers.

The physical layers (PHY) in the wire concentrator 12' cooperate with the corresponding selectors 47 for the formation or release of the previously mentioned loopbacks. The selector 48 is used for forming the previously mentioned THRU-A state, WRAP-A state, WRAP-B state, and inside station turnaround path 24. Two-input selectors 47 and 48 select one of the inputs, and the two-output selectors 47 and 48 select one of the outputs.

The MAC layers 13, the one in the wire concentrator 12' and the ones in the single attachment stations 43, are constructed substantially similarly. The only difference is that the ones in the single attachment stations 43 are joined to only one physical layer, while the one in the wire concentrator 12' is joined to the upstream side physical layer 14A and the downstream side physical layer 14B. Note that a specific example of the MAC layer is given in previous Fig. 11.

### (II) Mode in which the upstream side adjoining station 12 of the wire concentrator 12' is the faulty station, and a time measuring means 20 is provided in the single attachment station 43

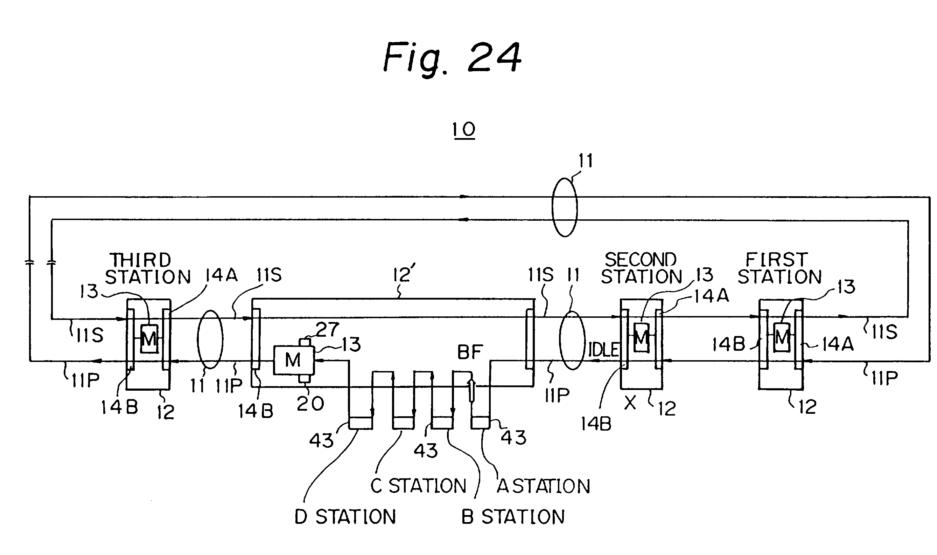

### Step 1 (Fig. 24)

In the mode of (II), the upstream side adjoining dual attachment station 12 of the wire concentrator 12', that is, the second station,is the faulty station, and thus the fault occurs in which continuously the idle symbol IDLE is transmitted.

At the station A, which is the single attachment station 43 positioned most upstream under the wire concentrator 12', the previously mentioned TVX timer runs out of time or the TRT timer runs out of time, so it is learned that the token has been lost. Therefore, according to the regulations, the previously mentioned claim token processing is entered and the claim frame is continuously transmitted. This claim frame, is also sent over the primary transmission line llP, but is overwritten by the idle symbol IDLE when reaching the second station. Therefore, the station A enters the previously mentioned beacon processing.

By this beacon processing, the time measuring means 20 is reset and, at the same time, the beacon frame BF starts to be sent over the primary transmission line 11P. When passing the third station and the first station and reaching the second station, however, the beacon frame BF is lost.

On the other hand, during the beacon processing, the wire concentrator 12' receives the beacon frame BF at the MAC layer 13 and starts the other station fault time measuring means 27.

The other station fault time measuring means 27 is based on the present invention and is provided at the wire concentrator 12'. The other station fault time measuring means 27 measures the time during which the fault notifying frame, that is, the beacon frame BF, is received from a station other than the wire concentrator 12' itself. Therefore, it starts with the reception of the beacon frame BF. The measurement is stopped when the previously mentioned claim frame is received.

When the other station fault time measuring means 27 runs out of time, the wire concentrator 12' determines that there is no time measuring means 20 in the single attachment station 43 under the concentrator 12'. In general, the single attachment station 43 is not originally installed at the time of building the ring type LAN 10 and there does not necessarily have to be a time measuring means 20 at all times, so such a decision becomes necessary. On the other hand, the wire concentrator 12' and the dual attachment station 12 are provided with time measuring means 20 as essential means at the time of construction of the ring type LAN 10. Therefore, the fact that the other station fault time measuring means 27 runs out of time means that it is possible for it to be judged that there is a fault in the station 43 under the wire concentrator 12' and thus the test state is shifted to (explained later).

Figure 24 is a view showing the first state of the wire concentrator, which shows the state at the end of step 1.

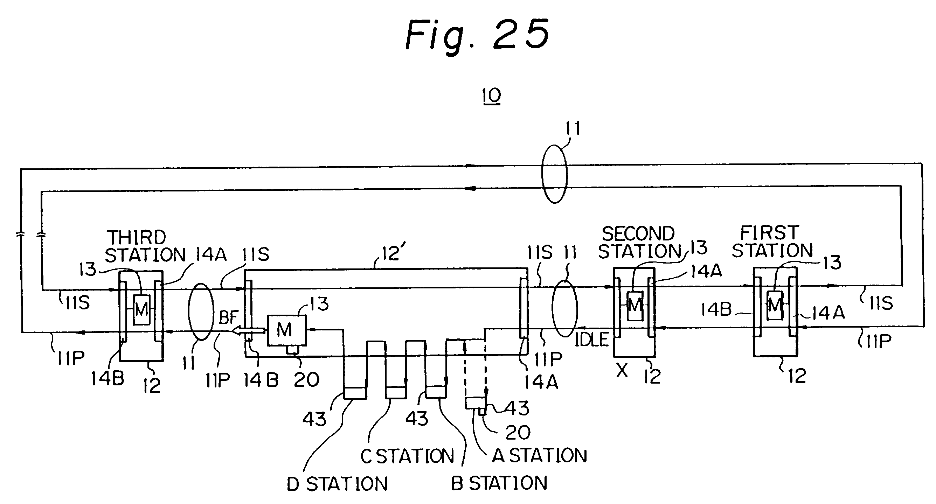

### Step 2 (Fig. 25)

In the mode (II), the case is envisioned where the single attachment station 43 is provided with a time measuring means 20. The idle symbol IDLE from the second station, i.e., the adjoining station at the upstream side, is received and then the station A continuously transmits the beacon frame BF, so the time measuring means 20 in the station A runs out of time.

By this time running out, station A cuts the physical connection with the wire concentrator 12'. Thereafter, the station A shifts to the isolated state.

The wire concentrator 12' which detects the cutting of the physical connection automatically bypasses the station A. The automatic bypass is a procedure determined in the regulations.

By this transition in state, the wire concentrator 12' starts to send the beacon frame BF. At the same time, the time measuring means 20 is reset.

Figure 25 is a view showing the second state of the wire concentrator 12', which shows the state at the end of step 2.

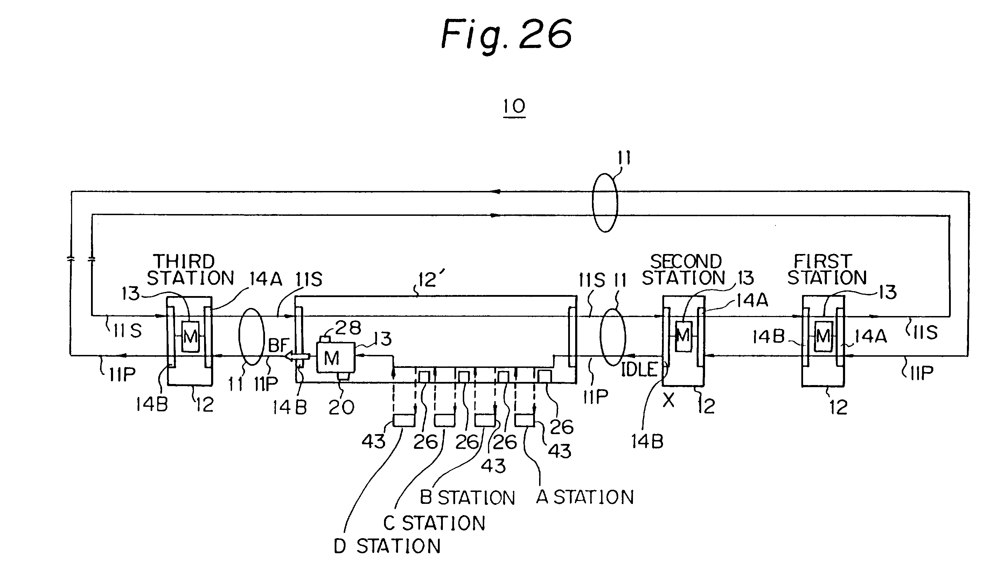

### Step 3 (Fig. 26)

The station A which entered the isolated state in step 2 confirms whether it is normal or not. That is, it forms an inside station turnaround path in the station A, continues to transmit the beacon frame BF, and, when the token is restored and the ring operational flag of the MAC layer in the station A is made on, determines that it itself is normal. The station A further rebuilds the physical connection with the wire concentrator 12'. This fact is notified to the SCM unit (not shown) in the station A from the PCM attached to the physical layer (PHY) in the station A.

Therefore, the station A tries to release the loopback. At this time, however, the wire concentrator 12' is in the middle of the beacon processing (see end of step 2) and the ring operational flag in the MAC layer 13 of the wire concentrator 12' is cleared, so the station A still remains bypassed.

In station B, which is the downstream side single attachment station (station A), the previously mentioned TVX timer runs out of time and the claim processing is entered. The wire concentrator 12', however, is in the middle of the beacon processing, so the claim frame sent by the station B is lost at the MAC layer 13 of the wire concentrator 12'. Therefore, the beacon frame BF continues to be sent from the MAC layer 13. If the TRT timer of the station B runs out of time, the station B enters the beacon processing. Before this, however, the time measuring means 20 of the wire concentrator 12' runs out of time. This is because the time settings of the timers are set in this way. The setting of the time measuring means 20 is one of the major parameters in the present invention.

The wire concentrator 12' sets the time measuring means timeout flag from "0" to "1" due to the above time running out in the fourth status indicating means 28 according to the second embodiment of the present invention. At the same time, the time measuring means 20 of the MAC layer 13 is reset. The wire concentrator 12' bypasses all the station A to station D, i.e., the single attachment stations 43 under it. At this time, "1" is set in the third status indicating means 26 according to the second embodiment of the present invention.

Here, a transition in state occurs in the wire concentrator 12', so once again the beacon frame BF is started to be sent from the MAC layer 13 based on the regulations.

Defining the time measuring means timeout flag mentioned above, this is a flag required in the wire concentrator 12' and is set ("1") in the fourth status indicating means 28. The setting is performed when the time measuring means 20 runs out of time. On the other hand, the time measuring means timeout flag is cleared at any of the following times: when the time measuring means 20 once again runs out of time, when the ring operational flag is on (token is reissued), and when the wire concentrator 12' enters the test state. The role of this time measuring means timeout flag is as follows: When the wire concentrator 12' is in the THRU-A state or the WRAP-B state and the time measuring means 20 runs out of time, all the single attachment stations 43 are self generatingly bypassed as mentioned in step 2. In order to distinguishes for the wire concentrator 12' whether the faulty station is a single attachment station 43 or an upstream side adjoining station (second station). By this transition to the bypass state, the wire concentrator 12' starts to send the beacon frame BF, but if the time measuring means 20 runs out of time, it is judged that the second station is the faulty station. The reason is that the beacon frame BF is supposed to passes through the primarily transmission line 11P and go through only the second station (bypass the station A to station D) and then return. Conversely, if the time measuring means 20 does not run out of time, the second station is normal and therefore it is judged that one of the station A to station D is the faulty station.

Figure 26 is a view showing the third state of the wire concentrator, which shows the state at the end of step 3.

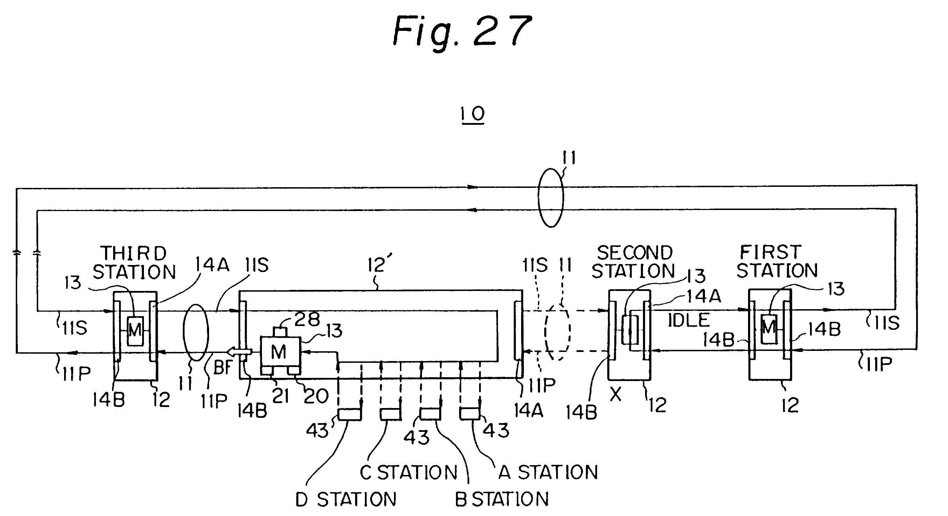

### Step 4 (Fig. 27)

In the wire concentrator 12', the time measuring means 20 once again runs out of time. The first time was in the first half of the previous step 3 after when the station A was bypassed and the BF was sent. The second time is in the second half of the previous step 3 after when all the stations (station A to station D) were bypassed and the BF sent.

The wire concentrator 12' judges by the time measuring means 20 again running out of time that the faulty station is the adjoining station at the upstream side (second station). By this, the upstream side is self generatingly looped back and the self generating loopback flag in the first status indicating means 21 is set ("1"). Therefore, the wire concentrator 12' shifts to the WRAP-B state by this loopback. By this transition in state, the wire concentrator 12' resets the time measuring means 20 and starts to send the beacon frame BF.

Figure 27 is a view showing the fourth state of the wire concentrator, which shows the state at the end of step 4.

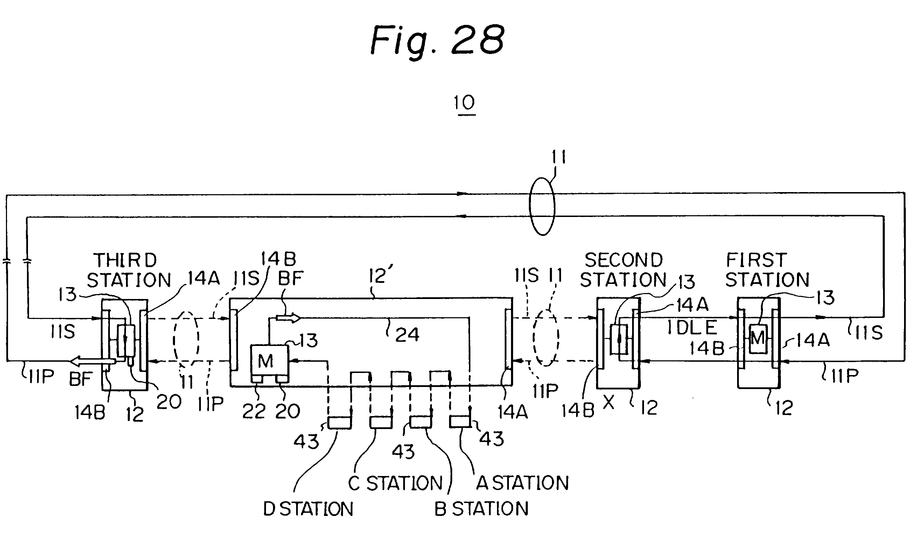

### Step 5 (Fig. 28)

As mentioned above, the wire concentrator 12' shifts to the WRAP-B state and sends the beacon frame BF, but the time measuring means 20 once again runs out of time, so the wire concentrator is self generatingly looped back at the downstream side as well. Therefore, the physical connection with the adjoining station at the downstream side, i.e., the third station, is cut. Then, the own station normalcy flag is cleared ("0") at the second status indicating means 22. In this test state, the above-mentioned inside station turnaround path 24 is formed. This loop 24 has the beacon frame BF sent on it. At the same time, the time measuring means 20 is reset.

On the other hand, the downstream side third station, along with the cutting of the physical connection, shifts to the WRAP-B state and starts sending the beacon frame BF. At the same time, the time measuring means 20 is reset.

Figure 28 is a view showing the fifth state of the wire concentrator, which shows the state at the end of step 5.

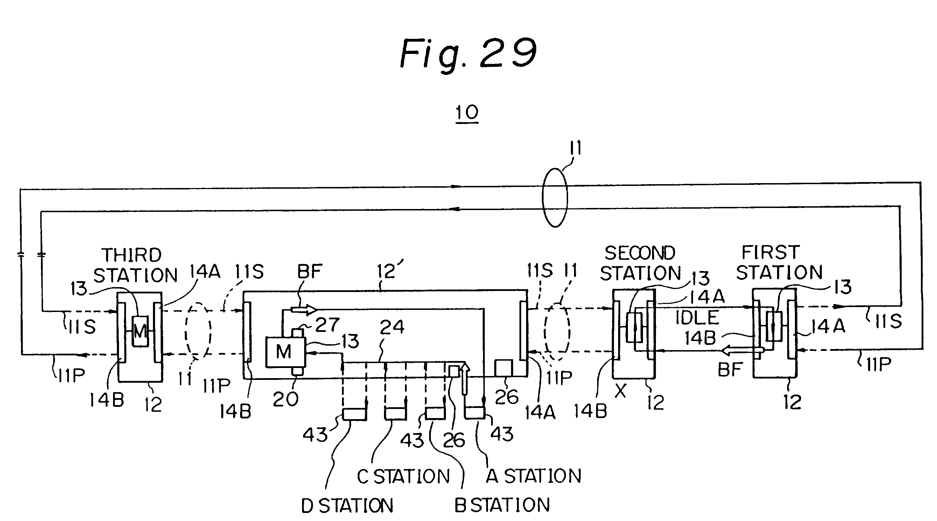

### Step 6 (Fig. 29)

The wire concentrator 12' receives the beacon frame BF in it and stops the transmission. Along with this, it stops the time measuring means 20. Then, according to the regulations, it sends the claim frame and, when receiving this in itself, stops the other station fault time measuring means 27.

The token is restored by this claim frame and the ring operation flag of the MAC layer 13 is turned on, whereupon it is confirmed that the wire concentrator 12' itself is normal, then a test is run to see if the station A to station D under the wire concentrator 12' are normal. For this, first, the self generating loopback flag in the third status indicating means 26 belonging to the station A is cleared from "1" to "0", where the loopback of the station A is removed. Then the station A is incorporated into the loop including the MAC layer 13. At this time, there is a transition in state, so the wire concentrator 12' resets the time measuring means 20 and, at the same time, the beacon frame BF flows along the loop.

On the other hand, the downstream side third station shifts to the test state when the time measuring means 20 runs out of time. Further, receiving this test state, the opposing first station also changes in state and shifts to the WRAP-B state.

Figure 29 is a view showing the sixth state of the wire concentrator, which shows the end of step 6.

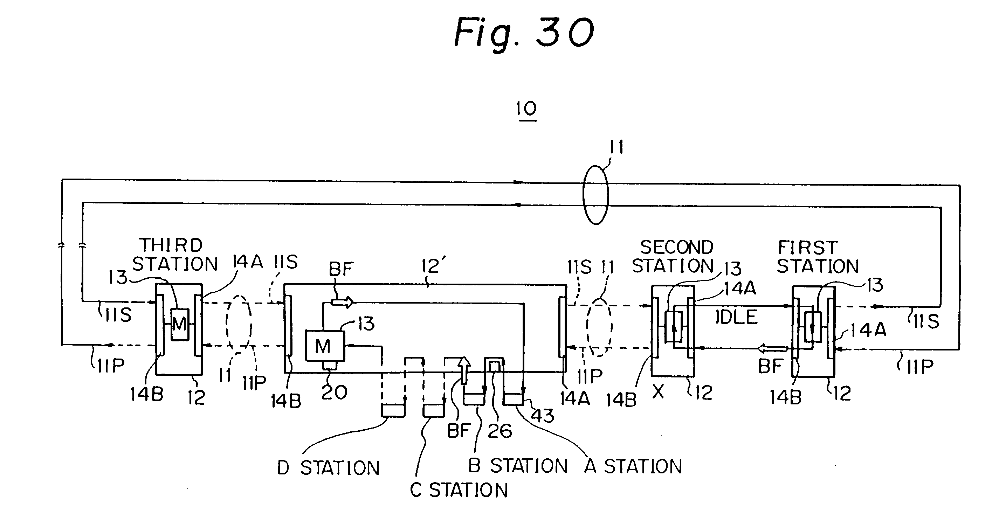

### Step 7 (Fig. 30)

The wire concentrator 12' determines first that the station A is normal because before the time measuring means 20 runs out of time, the beacon frame BF which it itself has sent returns to the MAC layer 13.

The wire concentrator 12' next clears the self generating loopback flag in the third status indicating means 26 of the station B belonging to the downstream side of the station A, from "1" to "0" and releases the loopback of the station B. Here, the station A and the station B are incorporated into the loop including the MAC layer 13. In response to this transition in state, the wire concentrator 12' resets the time measuring means 20 and passes the beacon frame BF into the loop.

Figure 30 is a view showing the seventh state of the wire concentrator 12', which shows the state at the end of step 7.

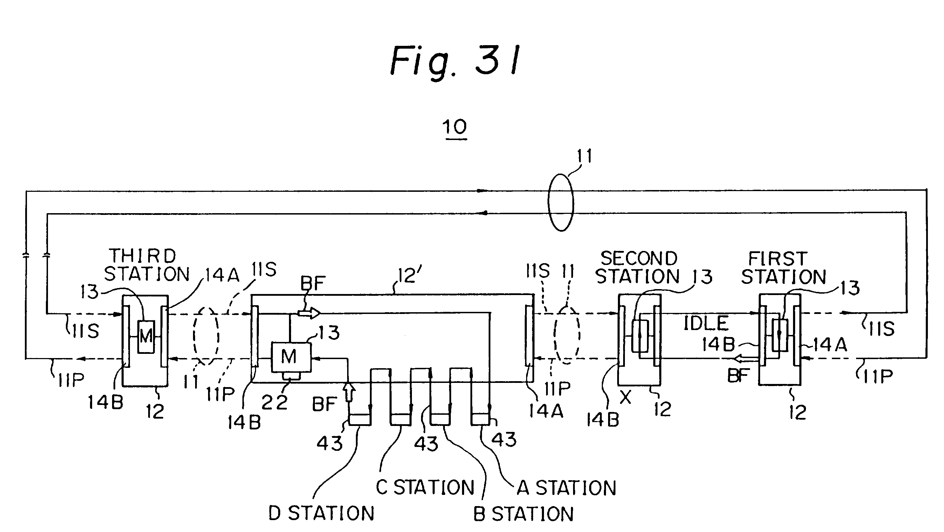

### Step 8 (Fig. 31)

The wire concentrator 12' judges that the station B is also normal since before the time measuring means 20 runs out of time, the beacon frame BF it itself had sent returns to the MAC layer 13.

Below, in the same way, the station C and the station D are successively incorporated into the loop while clearing the self generating loopback flags and it is confirmed that these are also normal.

When the above test is completed, the wire concentrator 12' sets the own station normalcy flag in the second status indicating means 22 from "0" to "1". After this, it shifts to the isolated state.

Figure 31 is a view showing the eighth state of the wire concentrator 12', which shows the state at the end of step 8.

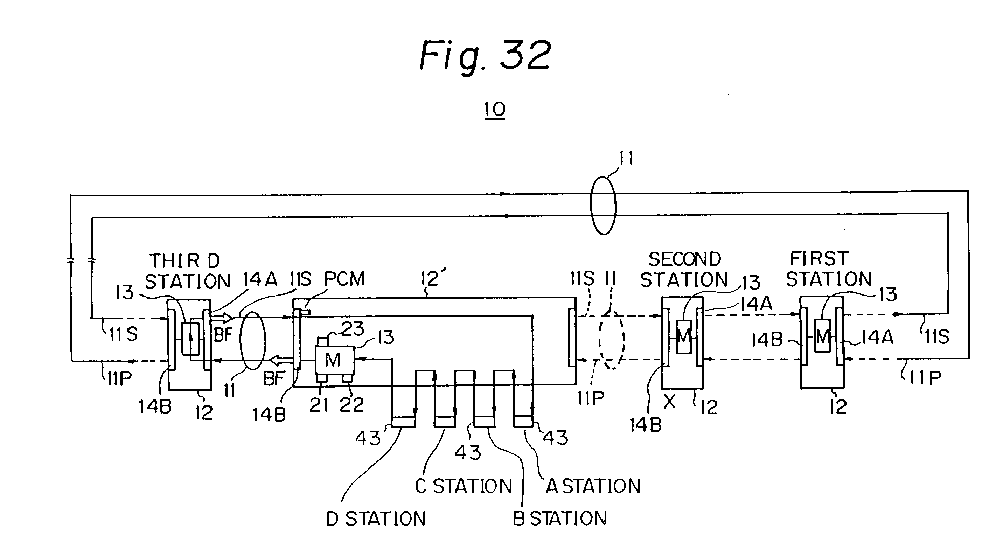

### Step 9 (Fig. 32)

The wire concentrator 12', because the self generating loopback flag in the first status indicating means 21 is set at "1", does not establish the physical connection between the wire concentrator 12' and the second station and thus does not release the loopback at the upstream side physical layer 14A.

On the other hand, the physical connection between the wire concentrator 12' and the third station is rebuilt and this fact is notified to the SCM unit 23 from the PCM attached to the downstream side physical layer 14B in the wire concentrator 12'. Along with this, the wire concentrator 12' refers to the second status indicating means 22 and confirms that the own station normalcy flag in it is set ("1") (at step 8) and then releases the loopback at the downstream side physical layer 14B.

On the other hand, the first station, when shifting to the WRAP-B state at step 6, resets the time measuring means 20 and sends the beacon frame BF, but this is overwritten by the idle symbol at the faulty portion in the second station. Therefore, the time measuring means 20 in the first station runs out of time and them the test state is shifted to. Further, responding to this transition to the test state, the opposing second station also changes in state and shifts to the test state,.

Figure 32 is a view showing the ninth state of the wire concentrator 12', which shows the state at the end of step 9.

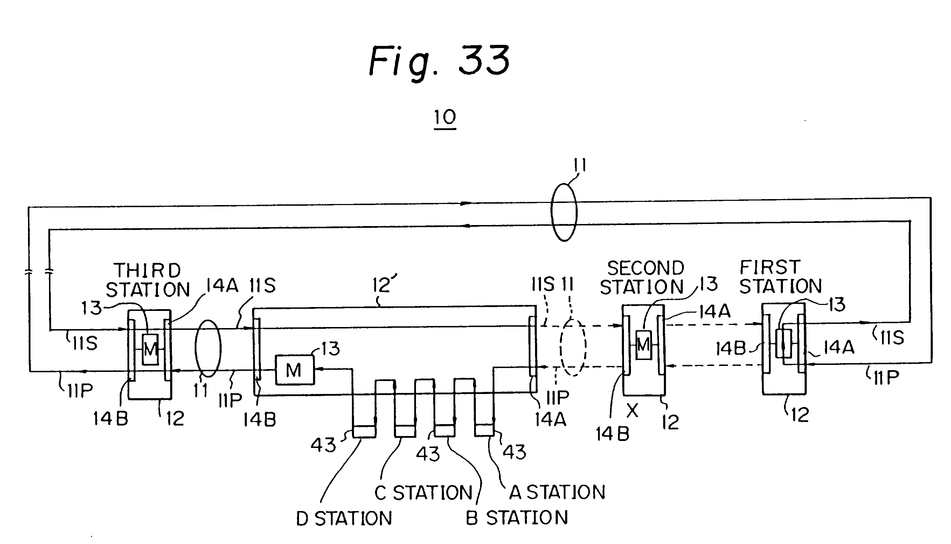

### Step 10 (Fig. 33)

Figure 33 is a view showing the final state of the first station and third station, where the fault is restored among the normal wire concentrator 12', first station, and third station, and thus the ring type LAN is automatically rebuilt among just the same. This corresponds to step 9 at the above-mentioned mode (I).

### (III) Mode in which one of the single attachment stations 43 is the faulty station, and each of the single attachment stations 43 is provided with a time measuring means 20

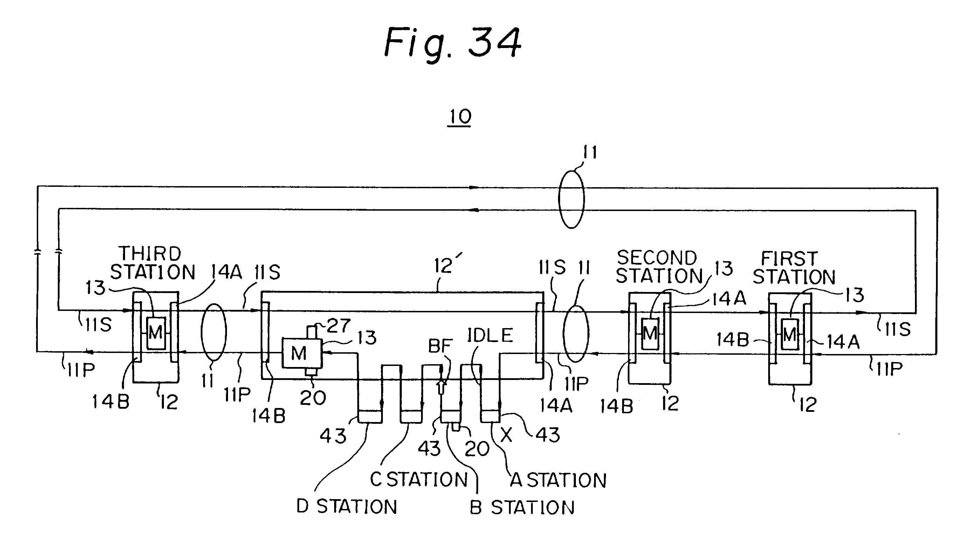

### Step 1 (Fig. 34)

Assume that a fault occurs in the MAC layer 13 of the station A among the plurality of single attachment stations 43 and the station A continuously transmits the idle symbol IDLE.

The station B at the downstream side of the station A detects that the token is lost by the previously mentioned TVX timer running out of time or the TRT timer running out of time, enters the usual claim token processing, and sends the claim frame.

The claim frame also, passes through the primary transmission line 11P to reach the first station and the second station and further reaches the station A, where it is lost. Then, the station B enters the beacon processing in accordance with the regulations.

The station B starts the time measuring means 20 and starts the transmission of the beacon frame BF. When the frame BF makes a round of the primary transmission line 11P and returns to the station A, however, it is overwritten by the idle symbol IDLE and is erased.

In this case, the wire concentrator 12' starts the other station fault time measuring means 27 when starting to receive the beacon frame BF sent from the station B.

Figure 34 is a view showing the first state of the wire concentrator 12', which shows the state at the end of step 1.

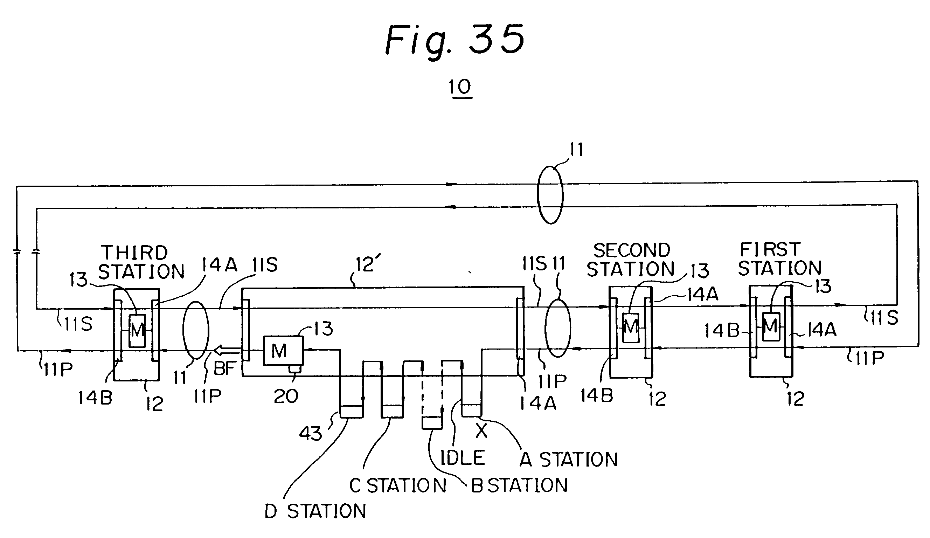

### Step 2 (Fig. 35)

The station B does not receive a returning beacon frame BF, so its time measuring means 20 runs out of time. Further, the station B removes from the primary transmission line 11P wired in the wire concentrator 12' and then the station B shifts to the isolated state.

Responding to this, the wire concentrator 12' automatically bypasses the station B and starts the time measuring means 20. At the same time, the concentrator 12' starts to send the beacon frame BF.

Figure 35 is a view showing the second state of the wire concentrator 12', which shows the state at the end of step 2.

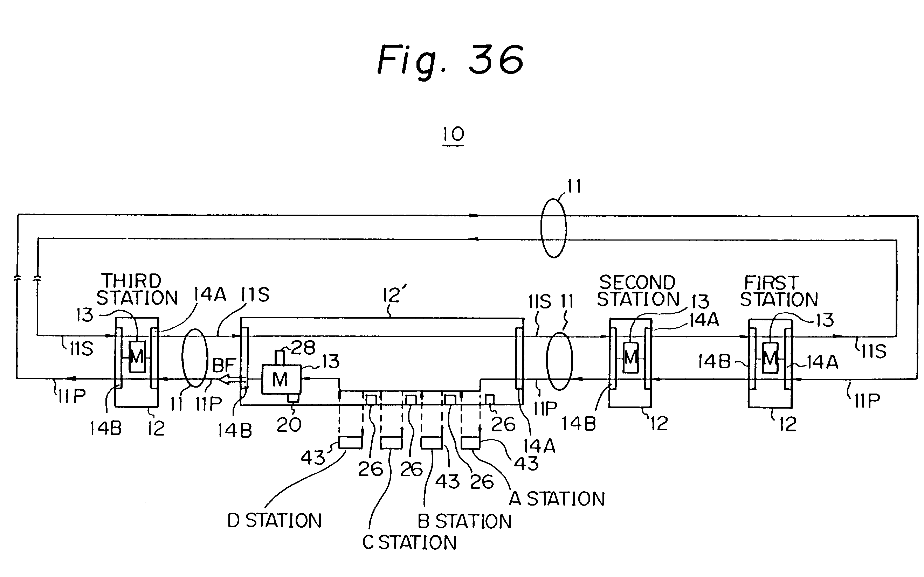

### Step 3 (Fig. 36)

Due to the idle symbol IDLE given from the station A, the TVX timer in station C runs out of time and the claim processing is entered. After entering the claim processing, if the TRT timer in the station C runs out of time, the station C should enter the beacon processing. Before that, however, the time measuring means 20 in the wire concentrator 12' runs out of time.

Therefore, the wire concentrator 12' sets ("1") the time measuring means timeout flag in the fourth status indicating means 28 and simultaneously resets the time measuring means 20.

Here, the wire concentrator 12' self generatingly bypasses all the single attachment stations 43 under it. Therefore, the self generating loopback flags in all the third status indicating means 26 attached to the station A to the station D are set from "0" to "1". Along with this transition in state, the wire concentrator 12' once again starts the transmission of the beacon frame BF.

Figure 36 is a view showing the third state of the wire concentrator 12', which shows the state at the end of step 3.

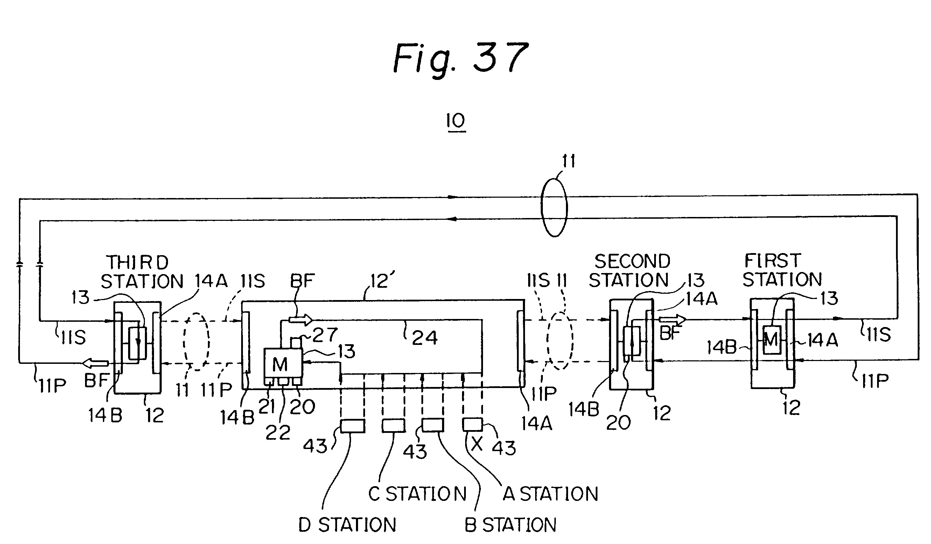

### Step 4 (Fig. 37)

The wire concentrator 12' estimates that the faulty station is one of the single attachment stations 43 under it since the token is restored and the ring operational flag of the MAC layer 13 is turned on.

Therefore, the wire concentrator 12' leaves the self generating loopback flag in the first status indicating means 21 as cleared ("0") and forms a loopback at both the upstream side physical layer 14A and the downstream side physical layer 14B. Here, the wire concentrator 12' clears the own station normalcy flag in the second status indicating means 22 and enters the test stage. Therefore, the wire concentrator 12' forms an inside station turnaround path 24. Next, it resets the time measuring means 20 and starts to send the beacon frame BF to the inside loop 24.

On the one hand, the upstream side adjoining station (second station) is cut in physical connection with the wire concentrator 12', so shifts to the WRAP-A state. Along with this, the time measuring means in the second station is started and, at the same time, transmission of the beacon frame BF is started.

On the other hand, the downstream side adjoining station (third station) also shifts to the WRAP-B state, starts the time measuring means of the third station, and at the same time starts the transmission of the beacon frame BF.

Figure 37 is a view showing the fourth state of the wire concentrator 12', which shows the state at the end of step 4.

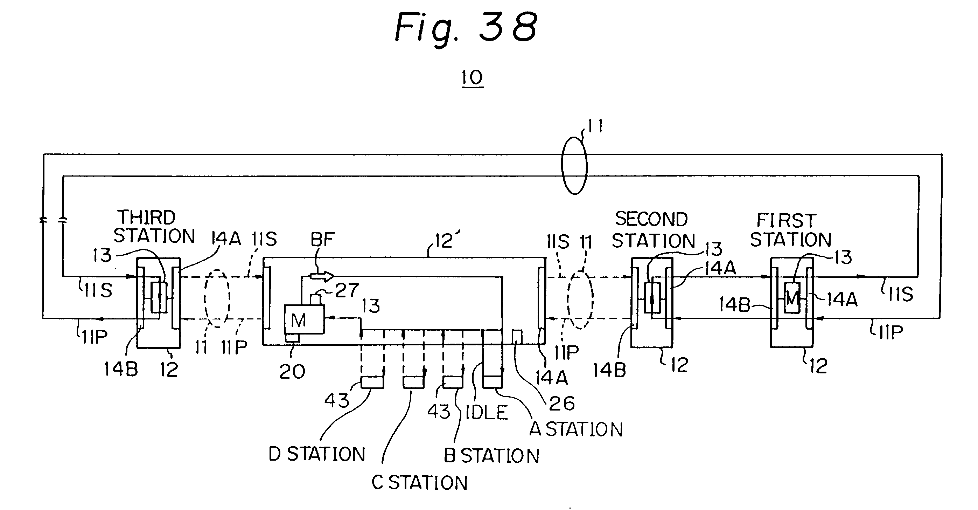

### Step 5 (Fig. 38)

The wire concentrator 12' receives the beacon frame BF which it had itself sent and stops the transmission. At the same time as this, it stops the time measuring means 20. Next, it sends the claim frame and when once again receiving this, stops the other station fault time measuring means 27.

Here, the wire concentrator 12' confirms by the fact that the token is restored and the ring operational flag of the MAC layer 13 is made on, that the wire concentrator 12' itself is normal.

After this, a test is performed in the station A to station D under the concentrator 12'. First, the self generating loopback flag in the third status indicating means 26 of the upstream side station A is cleared from "1" to "0" and the loopback is released. Along with this, the wire concentrator 12' starts the time measuring means 20 and simultaneously starts sending the beacon frame BF.

Figure 38 is a view showing the fifth state of the wire concentrator 12', which shows the state at the end of step 5.

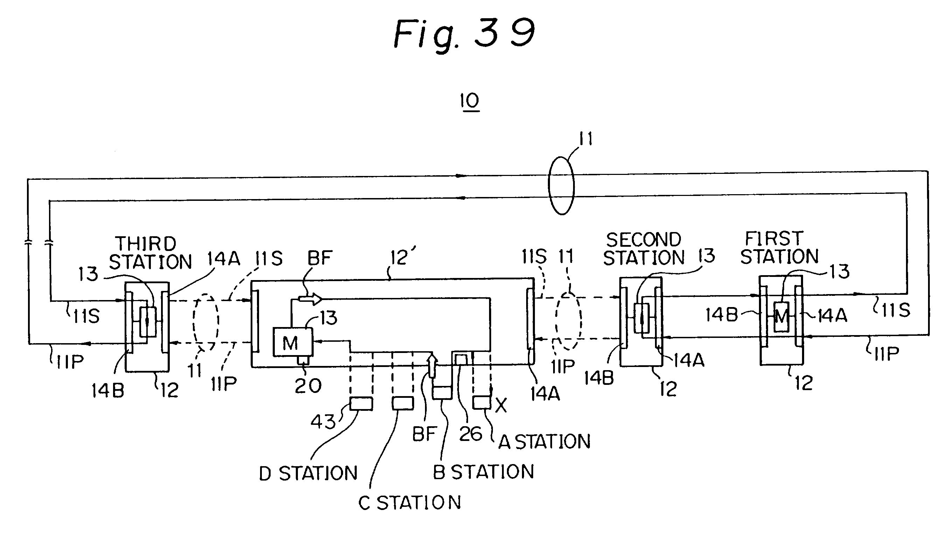

### Step 6 (Fig. 39)

Only the idle symbol from the station A returns to the MAC layer 13 in the wire concentrator 12' and thus the time measuring means 20 runs out of time. Therefore, the wire concentrator 12' realizes that the station A is the faulty station and removes the station A from the loop to prevent the fault from being spread in the loop as a whole. Next, it releases the self generating loopback of the station B at the downstream side and incorporates the station B in the loop. At this time, the self generating loopback flag of the third status indicating means 26 is cleared from "1" to "0". The wire concentrator 12', due to the transition in state, starts the time measuring means 20 and at the same time starts sending the beacon frame BF.

Figure 39 is a view showing the sixth state of the wire concentrator 12', which shows the state at the end of step 6.

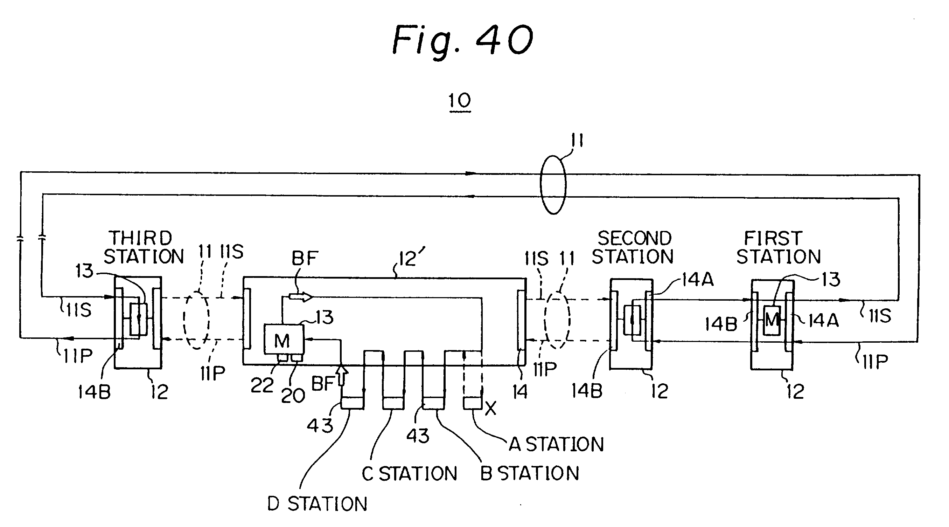

### Step 7 (Fig. 40)

The wire concentrator 12' detects that the beacon frame BF has returned before the time measuring means 20 runs out of time and judges that the station B is normal.

Below, a test is similarly run in the station C and the station D to confirm that these are also normal.

Here, the test is completed and the own station normalcy flag in the second status indicating means 22 is set ("1"), so the wire concentrator 12' shifts to the isolated state.

Figure 40 is a view showing the seventh state of the wire concentrator 12', which shows the state at the end of step 7.

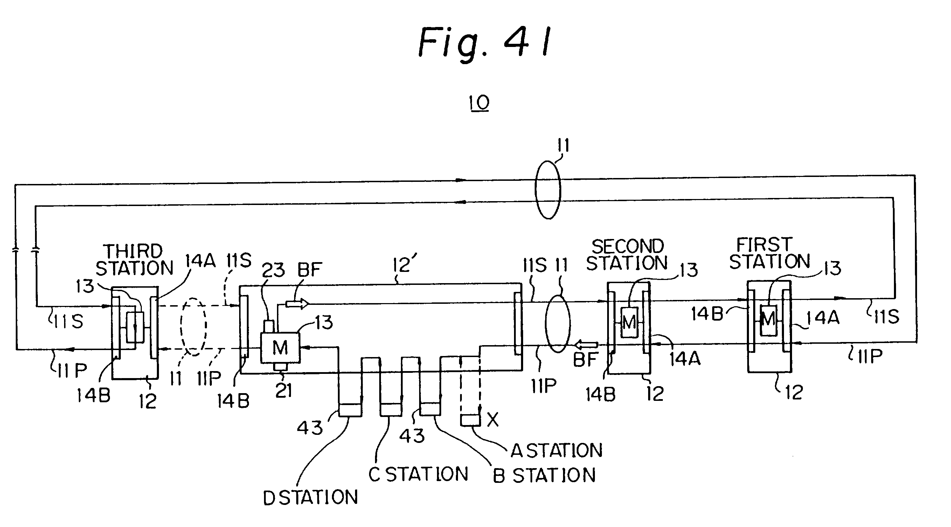

### Step 8 (Fig. 41)

First, the physical connection between the wire concentrator 12' and its upstream side station is rebuilt the fact is notified to the SCM unit 23. Here, reference is made to the first status indicating means 21 to learn that the self generating loopback flag is cleared ("0"), so the loopback at the upstream side physical layer 14A is released.

Figure 41 is a view showing the eighth state of the wire concentrator 12', which shows the state at the end of step 8.

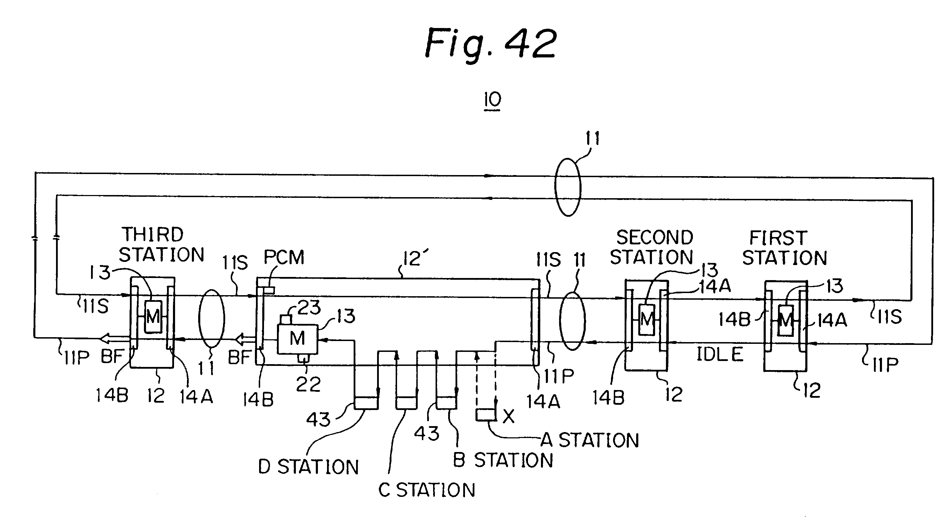

### Step 9 (Fig. 42)

The physical connection between the wire concentrator 12' and the third station is rebuilt. This fact is notified to the SCM unit 23 from the PCM attached to the downstream side physical layer 14B in the wire concentrator 12'.

The wire concentrator 12' refers to the second status indicating means 22 and if it confirms that the own station normalcy flag is set ("1"), releases the loopback at the downstream side physical layer 14B.

Figure 42 is a view showing the ninth state of the wire concentrator 12', where the ring type LAN is rebuilt among all the stations except the faulty station, i.e., the station A.

### (IV) Mode in which one of the single attachment stations 43 is the faulty station, and each of the single attachment stations 43 is not provided with a time measuring means 20

In this mode (IV), the figures for the above mode (III) are commonly used.

### Step 1 (Fig. 34)

This corresponds to step 1 (Fig. 34) of the above mode (III), but in the mode (IV), the station B does not have a time measuring means 20, so continues to send the beacon frame BF.

At this time, the wire concentrator 12' starts the other station fault time measuring means 27 when beginning to receive the beacon frame BF (27 in Fig. 34).

### Step 2 (Fig. 26)

However, since the beacon frame BF continues to be sent from the station B, the other station fault time measuring means 27 runs out of time.

Then, the physical connection between the second station and the third station is cut and, further, all the station A to station D are bypassed and the test state is entered. Therefore, an inside station turnaround path 24 is formed. Then, the MAC layer 13 starts to send the beacon frame BF.

### Step 3 (Fig. 38)

This is exactly the same as step 5 of the mode (III).

### Step 4 (Fig. 39)

This is exactly the same as step 6 of the mode (III).

### Step 5 (Fig. 40)

This is exactly the same as step 7 of the mode (III).

### Step 6 (Fig. 41)

This is exactly the same as step 8 of the mode (III).

### Step 7 (Fig. 42)

This is exactly the same as step 9 of the mode (III).

### (V) Mode in which upstream side adjoining station 12 of wire concentrator 12' is faulty station, and each of the single attachment stations 43 is not provided with a time measuring means 20

Since the idle symbol IDLE is continued to be received from the second station, the station A just downstream of it starts to send the beacon frame BF.

The station A, however, does not have a time measuring means 20, so the beacon frame BF continues to be sent from the station A even after the time measuring means 20 has run out of time.

This state is completely equivalent to step 1 in the above mode (IV). The station B in step 1 in the mode (IV), however, should be read as station A. This is because the station B at step 1 in the mode (IV) is under exactly the same circumstances as the station A in the mode (V).

Therefore, the series of steps in the mode (V) match those of the mode (IV).

As explained above, according to the present invention, it is possible to quickly detect logical faults in the MAC layer, which had been difficult to detect, and it is possible to automatically restore faults and rebuild the ring type LAN, thus contributing tremendously to the improvement of the reliability of a LAN.

Reference signs in the claims are intended for better understanding and shall not limit the scope.

## Claims

1. A fault processing system provided in a ring type LAN, comprising a double loop ring type transmission line (11) and a plurality of stations (12), including a wire concentrator (12'), inserted in series in the ring type transmission line (11), wherein when a logical fault occurs in any of the said plurality of stations, said fault processing system detects the source of the logical fault and repairs the fault,
said fault processing system having a time measuring means (20) provided in each of said stations (12),
said fault processing system operating in the following manner:
(i) detects the fact that a transmission time of a fault notifying frame (BF) sent from a station (12) detecting the occurrence of a fault, adjoining the station which is the source of the fault at a downstream side, has run out at said time measuring means (20), thereby allowing said adjoining station to estimate that a fault has occurred at an adjoining station at an upstream side,
(ii) forms a loopback at an adjoining station (12) sending said.fault notifying frame (BF) at its upstream side, and
stops a fault signal sent from said faulty station at the upstream side of the adjoining station (12) sending the said fault notifying frame (BF).

2. A ring type LAN having a fault processing system as set forth in claim 1, wherein:
said fault processing system has said adjoining station (12) send said fault notifying frame (BF) again and, when detecting that the time has run out at the said time measuring means (20), forms a loopback at the downstream side as well,
so that said adjoining station (12) is removed from said ring type transmission line (11).

3. A ring type LAN having a fault processing system as set forth in claim 2, wherein:
said fault processing system has a downstream side station (12), facing at the upstream side said to adjoining station (12), form a loopback at the upstream side of said downstream side station (12),
so that said adjoining station (12) is removed from said ring type transmission line (11) to execute the fault processing.

4. A ring type LAN having a fault processing system as set forth in claim 3, wherein:
said fault processing system detects if there is a fault in said adjoining station (12) removed from said ring type transmission line (11).

5. A ring type LAN having a fault processing system as set forth in claim 4, wherein:
said fault processing system has said adjoining station (12) with said loopbacks formed at the downstream side and upstream side form an inside station turnaround path (24) in it,
has it transmit and receive a fault notifying frame (BF) by itself through said inside station turnaround path (24),
has it determine if the fault notifying frame sent by itself is received normally so as to detect if there is a fault in itself, and
when it is detected that there is no fault in it, has the said adjoining station (12) again incorporated into said ring type transmission line (11).

6. A ring type LAN having a fault processing system as set forth in claim 5, wherein:
said fault processing system has a first status indicating means (21) provided in each of said stations (12),
detects when a transmission time of said fault notifying frame (BF) sent from said station (12) adjoining said faulty station at the downstream side runs out at said time measuring means (20) and then forms a loopback at the upstream side of said adjoining station,
simultaneously with the formation of the loopback, sets a self generating loopback flag showing that it has formed a loopback by itself in said first status indicating means (21), and
releases the loopback formed at the upstream side when said self generating loopback flag is cleared.

7. A ring type LAN having a fault processing system as set forth in claim 6, wherein:
said fault processing system has a second status indicating means (22) provided in each of said stations (12),
has each said station (12) form a test state for inspecting by itself if it is normal after forming loopbacks at said upstream side and downstream side,
when normal, has it set an own station normalcy flag in said second status indicating means (22), and
when said own station normalcy flag is set and a self generating loopback flag of said first status indicating means (21) is cleared, has it release the loopback formed at the upstream side and rebuild the ring type LAN, thereby to repair the fault.

8. A ring type LAN having a fault processing system as set forth in claim 1, wherein:
said fault processing system has said adjoining station (12) refer to an existing station configuration management unit (23) in said adjoining station and when, as a result of the reference, it learns that said adjoining station is in a THRU-A state, has a physical layer (14A) at the upstream side form self generatingly said loopback, the loopback at the physical layer (14A) not being released so long as the self generating loopback flag is set.

9. A ring type LAN having a fault processing system as set forth in claim 8, wherein:
said fault processing system cuts, when said loopback is formed self generatingly at the upstream side of said adjoining station (12), a physical connection with a station (12) estimated to be the source of the fault and shifts said adjoining station (12) to a WRAP-B state.

10. A ring type LAN having a fault processing system as set forth in claim 7, wherein:
said fault processing system has each of said stations (12) set the own station normalcy flag when it confirms by itself that it is operating normally and also set it when a token is restored at a media access controller (MAC) layer (13) and
on the other hand clear it when a physical connection with an upstream side station is cut and clear it when said ring type LAN is set up.

11. A ring type LAN having a fault processing system as set forth in claim 10, wherein:
said fault processing system has each of said stations (12) clear the self generating loopback flag in said first status indicating means (21) and maintains as it is if a loopback is passively formed at an upstream side physical layer (14A) of said station due to a physical connection from an upstream side station being cut.

12. A ring type LAN having a fault processing system as set forth in claim 11, wherein:
said fault processing system has said station (12) estimated to be the source of the fault estimate that the fault exists in it and not release said passive loopback if the self generating loopback flag in the said first status indicating means (21) remains as cleared ("0") and said own station normalcy flag remains as cleared ("0").

13. A ring type LAN having a fault processing system as set forth in claim 9, wherein:
said fault processing system has each of said stations (12) form a test state by an inside station turnaround loop (24),
continuously send said fault notifying frame (BF) to said loop and, when a token is restored during the transmission, recognize that it is normal, and
set ("1") an own station normalcy flag in said second status indicating means (22),
so as to shift said station in an isolated state and place it in a standby state where it can be moved to a WRAP-A state or a WRAP-B state at any time.

14. A ring type LAN having a fault processing system as set forth in claim 12, wherein:
said fault processing system has each of said stations (12) refer to its station configuration management unit (23) and, when learning as a result of the reference that said station is in a WRAP-B state, form a passive loopback at the downstream side physical layer (14B),
cut the physical connection with the downstream side station, and
form an inside station turnaround loop (24) and clear ("0") the own station normalcy flag of said second status indicating means (22), thereby to enter said test state.

15. A ring type LAN having a fault processing system as set forth in claim 14, wherein:
said fault processing system has the faulty station (12) detect that the physical connection with an upstream side station (12) has been cut by this station (12) and
leave the self generating loopback flag of said first status indicating means (21) as cleared ("0") and form automatically a loopback at the upstream side of said faulty station (12) to remove said faulty station (12) from said ring type transmission line (11), thereby to enter the test state.

16. A ring type LAN having a fault processing system as set forth in claim 15, wherein:
said fault processing system has said faulty station (12) reject a physical connection with the upstream side and downstream side adjoining stations when detecting there is a fault by said test and
places each physical layer of the said rejected upstream side and downstream side adjoining stations in a reject state.

17. A ring type LAN having a fault processing system as set forth in claim 16, wherein:
said fault processing system has said downstream side adjoining station (12) of said faulty station clear ("0") for the first time under said reject state the self generating loopback flag which has been set ("1") in its first status indicating means (21).

18. A ring type LAN having a fault processing system as set forth in claim 1, wherein:
said stations (12) and said wire concentrator (12') are formed as dual attachment stations,
said wire concentrator (12') has a plurality of single attachment stations (43) inserted in series in said ring type transmission line (11) under it, and
said fault processing system has the said wire concentrator (12') form bypasses with respect to the single attachment stations so as to perform said fault processing.

19. A ring type LAN having a fault processing system as set forth in claim 18, wherein:
said fault processing system has said wire concentrator (12') detect if it has received said fault notifying frame (BF) sent from stations (12, 43) other than itself,
when it receives said fault notifying frame (BF), measure a reception time during which it is received, and
when said reception time exceeds a predetermined time and thus the time runs out, inspect the normalcy of the said wire concentrator (12') itself and the said single attachment stations (43) under it to detect the said faulty station.

20. A ring type LAN having a fault processing system as set forth in claim 19, wherein:
said fault processing system has said wire concentrator (12') measure a transmission time during which it sends said fault notifying frame (BF),
detect if said transmission time exceeds a predetermined time and thus the time has run out,
when said transmission time has run out, remove all said single attachment stations (43) under said wire concentrator (12') from it,
after removal, send once again said fault notifying frame (BF) from said wire concentrator (12') and once again measure the said transmission time, and
in accordance with whether said once again measured transmission time runs out, determine that the upstream side adjoining dual attachment station (12) or single attachment station (43) is said faulty station.

21. A ring type LAN having a fault processing system as set forth in claim 20, wherein:
said fault processing system has said wire concentrator (12') inspect the normalcy of said single attachment stations (43) under it by removing for a while all the single attachment stations (43) from the wire concentrator (12'),
set each self generating loopback flag in the single attachment stations (43) to show that they have been removed, and
clear the self generating loopback flags only for the single attachment stations (43) which are confirmed to be normal and inhibiting the release of the bypass of the single attachment stations (43) for which the self generating loopback flags have remained set, thereby to rebuild the ring type LAN.

22. A ring type LAN having a fault processing system as set forth in claim 21, wherein:
said fault processing system has said wire concentrator (12') form loopbacks with respect to the upstream side and downstream side adjoining dual attachment stations (12) when the concentrator detects that a fault has occurred,
remove from said wire concentrator (12') all said single attachment stations (43) under it,
inspect the normalcy of said single attachment stations (43) and release the removal from the wire concentrator (12') only for the normal ones,
after the inspection of the normalcy has been completed, release the loopback with respect to said upstream side adjoining dual attachment station (12), and
when said wire connector (12') has not detected a fault, release the loopback for the downstream side adjoining dual attachment station (12) as well, thereby to rebuild the ring type LAN.

23. A ring type LAN having a fault processing system as set forth in claim 19, wherein:
said fault processing system has said wiring concentrator (12') be provided with an other station fault time measuring means (27), which other station fault time measuring means (27) starts measuring a reception time when receiving said fault notifying frame (BF) from an upstream side station (12) of said wire concentrator (12') or any of said single attachment stations (43) and stops the measurement when receiving a claim frame.

24. A ring type LAN having a fault processing system as set forth in claim 23, wherein:
said fault processing system inspects if said wire concentrator (12') is normal when said other station fault time measuring means (27) has stopped measurement and
inspects, if said single attachment stations (43) are normal, if it is normal.

25. A ring type LAN having a fault processing system as set forth in claim 23, wherein:
said fault processing system judges that the fault has occurred in one of said single attachment stations (43) when said other station fault time measuring means (27) does not stop even when the predetermined time passes but runs out of time and shifts said single attachment stations (43) to the test state.

26. A ring type LAN having a fault processing system as set forth in claim 25, wherein:
said fault processing system judges that there is no time measuring means (20) in said single attachment stations (43) when said other station fault time measuring means (27) has run out of time.

27. A ring type LAN having a fault processing system as set forth in claim 25, wherein:
said fault processing system cuts the physical connection with the upstream side and downstream side stations (12) of the wire concentrator (12') when said other station fault time measuring means (27) has run out of time, bypasses all the said single attachment stations (43), and places said wire concentrator (12') in a test state.

28. A ring type LAN having a fault processing system as set forth in claim 21, wherein:
said fault processing system has said wiring concentrator (12') provided with a third status indicating means (26) corresponding to each of the single attachment stations (43) and
sets said self generating loopback flag in said third status indicating means (26).

29. A ring type LAN having a fault processing system as set forth in claim 28, wherein:
said fault processing system sets said self generating loopback flag in said third status indicating means (26) when said time measuring means (20) in said wiring concentrator (12') runs out of time or said wiring concentrator (12') enters the test state and makes it impossible for the self generating loopback flag to be cleared autonomously from said single attachment stations (43) when said self generating loopback flag is set.

30. A ring type LAN having a fault processing system as set forth in claim 29, wherein:
said fault processing system inspects the normalcy of said wiring concentrator (12') in a state when all the said self generating loopback flags are set and
when it is normal, clears the self generating loopback flags of the said single attachment stations (43) from "1" to "0" to release the bypasses and successively incorporates the stations into said wire concentrator (12').

31. A ring type LAN having a fault processing system as set forth in claim 30, wherein:
said fault processing system places said single attachment stations in the test state to confirm that the single attachment stations are normal before clearing the said self generating loopback flags corresponding to said single attachment stations (43).

32. A ring type LAN having a fault processing system as set forth in claim 22, wherein:
said fault processing system has said wiring concentrator (12') provided with a fourth status indicating means (28),
has the fourth status indicating means (28) set a time measuring means timeout flag when said time measuring means (20) in said wiring concentrator (12') runs out of time and, simultaneously with that setting, clears said time measuring means (20) and bypasses all said single attachment stations (43), and
when said time measuring means (20) once again runs out of time, judges that the fault is at not the single attachment stations under the wiring concentrator (12'), but at the upstream side station (12) of the said wiring concentrator (12').

## Patentansprüche

1. Fehlerbearbeitungssystem, welches in einem Ringtyp-LAN vorgesehen ist, welches eine Doppelringtyp-Übertragungsleitung (11) und mehrere Stationen (12) aufweist, mit einem Leitungskonzentrator (12'), der in Reihenschaltung in der Ringtyp-Übertragungsleitung (11) vorgesehen ist, wobei beim Auftreten eines logischen Fehlers in einer der mehreren Stationen das Fehlerbearbeitungssystem die Quelle des logischen Fehlers feststellt und den Fehler beseitigt,
das Fehlerbearbeitungssystem eine Zeitmeßvorrichtung (20) aufweist, die in jeder der Stationen (12) vorgesehen ist,
und das Fehlerbearbeitungssystem auf folgende Weise arbeitet:
(i) es erfaßt die Tatsache, daß eine Übertragungszeit eines Fehlernachrichtenblockes (BF), der von einer Station (12) ausgesandt wird, welche das Auftreten eines Fehlers feststellt, neben der Station, welche die Quelle des Fehlers auf der stromabwärtigen Seite darstellt, abgelaufen ist, in der Zeitmeßvorrichtung (20), wodurch die benachbarte Station ermitteln kann, daß ein Fehler in einer benachbarten Station auf der stromaufwärtigen Seite aufgetreten ist,
(ii) es bildet eine Rückschleife an einer benachbarten Station (12), welche den Fehlernachrichtenblock (BF) an ihrer stromaufwärtigen Seite aussendeT, und
es stoppt ein Fehlersignal, welches von der fehlerhaften Station an der stromaufwärtigen Seite der benachbarten Station (12) ausgesandt wird, welche den Fehlernachrichtenblock (BF) aussendet.

2. Ringtyp-LAN mit einem Fehlerbearbeitungssystem nach Anspruch 1, wobei:
das FEhlerbearbeitungssystem die benachbarte Station (12) den Fehlernachrichtenblock (BF) erneut aussenden läßt, und dann, wenn an der Zeitmeßvorrichtung (20) festgestellt wird, daß die Zeit abgelaufen ist, auch an der stromabwärtigen Seite eine Rückschleife bildet,
so daß die benachbarte Station (12) aus der Ringtyp-Übertragungsleitung (11) entfernt wird.

3. Ringtyp-LAN mit einem Fehlerbearbeitungssystem nach Anspruch 2, wobei:
das Fehlerbearbeitungssystem eine Station (12) an der stromabwärtigen Seite, welche an der stromaufwärtigen Seite der benachbarten Station (12) gegenüberliegt, eine Rückschleife an der stromaufwärtigen Seite der Station (12) an der stromabwärtigen Seite ausbilden läßt,
so daß die benachbarte Station (12) aus der Ringtyp-Übertragungsleitung (11) entfernt wird, um die Fehlerbearbeitung durchzuführen.

4. Ringtyp-LAN mit einem Fehlerbearbeitungssystem nach Anspruch 3, wobei:
das Fehlerbearbeitungssystem feststellt, ob ein Fehler in der benachbarten Station (12) vorhanden ist, die aus der Ringtyp-Übertragungsleitung (11) entfernt wurde.

5. Ringtyp-LAN mit einem Fehlerbearbeitungssystem nach Anspruch 4, wobei:
das Fehlerbearbeitungssystem die benachbarte Station (12) mit den an der stromabwärtigen Seite und der stromaufwärtigen Seite ausgebildeten Rückschleifen in ihr eine Wartezeitschleife (24) innerhalb der Station ausbilden läßt,
sie zum Aussenden und Empfangen eines Fehlernachrichtenblocks (BF) durch sie selbst durch die Wartezeitschleife (24) innerhalb der Station veranlaßt,
sie feststellen läßt, ob der von ihr selbst ausgesandte Fehlernachrichtenblock normal empfangen wird, um so festzustellen, ob in ihr selbst ein Fehler auftritt, und
wenn festgestellt wird, daß in ihr kein Fehler vorhanden ist, die erneute Einbeziehung der benachbarten Station (12) in die Ringtyp-Übertragungsleitung (11) veranlaßt.

6. Ringtyp-LAN mit einem Fehlerbearbeitungssystem nach Anspruch 5, wobei:
das Fehlerbearbeitungssystem eine erste Statusanzeigevorrichtung (21) aufweist, die in jeder der Stationen (12) vorgesehen ist,
feststellt, wenn eine Übertragungszeit des Fehlernachrichtenblocks (BF), der von der Station (12) neben der fehlerhaften Station an der stromabwärtigen Seite ausgesandt wird, abläuft, in der Zeitmeßvorrichtung (20), und dann eine Rückschleife an der stromaufwärtigen Seite der benachbarten Station ausbildet,
gleichzeitig mit der Ausbildung der Rückschleife eine selbsterzeugte Rückschleifenmarke setzt, welche anzeigt, daß das Fehlerbearbeitungssystem selbst eine Rückschleife in der ersten Statusanzeigevorrichtung (21) ausgebildet hat, und
die an der stromaufwärtigen Seite ausgebildete Rückschleife freigibt, wenn die selbsterzeugte Rückschleifenmarke gelöscht wird.

7. Ringtyp-LAN mit einem Fehlerbearbeitungssystem nach Anspruch 6, wobei:
das Fehlerbearbeitungssystem eine zweite Statusanzeigevorrichtung (22) aufweist, die in jeder der Stationen (12) vorgesehen ist,
jede Station (12) zur Ausbildung eines Versuchszustandes veranlaßt, um selbst zu untersuchen, ob sie normal arbeitet, nachdem Rückschleifen an der stromaufwärtigen Seite und der stromabwärtigen Seite ausgebildet wurden,
im Normalzustand die Station zur Einstellung einer Normalitätsmarke der eigenen Station in der zweiten Statusanzeigevorrichtung (22) veranlaßt, und
wenn die Normalitätsmarke der eigenen Station gesetzt und eine selbsterzeugte Rückschleifenmarke der ersten Statusanzeigevorrichtung (21) gelöscht ist, die Station zur Freigabe der Rückschleife veranlaßt, die an der stromaufwärtigen Seite ausgebildet wurde, und zum erneuten Aufbau des Ringtyps-LAN, um hierdurch den Fehler zu reparieren.

8. Ringtyp-LAN mit einem Fehlerbearbeitungssystem nach Anspruch 1, wobei:
das Fehlerbearbeitungssystem die benachbarte Station (12) auf eine Management-Einheit (23) für die KOnfiguration vorhandener Stationen in der benachbarten Station Bezug nehmen läßt, und dann, wenn diese erfährt, daß sich die benachbarte Station in einem Zustand THRU-A befindet, eine physische Schicht (14A) an der stromaufwärtigen Seite zur eigenen Erzeugung der Rückschleife veranlaßt, wobei die Rückschleife an der physischen Schicht (14A) so lange nicht freigegeben wird, wie die selbsterzeugte Rückschleifenmarke gesetzt ist.

9. Ringtyp-LAN mit einem Fehlerbearbeitungssystem nach Anspruch 8, wobei:
das Fehlerbearbeitungssystem dann, wenn die Rückschleife selbsterzeugt an der stromaufwärtigen Seite der benachbarten Station (12) ausgebildet wird, eine physische Verbindung mit einer Station (12) abtrennt, die als Quelle des Fehlers angenommen wird, und die benachbarte Station (12) in einen Zustand WRAP-B verschiebt.

10. Ringtyp-LAN mit einem Fehlerbearbeitungssystem nach Anspruch 7, wobei:
das Fehlerbeareitungssystem jede der Stationen (12) zur Einstellung der Normalitätsmarke der eigenen Station veranlaßt, wenn sie selbst bestätigt, daß sie normal arbeitet und sie auch zur Einstellung dieser Marke veranlaßt, wenn ein Token an einer Medienzugriffssteuerungsschicht (MAC-Schicht) (13) wiederhergestellt wird, und
andererseits sie zum Löschen veranlaßt, wenn eine physische Verbindung mit einer Station auf der stromaufwärtigen Seite abgetrennt wird, und zum Löschen veranlaßt, wenn das Ringtyp-LAN eingerichtet wird.

11. Ringtyp-LAN mit einem Fehlerbearbeitungssystem nach Anspruch 10, wobei:
das Fehlerbearbeitungssystem jede der Stationen (12) die selbst erzeugte Rückschleifenmarke in der ersten Statusanzeigevorrichtung (21) löschen läßt, und sie unverändert läßt, wenn eine Rückschleife passiv an einer pysischen Schicht (14A) auf der stromaufwärtigen Seite der Station in Folge der Tatsache ausgebildet wird, daß eine physische Verbindung von einer Station an der stromaufwärtigen Seite abgeschnitten wird.

12. Ringtyp-LAN mit einem Fehlerbearbeitungssystem nach Anspruch 11, wobei:
das Fehlerbearbeitungssystem die Station (12), die als Quelle des Fehlers angenommen wird, annehmen läßt, daß der Fehler in ihr existiert, und nicht die passive Rückschleife freigeben läßt, wenn die selbsterzeugte Rückschleifenmarke in der ersten Statusanzeigevorrichtung (21) wie gelöscht ("0") bleibt, und die Normalitätsmarke der eigenen Station wie gelöscht ("0") bleibt.

13. Ringtyp-LAN mit einem Fehlerbearbeitungssystem nach Anspruch 9, wobei:
das Fehlerbearbeitunssystem jede der Stationen (12) zur Ausbildung eines Versuchs zustandes durch eine Wartezeitschleife (24) innerhalb einer Station veranlaßt,
kontinuierlich den Fehlernachrichtenblock (BF) an die Schleife schickt, und dann, wenn ein Token während der Übertragung hergestellt wird, erkennt, daß sie normal arbeitet, und
den Wert ("1") einer Normalitätsmarke der eigenen Station in der zweiten Statusanzeigevorrichtung (22) einstellt,
um die Station in einen isolierten Zustand zu verschieben und sie in einen Bereitschaftszustand zu versetzen, in welchem sie in einen Zustand WRAP-A oder einen Zustand WRAP-B jederzeit versetzt werden kann.

14. Ringtyp-LAN mit einem Fehlerbearbeitungssystem nach Anspruch 12, wobei:
das Fehlerbearbeitungssystem jede der Stationen (12) auf ihre Stationskonfigurationsmanagement-Einheit (23) bezugnehmen läßt, und dann, wenn als Ergebnis der Bezugnahme erkannt wird, daß die Station sich in einem Zustand WRAP-B befindet, die Station zur Ausbildung einer passiven Rückschleife an der physischen Schicht (14B) an der stromabwärtigen Seite veranlaßt,
die physische Verbindung mit der Station an der stromabwärtigen Seite unterbricht, und
eine Wartezeitschleife (24) innerhalb der Station ausbildet, und die Normalitätsmarke der eigenen Station der zweiten Statusanzeigevorrichtung (22) löscht ("0"), um so in den Versuchs zustand zu gelangen.

15. Rintyp-LAN mit einem Fehlerbearbeitungssystem nach Anspruch 14, wobei:
das Fehlerbearbeitungssystem die fehlerhafte Station (12) feststellen läßt, daß die physische Verbindung mit einer Station (12) auf der stromaufwärtigen Seite von dieser Station (12) unterbrochen wurde, und
die selbsterzeugte Rückschleifenmarke der ersten Statusanzeigevorrichtung (21) wie gelöscht ("0") läßt, und automatisch eine Rückschleife an der stromaufwärtigen Seite der fehlerhaften Station (12) erzeugen läßt, um die fehlerhafte Station (12) aus der Ringtyp-Übertragungsleitung (11) zu entfernen,
um so in den Versuchszustand zu gelangen.

16. Ringtyp-LAN mit einem Fehlerbearbeitungssystem nach Anspruch 15, wobei:
das Fehlerbearbeitungssystem die fehlerhafte Station (12) eine physische Verbindung mit den benachbarten Stationen auf der stromaufwärtigen Seite und der stromabwärtigen Seite zurückweisen läßt, wenn festgestellt wird, durch den Versuch, daß ein Fehler vorhanden ist, und
jede physische Schicht der zurückgewiesenen benachbarten Stationen an der stromaufwärtigen Seite und der stromabwärtigen Seite in einen Zurückweisungszustand versetzt.

17. Ringtyp-LAN mit einem Fehlerbearbeitungssystem nach Anspruch 16, wobei:
das Fehlerbearbeitungssystem die benachbarte Station (12) auf der stromabwärtigen Seite der fehlerhaften Station zum ersten Mal in dem Zurückweisungszustand die selbsterzeugte Rückschleifenmarke löschen läßt ("0"), welche in ihrer ersten Statusanzeigevorrichtung (21) eingestellt wurde ("1").

18. Ringtyp-LAN mit einem Fehlerbearbeitungssystem nach Anspruch 1, wobei:
die Stationen (12) und der Leitungskonzentrator (12') als Doppelzusatzstationen ausgebildet sind,
der Leitungskonzentrator (12') mehrere einzelne Zusatzstationen (43) aufweist, die in Reihe in die Ringtyp-Übertratungsleitung (11) darunter eingefügt sind, und
das Fehlerbearbeitungssystem den Leitungskonzentrator (12') zur Ausbildung von Umwegleitungen in Bezug auf die einzelnen Zusatzstationen veranlaßt, um so die Fehlerbearbeitung durchzuführen.

19. Ringtyp-LAN mit einem Fehlerbearbeitungssystem nach Anspruch 18, wobei:
das Fehlerbearbeitungssystem den Leitungskonzentrator (12') dazu veranlaßt festzustellen, ob er den Fehlernachrichtenblock (BF) empfangen hat, der von anderen Stationen (12, 43) als ihm selbst ausgesandt wurde,
und ihn dazu veranlaßt, wenn er den Fehlernachrichtenblock (BF) empfängt, eine Empfangszeit zu messen, während derer er empfangen wird, und
wenn die Empfangszeit eine vorbestimmte Zeit überschreitet und daher die Zeit abläuft, ihn dazu veranlaßt , die Normalität des Leitungskonzentrators (12') selbst und der einzelnen Zusatzstationen (43) darunter zu untersuchen, um die fehlerhafte Station zu ermitteln.

20. Ringtyp-LAN mit einem Fehlerbearbeitungssystem nach Anspruch 19, wobei:
das Fehlerbearbeitungssystem den Leitungskonzentrator (12') eine Übertragungszeit messen läßt, während derer er den Fehlernachrichtenblock (BF) sendet,
dazu veranlaßt festzustellen, ob die Übertragungszeit eine vorbestimmte Zeit überschreitet und daher die Zeit abgelaufen ist,
dazu veranlaßt, wenn die Übertragungszeit abgelaufen ist, sämtliche einzelnen Zusatzstationen (43) unterhalb des Leitungskonzentrators (12') von diesem zu entfernen, nach dem Entfernen dazu veranlaßt, erneut einmal den Fehlernachrichtenblock (BF) von dem Leitungskonzentrator (12') auszusenden, und erneut einmal die Übertragungszeit zu messen, und
dazu veranlaßt zu bestimmen, entsprechend der Tatsache ob die erneut gemessene Übertragungszeit abläuft, daß die benachbarte Doppelzusatzstation (12) auf der stromaufwärtigen Seite oder die einzelne Zusatzstation (43), die fehlerhafte Station ist.

21. Ringtyp-LAN mit einem Fehlerbearbeitungssystem nach Anspruch 20, wobei:
das Fehlerbearbeitungssystem den Leitungskonzentrator (12') die Normalität der einzelnen Zusatzstationen (43) unter ihm dadurch untersuchen läßt, daß für einen Zeitraum sämtliche einzelnen Zusatzstationen (43) von dem Leitungskonzentrator (12') abgetrennt werden,
jede selbsterzeugte Rückschleifenmarke in den einzelneen Zusatzstationen (43) einstellen läßt, um zu zeigen, daß sie abgetrennt wurden, und
die selbsterzeugten Rückschleifenmarken nur für die einzelnen Zusatzstationen (43) löschen läßt, die als Normal bestätigt wurden, und die Freigabe der Umwegleitung der einzelenen Zusatzstationen (43) sperren läßt, für welche die selbsterzeugten Rückschleifenmarken gesetzt geblieben sind, um hierdurch das Ringtyp-LAN erneut aufzubauen.

22. Ringtyp-LAN mit einem Fehlerbearbeitungssystem nach Anspruch 21, wobei:
das Fehlerbearbeitungswsystem den Leitungskonzentrator (12') zur Ausbildung von Rückschleifen in Bezug auf die benachbarten Doppelzusatzstationen (12) auf der stromaufwärtigen Seite und der stromabwärtigen Seite veranlaßt, wenn der Konzentrator feststellt, daß ein Fehler aufgetreten ist,
von dem Leitungskonzentrator (12') sämtliche einzelnen Zusatzstationen (43) darunter entfernen läßt,
die Normalität der einzelnen Zusatzstationen (43) untersuchen läßt, und das Abtrennen von dem Leitungskonzentrator (12') nur für die normalen Stationen freigeben läßt,
nach beendeter Untersuchung der Normalität die Rückschleife in Bezug auf die benachbarte Doppelzusatzstation (12) auf der stromaufwärtigen Seite freigeben läßt, und
wenn der Leitungskonzentrator (12') keinen Fehler festgestellt hat, die Rückschleife auch für die benachbarte Doppelzusatzstation (12) an der stromabwärtigen Setie freigeben läßt, um hierdurch das Ringtyp-LAN erneut aufzubauen.

23. Ringtyp-LAN mit einem Fehlerbearbeitungssystem nach Anspruch 19, wobei:
das Fehlerbearbeitungssystem den Leitungskonzentrator (12') mit einer anderen Stationsfehlerzeit-Meßvorrichtung (27) ausstatten läßt, wobei die andere Stationsfehlerzeitmeßvorrichtung (27) mit der Messung einer Empfangszeit beginnt, wenn der Fehlernachrichtenblock (BF) von einer Station (12) auf der stromaufwärtigen Seite des Leitungskonzentrators (12') empfangen wird, oder von jeder der einzelnen Zusatzstationen (43), und die Messung stoppt, wenn ein Anspruchsblock empfangen wird.

24. Ringtyp-LAN mit einem Fehlerbearbeitungssystem nach Anspruch 23, wobei:
das Fehlerbearbeitungssystem untersucht, ob der Leitungskonzentrator (12') normal ist, wenn die andere Stationsfehlerzeitmeßvorrichtung (27) die Messung gestoppt hat, und
untersucht, wenn die einzelnen Zusatzstationen (43) normal sind, ob er normal ist.

25. Ringtyp-LAN mit einem Fehlerbearbeitungssystem nach Anspruch 23, wobei:
das Fehlerbearbeitungssystem beurteilt, daß der Fehler in einer der einzelnen Zusatzstationen (43) aufgetreten ist, wenn die andere Stationsfehler-Zeitmeßvorrichtung (27) nicht stoppt, selbst wenn die vorbestimmte Zeit abläuft, sondern die Zeit überschreitet und die einzelnen Zusatzstationen (43) in den Versuchszustand umschaltet.

26. Ringtyp-LAN mit einem Fehlerbearbeitungssystem nach Anspruch 25, wobei:
das Fehlerbearbietungssystem beurteilt, daß keine Zeitmeßvorrichtung (20) in den einzelnen Zusatzstationen (43) vorhanden ist, wenn bei der anderen Stationsfehlerzeitmeßvorrichtung (27) eine Zeitüberschreitung aufgetreten ist.

27. Ringtyp-LAN mit einem Fehlerbearbeitungssystem nach Anspruch 25, wobei:
das Fehlerbearbeitungssystem die physische Verbindung mit den Stationen (12) auf der stromaufwärtigen Seite und der stromabwärtigen Seite des Leitungskonzentrators (12') unterbricht, wenn bei der anderen Stationsfehlerzeitmeßvorrichtung (27) eine Zeitüberschreitung aufgetreten ist, sämtliche einzelnen Zusatzstationen (43) umgeht, und den Leitungskonzentrator (12') in einen Versuchszustand versetzt.

28. Ringtyp-LAN mit einem Fehlerbearbeitungssystem nach Anspruch 21, wobei:
das Fehlerbearbeitungssystem den Leitungskonzentrator (12') mit einer dritten Statusanzeigevorrichtung (26) ausrüsten läßt, entsprechend jeder der einzelnen Zusatzstationen (43), und
die sich selbst erzeugende Rückschleifenmarke in der dritten Statusanzeigevorrichtung (26) einstellt.

29. Ringtyp-LAN mit einem Fehlerbearbeitungssystem nach Anspruch 28, wobei:
das Fehlerbearbeitungssystem die sich selbst erzeugende Rückschleifenmarke in der dritten Statusanzeigevorrichtung (26) einstellt, wenn bei der Zeitmeßvorrichtung(20) in dem Leitungskonzentrator (12') eine Zeitüberschreitung auftritt, oder der Leitungskonzentrator (12') in den Versuchszustand eintritt, und es für die sich selbst erzeugende Rückschleifenmarke unmöglich macht, selbständig von den einzelnen Zusatzstationen (43) gelöscht zu werden, wenn die sich selbst erzeugende Rückschleifenmarke gesetzt ist.

30. Ringtyp-LAN mit einem Fehlerbearbeitungssystem nach Anspruch 29, wobei:
das Fehlerbearbeitungssystem die Normalität des Leitungskonzentrators (12') in einem Zustand untersucht, in welchem sämtliche sich selbst erzeugenden Rückschleifenmarken gesetzt sind, und
dann, wenn der Konzentrator normal ist, die sich selbst erzeugenden Rückschleifenmarken der einzelnen Zusatzstationen (43) von "1" auf "0" löscht, um die Umwegleitungen freizugeben, und nacheinander die Stationen in den Leitungskonzentrators (12') einbaut.

31. Ringtyp-LAN mit einem Fehlerbearbeitungssystem nach Anspruch 30, wobei:
das Fehlerbearbeitungssystem die einzelnen Zusatzstationen in den Versuchs zustand versetzt, um zu bestätigen, daß die einzelnen Zusatzstationen normal sind, bevor die sich selbst erzeugenden Rückschleifenmarken entsprechend den einzelnen Zusatzstationen (43) gelöscht werden.

32. Ringtyp-LAN mit einem Fehlerbearbeitungssstem nach Anspruch 22, wobei:
das Fehlerbearbeitungssystem veranlaßt, daß der Leitungskonzentrator (12') mit einer vierten Statusanzeigevorrichtung (28) versehen wird,
die vierte Statusanzeigevorrichtung (28) eine Zeitmeßvorrichtungs-Zeitablaufmarke einstellen läßt, wenn die Zeitmeßvorrichtung (20) in dem Leitungskonzentrator (12') eine Zeitüberschreitung erfährt, und gleichzeitig mit dieser Einstellung die Zeitmeßvorrichtung (20) löscht, und sämtliche einzelnen Zusatzstationen (43) umgeht, und
wenn die Zeitmeßvorrichtung (20) erneut einmal eine Zeitüberschreitung erfährt, beurteilt, daß der Fehler nicht in den einzelneen Zusatzstationen unterhalb des Leitungskonzentrators (12') auftritt, sondern an der Station (12) auf der stromaufwärtigen Seite des Leitungskonzentrators (12').

## Revendications

1. Système de traitement d'erreur, prévu dans un réseau LAN (Local Area Network) du type en anneau, comprenant une ligne de transmission (11) du type en anneau à double boucle et plusieurs postes (12), comprenant un concentrateur (12'), insérés en série dans la ligne de transmission (11) du type en anneau, dans lequel lorsqu'une erreur logique se produit dans l'un quelconque desdits plusieurs postes, ledit système de traitement d'erreur détecte la source de l'erreur logique et répare l'erreur,
ledit système de traitement d'erreur présentant un moyen (20) de mesure du temps, prévu dans chacun desdits postes (12),
ledit système de traitement d'erreur fonctionnant de la manière suivante:
(i) il détecte le fait qu'une durée de transmission d'un bloc de données (BF) de notification d'une erreur, envoyé par un poste (12) détectant l'apparition d'une erreur, contigu du côté aval du poste qui est la source de l'erreur, s'est écoulée dans ledit moyen (20) de mesure du temps, permettant de la sorte audit poste contigu d'apprécier qu'une erreur s'est produite dans un poste contigu située du côté amont,
(ii) il forme un bouclage à un poste (12) contigu envoyant ledit bloc de données (BF) de notification d'une erreur de son côté amont, et
il bloque un signal d'erreur envoyé par ledit poste défectueux du côté amont du poste (12) contigu envoyant ledit bloc de données (BF) de notification d'une erreur.

2. Réseau LAN du type en anneau, présentant un système de traitement d'erreur selon la revendication 1, dans lequel:
ledit système de traitement d'erreur fait que ledit poste (12) contigu envoie à nouveau ledit bloc de données (BF) de notification d'une erreur et, lorsqu'il détecte que le temps s'est écoulé dans ledit moyen (20) de mesure du temps, forme également une boucle du côté aval
de sorte que ledit poste (12) contigu est retiré de ladite ligne de transmission (11) du type en anneau.

3. Réseau LAN du type en anneau, présentant un système de traitement d'erreur selon la revendication 2, dans lequel:
ledit système de traitement d'erreur fait qu'un poste (12) situé du côté aval, face au côté amont dudit poste (12) contigu, forme un bouclage du côté amont dudit poste (12) situé du côté aval,
de sorte que ledit poste (12) contigu est retiré de ladite ligne de transmission (11) du type en anneau pour exécuter le traitement de l'erreur.

4. Réseau LAN du type en anneau, présentant un système de traitement d'erreur selon la revendication 3, dans lequel:
ledit système de traitement d'erreur détecte si une erreur se présente dans ledit poste (12) contigu retiré de ladite ligne de transmission (11) du type en anneau.

5. Réseau LAN du type en anneau, présentant un système de traitement d'erreur selon la revendication 4, dans lequel:
ledit système de traitement d'erreur fait que ledit poste (12) contigu, avec lesdites boucles formées du côté aval et du côté amont, forme un chemin interne (24) de parcours du poste,
fait qu'il transmet et reçoit par lui-même un bloc de données (BF) de notification d'une erreur, par l'intermédiaire dudit chemin interne (24) de parcours du poste,
fait qu'il détermine si le bloc de données de notification d'une erreur envoyé par lui-même est reçu normalement, de manière à détecter s'il présente lui-même une erreur, et
lorsqu'il est détecté qu'il ne présente pas d'erreur, fait ledit poste (12) contigu réintégrer ladite ligne de transmission (11) du type en anneau.

6. Réseau LAN du type en anneau, présentant un système de traitement d'erreur selon la revendication 5, dans lequel:
ledit système de traitement d'erreur présente un premier moyen (21) d'indication de statut, prévu dans chacun desdits postes (12),
détecte lorsqu'une durée de transmission dudit bloc de données (BF) de notification d'une erreur, envoyé par ledit poste (12) contigu audit poste défectueux du côté aval arrive a son terme dans ledit moyen (20) de mesure du temps et forme alors un bouclage du côté amont dudit poste contigu,
simultanément à la formation du bouclage, place dans ledit premier moyen (21) d'indication de statut un indicateur de bouclage autogénéré montrant qu'il a formé par lui-même un bouclage, et
supprime le bouclage formé du côté amont lorsque ledit indicateur de bouclage autogénéré est effacé.

7. Réseau LAN du type en anneau, présentant un système de traitement d'erreur selon la revendication 6, dans lequel:
ledit système de traitement d'erreur présente un deuxième moyen (22) d'indication de statut prévu dans chacun desdits postes (12),
fait que chaque poste (12) se place dans un état de vérification pour qu'il inspecte par lui-même s'il est dans un état normal après avoir formé des bouclages dudit côté amont et dudit côté aval,
lorsqu'il est dans un état normal, fait qu'il place un indicateur propre de normalité de poste, dans ledit deuxième moyen (22) d'indication de statut, et
lorsque ledit indicateur propre de normalité de poste est placé, et qu'un indicateur de bouclage autogénéré dudit premier moyen (21) d'indication de statut est effacé, leur fait qu'il supprime le bouclage formé du côté amont et reconstruit le réseau LAN du type en anneau, pour ainsi réparer l'erreur.

8. Réseau LAN du type en anneau, présentant un système de traitement d'erreur selon la revendication 1, dans lequel:
ledit système de traitement d'erreur fait que ledit poste (12) contigu consulte une unité existante (23) de gestion de la configuration des postes, située dans ledit poste contigu et lorsqu'il apprend, suite à la consultation, que ledit poste contigu est dans un état THRU-A, fait qu'une couche physique (14A) située du côté amont forme un bouclage autogénéré, le bouclage à la couche physique (14A) n'étant pas supprimé tant que l'indicateur de bouclage autogénéré est en fonction.

9. Réseau LAN du type en anneau présentant un système de traitement d'erreur selon la revendication 8, dans lequel:
ledit système de traitement d'erreur coupe, lorsque ledit bouclage est formé de manière autogénérée du côté amont dudit poste contigu (12), une connexion physique avec un poste (12) estimé être la source de l'erreur, et amène ledit poste (12) contigu dans un état WRAP-B.

10. Réseau LAN du type en anneau présentant un système de traitement d'erreur selon la revendication 7, dans lequel:
ledit système dc traitement d'erreur fait que chacun desdits postes (12) place son propre indicateur de normalité de poste lorsqu'il confirme par lui-même qu'il fonctionne normalement, et le place également lorsqu'un droit à émettre (token) est rétabli sur une couche (13) d'un contrôleur d'accès de support (MAC: Media Access Controller), et
d'autre part, fait qu'il l'efface lorsqu'une liaison physique avec un poste situé du côté amont est coupée, et l'efface lorsque ledit réseau LAN du type en anneau est établi.

11. Réseau LAN du type en anneau présentant un système de traitement d'erreur selon la revendication 10, dans lequel:
ledit système de traitement d'erreur fait que chacun desdits postes (12) efface l'indicateur de bouclage autogénéré dans ledit premier moyen (21) d'indication de statut, et le maintient tel quel si un bouclage est formé passivement sur une couche physique (14A) située du côté amont dudit poste du fait qu'une connexion physique à partir d'un poste situé du côté amont est coupée.

12. Réseau LAN du type en anneau présentant un système de traitement d'erreur selon la revendication 11, dans lequel:
ledit système de traitement d'erreur fait que ledit poste (12) estimé être la source de l'erreur, examine si l'erreur existe en lui, et ne supprime pas ledit bouclage passif si l'indicateur de bouclage autogénéré dans ledit premier moyen (21) d'indication de statut reste effacé ("0") et si ledit indicateur propre de normalité du poste reste effacé ("0").

13. Réseau LAN du type en anneau présentant un système de traitement d'erreur selon la revendication 9, dans lequel:
ledit système de traitement d'erreur fait que chacun desdits postes (12) se place dans un état de vérification par une boucle interne (24) de parcours du poste,
envoie en continu ledit bloc de données (BF) de notification d'erreur à ladite boucle et, lorsqu'un droit à émettre est restauré pendant la transmission, reconnaît qu'il est normal, et
place ("1") un indicateur propre de normalité de poste dans ledit deuxième moyen (22) d'indication de statut,
de manière à amener ledit poste dans un état isolé et à le placer dans un état d'attente d'où il peut être déplacé à tout moment dans un état WRAP-A ou dans un état WRAP-B.

14. Réseau LAN du type en anneau présentant un système de traitement d'erreur selon la revendication 12, dans lequel:
ledit système de traitement d'erreur fait que chacun desdits postes (12) consulte son unité (23) de gestion de configuration de poste et, lorsqu'il apprend en résultat de cette consultation que ledit poste se trouve dans un état WRAP-B, fait qu'il forme un bouclage passif du côté de la couche physique (14B) située du côté aval,
coupe la connexion physique avec le poste situé du côté aval, et
forme une boucle interne (24) de parcours de poste et efface ("0") l'indicateur propre de normalité de poste dudit second moyen (22) d'indication de statut, pour ainsi entrer dans ledit état de vérification.

15. Réseau LAN du type en anneau présentant un système de traitement d'erreur selon la revendication 14, dans lequel:
ledit système de traitement d'erreur fait que le poste (12) défectueux détecte que la connexion physique avec un poste (12) situé du côté amont a été coupée par ce poste (12), et
laisse l'indicateur de bouclage autogénéré dudit premier moyen (21) d'indication de statut effacé ("0") et forme automatiquement un bouclage du côté amont dudit poste (12) défectueux, pour retirer ledit poste (12) défectueux de ladite ligne de transmission (11) du type en anneau, pour entrer ainsi dans l'état de vérification.

16. Réseau LAN du type en anneau présentant un système de traitement d'erreur selon la revendication 15, dans lequel:
ledit système de traitement d'erreur fait que ledit poste (12) défectueux rejette une connexion physique avec les postes contigus situés du côté amont et du côté aval lorsqu'il détecte qu'il existe une erreur, par ladite vérification, et
place dans un état de rejet chaque couche physique desdits postes contigus rejetés situés du côté amont et du côté aval.

17. Réseau LAN du type en anneau présentant un système de traitement d'erreur selon la revendication 16, dans lequel:
ledit système de traitement d'erreur fait que le poste (12) contigu du côté aval dudit poste défectueux efface ("0"), pour la première fois dans ledit état de rejet, l'indicateur de bouclage autogénéré qui a été placé ("1") dans son premier moyen (21) d'indication de statut.

18. Réseau LAN du type en anneau présentant un système de traitement d'erreur selon la revendication 1, dans lequel:
lesdits postes (12) et ledit concentrateur (12') présentent la forme de postes à raccordement double,
ledit concentrateur (12') présente plusieurs postes (43) à raccordement simple insérés en série en dessous de lui dans ladite ligne de transmission (11) du type en anneau, et
ledit système de traitement d'erreur fait que ledit concentrateur (12') forme des dérivations par rapport aux postes à raccordement simple, de manière à effectuer ledit traitement d'erreur.

19. Réseau LAN du type en anneau présentant un système de traitement d'erreur selon la revendication 18, dans lequel:
ledit système de traitement d'erreur fait que ledit concentrateur (12') détecte s'il a reçu ledit bloc de données (BF) de notification d'erreur envoyé par des postes (12, 43) autres que lui-même,
lorsqu'il reçoit ledit bloc de données (BF) de notification d'erreur, mesure une durée de réception pendant laquelle il est reçu, et
lorsque ladite durée de réception dépasse une durée prédéterminée et que la durée arrive donc à son terme, vérifie la normalité dudit concentrateur (12') lui-même, de même que desdits postes (43) à raccordement simple situés en dessous de lui, pour détecter ledit poste défectueux.

20. Réseau LAN du type en anneau, présentant un système de traitement d'erreur selon la revendication 19, dans lequel:
ledit système de traitement d'erreur fait que ledit concentrateur (12') mesure une durée de transmission pendant laquelle il envoie ledit bloc de données (BF) de notification d'erreur,
détecte si ladite durée de transmission dépasse une durée prédéterminée et que la durée s'est donc écoulée,
lorsque ladite durée de transmission arrive à son terme, débranche tous les postes (43) à raccordement simple situés en dessous dudit concentrateur (12'),
après débranchement, envoie une fois de plus ledit bloc de données (BF) de notification d'erreur provenant dudit concentrateur (12') et mesure une fois de plus ladite durée de transmission, et
suivant que ladite durée de transmission mesurée à nouveau arrive à son terme, détermine que le poste (12) à raccordement double ou le poste (43) à raccordement simple situé du côté amont est ledit poste défectueux.

21. Réseau LAN du type en anneau, présentant un système de traitement d'erreur selon la revendication 20, dans lequel:
ledit système de traitement d'erreur fait que ledit concentrateur (12') vérifie la normalité desdits postes (43) à raccordement simple situés en dessous de lui, en retirant pendant un court moment tous les postes (43) à raccordement simple du concentrateur (12'),
place chaque indicateur de boucle autogénéré dans les postes (43) à raccordement simple, pour montrer qu'ils ont été retirés, et
efface les indicateurs de bouclage autogénérés uniquement pour les postes (43) à raccordement simple dont il est confirmé qu'ils sont normaux, et empêche la suppression de la dérivation des postes (43) à raccordement simple pour lesquels les indicateurs de bouclage autogénérés sont restés, pour ainsi reconstruire le réseau LAN du type en anneau.

22. Réseau LAN du type en anneau, présentant un système de traitement d'erreur selon la revendication 21, dans lequel:
ledit système de traitement d'erreur fait que ledit concentrateur (12') forme des bouclages par rapport aux postes (12) contigus à raccordement double situés du côté amont et du côté aval lorsque le concentrateur détecte qu'un défaut s'est produit,
déconnecte dudit concentrateur (12') tous les postes (43) à raccordement simple situés en dessous de lui,
vérifie la normalité desdits postes (43) à raccordement simple et supprime la déconnexion vis-à-vis du concentrateur (12') uniquement pour ceux qui sont normaux,
après que la vérification de la normalité est terminée, supprime le bouclage vis-à-vis dudit poste (12) à raccordement double contigu, situé du côté amont, et
lorsque ledit concentrateur (12') n'a pas détecté d'erreur, supprime de même le bouclage pour le poste (12) à raccordement double contigu, situé du côté aval, pour ainsi reconstruire le réseau LAN du type en anneau.

23. Réseau LAN du type en anneau, présentant un système de traitement d'erreur selon la revendication 19, dans lequel:
ledit système de traitement d'erreur dote ledit concentrateur (12') d'un autre moyen (27) de mesure du temps d'erreur de poste, lequel autre moyen (27) de mesure du temps d'erreur de poste commence à mesurer une durée de réception lorsqu'il reçoit ledit bloc de données (BF) de notification d'erreur d'un poste (12) situé du côté amont dudit concentrateur (12') ou de l'un quelconque desdits postes (43) à raccordement simple, et arrête la mesure lorsqu'il reçoit un bloc de données de requête.

24. Réseau LAN du type en anneau, présentant un système de traitement d'erreur selon la revendication 23, dans lequel:
ledit système de traitement d'erreur vérifie si ledit concentrateur (12') est normal lorsque ledit autre moyen (27) de mesure du temps d'erreur de poste a arrêté la mesure, et
s'il est normal, vérifie si lesdits postes (43) a raccordement simple sont normaux.

25. Réseau LAN du type en anneau, présentant un système de traitement d'erreur selon la revendication 23, dans lequel:
ledit système de traitement d'erreur juge que l'erreur s'est produite dans l'un desdits postes (43) à raccordement simple lorsque ledit autre moyen (27) de mesure du temps d'erreur de poste ne s'arrête pas, même lorsque la durée prédéterminée passe, mais dépasse le temps, et amène lesdits postes (43) à raccordement simple dans l'état de vérification.

26. Réseau LAN du type en anneau présentant un système de traitement d'erreur selon la revendication 25, dans lequel:
ledit système de traitement d'erreur juge qu'il n'existe pas de moyen (20) de mesure du temps dans lesdits postes (43) à raccordement simple lorsque ledit autre moyen (27) de mesure de la durée d'erreur de poste est arrivé au terme de sa durée.

27. Réseau LAN du type en anneau, présentant un système de traitement d'erreur selon la revendication 25, dans lequel:
ledit système de traitement d'erreur coupe la connexion physique du concentrateur (12') avec les postes (12) situés du côté amont et du côté aval lorsque ledit autre moyen (27) de mesure de la durée d'erreur de poste est arrivé au terme de sa durée, place en dérivation tous lesdits postes (43) à raccordement simple et place ledit concentrateur (12') dans un état de vérification.

28. Réseau LAN du type en anneau présentant un système de traitement d'erreur selon la revendication 21, dans lequel:
ledit système de traitement d'erreur dote ledit concentrateur (12') d'un troisième moyen (26) d'indication de statut correspondant à chacun des postes (43) à raccordement simple, et
met en place ledit indicateur de bouclage autogénéré dans ledit troisième moyen (26) d'indication de statut.

29. Réseau LAN du type en anneau présentant un système de traitement d'erreur selon la revendication 28, dans lequel:
ledit système de traitement d'erreur met en place ledit indicateur de bouclage autogénéré dans ledit troisième moyen (26) d'indication de statut lorsque ledit moyen (20) de mesure du temps dudit concentrateur (12') arrive au terme de sa période, ou lorsque ledit concentrateur (12') entre dans l'état de vérification, et rend impossible que l'indicateur de bouclage autogénéré soit effacé de manière autonome par lesdits postes (43) à raccordement simple lorsque ledit indicateur de bouclage autogénéré est mis en place.

30. Réseau LAN du type en anneau présentant un système de traitement d'erreur selon la revendication 29, dans lequel:
ledit système de traitement d'erreur vérifie si ledit concentrateur (12') est normal, dans un état dans lequel tous lesdits indicateurs de bouclage autogénérés sont en place, et
lorsqu'il est normal, efface lesdits indicateurs de bouclage autogénérés desdits postes (43) à raccordement simple de "1" à "0", pour supprimer les dérivations et incorporer successivement les postes dans ledit concentrateur (12').

31. Réseau LAN du type en anneau présentant un système de traitement d'erreur selon la revendication 30, dans lequel:
ledit système de traitement d'erreur place lesdits postes à raccordement simple dans l'état de vérification pour confirmer que les postes à raccordement simple sont normaux, avant d'effacer les indicateurs de bouclage autogénérés correspondant auxdits postes (43) à raccordement simple.

32. Réseau LAN du type en anneau présentant un système de traitement d'erreur selon la revendication 22, dans lequel:
ledit système de traitement d'erreur dote ledit concentrateur (12') d'un quatrième moyen (28) d'indication de statut,
fait que le quatrième moyen (28) d'indication de statut met en place un indicateur d'écoulement du temps du moyen de mesure du temps lorsque ledit moyen (20) de mesure du temps dans ledit concentrateur (12') arrive au terme de sa période et, simultanément à cette mise en place, efface ledit moyen (20) de mesure du temps et met en dérivation tous lesdits postes (43) à raccordement simple, et
lorsque ledit moyen (20) de mesure du temps est une fois de plus arrivé au bout de sa période, juge que l'erreur ne se trouve pas aux postes à raccordement simple situés en dessous du concentrateur (12'), mais au poste (12) situé du côté amont dudit concentrateur (12').
